(19)

**Europäisches Patentamt**
**European Patent Office**
**Office européen des brevets**

(11) **EP 3 783 560 A1**

(12) **EUROPEAN PATENT APPLICATION**

(43) Date of publication:
24.02.2021 Bulletin 2021/08

(51) Int Cl.:
*G06Q 40/04* (2012.01)

(21) Application number: **20191812.5**

(22) Date of filing: **19.08.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.08.2019 US 201962888713 P**
**15.11.2019 US 201962935914 P**
**18.08.2020 US 202016996386**

(71) Applicant: **Chicago Mercantile Exchange Inc.**
**Chicago IL Illinois 60606 (US)**

(72) Inventors:
• **ROGERSON, Mark Andrew**
**Chicago, IL Illinois 60606 (US)**

• **CAREY, Edmund Bowering**
**Chicago, IL Illinois 60606 (US)**
• **BIXBY, Jr., David Edward**
**Chicago, IL Illinois 60606 (US)**
• **STURM, Frederick**
**Chicago, IL Illinois 60606 (US)**
• **LEE, Gavin Keith**
**Chicago, IL Illinois 60606 (US)**
• **MIRZA, Agha Irtaza**
**Chicago, IL Illinois 60606 (US)**

(74) Representative: **Boult Wade Tennant LLP**
**Salisbury Square House**
**8 Salisbury Square**
**London EC4Y 8AP (GB)**

(54) **AUTOMATED OBJECTIVE GENERATION OF DATA FOR, AND POST VALIDATION OF, ESTIMATION OF TERM SOFR BENCHMARKS**

(57) The disclosed embodiments relate to automated generation of objective data for use in computing a forward interest rate for a future time period subsequent to a current date, as well as post validation thereof. Periodic sample sets of the prices of actual completed trades between anonymized parties of each of a set of interest rate futures contracts having consecutive expiration months which collectively include the selected future time period are obtained from an anonymized electronic trading system. The prices of current best offers to buy/sell each of those contracts are also randomly obtained. Each sample set, along with the randomly selected prices, is then processed to identify a subset thereof which are consistent with a relationship between the underlying interest rate of the set of contracts and time period covered thereby. The identified subset of each sampling period are then combined into an objective data set for submission to a rate generator which computes one or more forward interest rates, for one or more tenors, based thereon.

EP 3 783 560 A1

**Description**

RELATED APPLICATIONS

This application claims the benefit of the filing date under 35 U.S.C. § 119(e) of U.S. Provisional Application Serial No. 62/888,713, filed August 19, 2019 and of U.S. Provisional Application Serial No. 62/935,914, filed November 15, 2019, the entirety of both of which is incorporated by reference herein and relied upon.

BACKGROUND

An interest rate is the price of money. A backward interest rate is price of money for a time period prior to the time that the rate is set, e.g. for the prior day, also referred to as an overnight rate. A forward interest rate is the price, determined at the time the rate is set, of money for a future time period, e.g. the rate represents today's cost of future money.

Interest rate benchmarks - also known as reference rates or just benchmark rates - are regularly updated interest rates that are publicly accessible. They are a useful basis for all kinds of financial contracts such as mortgages, bank overdrafts, and other more complex financial transactions. Benchmark rates are calculated by an independent body, most often to reflect the cost of borrowing money in different markets. For example, they might reflect how much it costs for banks to borrow from each other. Alternatively they might reflect how much it costs banks to obtain funds from other sources, such as pension funds, insurance companies and money market funds. This means that these benchmark rates play a key role in the financial system, the banking system and the economy overall.

Short term interest rates are interest rates typically used for debt with future maturities less than one year from the current date and are typically administered by the central banks of nations, where, as will be explained, the different rates set by different national institutions may be used for different purposes. As opposed to short term interest rates, long term interest rates, for use with debt having maturities greater than 1 year, are typically set by market forces, i.e. through the bilateral negotiations of self-interested parties looking to transact based on the interest rate. Two examples of national, institutionally set short-term interest rates are the Federal Funds ("Fed Funds") rate and the London Interbank Offered ("LIBOR") rate.

The Fed funds rate is the rate at which U.S. banks lend money to each other overnight. The money in question is the reserves that sit in their bank accounts in the Federal Reserve system. If Bank A has excess reserves at the end of the day and Bank B has a reserve deficit at the end of the day (reserves are the money they have to keep on hand - electronically, at least - in case people ask for it; reserve requirements are set by the Federal Reserve), Bank A will loan the money to Bank B for a period of one day. The rate of interest Bank A will charge is the Fed funds rate.

The actual effective Fed funds rate ("EFFR") is set by the open market as banks loan each other money from day to day. The Fed funds rate "target," on the other hand, is set by the Federal Open Market Committee ("FOMC"), which is headed by the Federal Reserve Chairman. Generally, when commentators refer to the Fed funds rate, they're usually referring to the target rate set by the Fed, rather than to the actual Fed funds rate. The FOMC meets every few months and decides whether to raise the Fed funds rate target, lower it or keep it as is.

The target rate is used as a tool to help control the nation's money supply and promote employment. For example, if inflation begins to run above the Federal Reserve's target rate, the Fed may choose to raise the Fed funds rate target. By doing so, the Fed is restricting the amount of money that's available to banks, making it more likely that they'll raise interest rates on commercial and consumer loans. That, in turn, should help control the prices of goods and services by dampening commercial activity. Meanwhile, if the U.S. economy is sputtering and unemployment is high, the Fed may choose to lower the Federal funds rate target in order to help bring borrowing costs down and encourage businesses and consumers to spend.

The Fed funds rate is a backwards looking rate in that it is an aggregation of data from the prior day. That is, as opposed to being predetermined at the start of a time period, the Fed funds rate is computed based on previously occurring events. Interest rate futures contracts, which are based on the Fed funds rate, are typically defined to settle at the end of a month based on the average effective Fed funds rate occurring each day over that month of settlement. Accordingly, while one may not know the settlement price until the settlement date, as the settlement date draws nearer, the settlement price becomes more and more certain.

The London Interbank Offered Rate ("LIBOR") is an interest rate benchmark used as a reference rate for transactions. This reference rate reflects the general cost of large banks' borrowing that is not backed by collateral. U.S. dollar LIBOR plays a central role in the U.S. financial markets and economy. It is used to set interest rates on financial products such as mortgages and private student loans. Unlike the Fed funds rate, which only applies to U.S. banks, the LIBOR is a London-based international interest rate benchmark used around the globe.

The difference between LIBOR, formerly known as the London Interbank Offered Rate and now ICE LIBOR (Intercontinental Exchange LIBOR), and benchmark rates that reflect minimal credit risk, is that LIBOR used as a measure of risk in banks and stress in financial markets.

LIBOR is an average of the estimated interest rate that a high quality bank in London would be charged to borrow from other leading banks. In particular, a sample of multiple, e.g. 16, banks, including Barclays, Chase, Citi, HSBC and Bank of America, used to report to the British Bankers' Association (now, ICE Benchmark Administration) how much interest they expect to be charged by other banks for a short-term loan. Banks' interest rate estimates aren't required to be based on actual transactions. However, the banks are expected to give their best guesses.

In essence, LIBOR is a short-term unsecured interest rate charged between banks for wholesale funding. However, LIBOR is also the primary benchmark for short-term interest rates around the world. LIBOR rates are calculated for five currencies and seven borrowing periods ranging from overnight to one year and are published each business day. Daily LIBOR interest rate fixings have been published since January 1st, 1986 and have since become deeply entrenched into the global financial markets. Many financial institutions, mortgage lenders and credit card agencies set their own interest rates relative to LIBOR. In fact, over $350 trillion dollars' worth of financial derivative contracts, mortgages, bonds and retail and commercial loans have their interest rates tied to LIBOR. Most consumers probably have at least one financial instrument, such as a mortgage, home equity line of credit, or business loan that has an interest rate tied to LIBOR.

While most small and mid-sized banks borrow federal funds to meet their reserve requirements - or lend their excess cash - the central bank isn't the only place they can go for competitively priced short-term loans. They can also trade Eurodollars, at the LIBOR rate, which are U.S.-dollar denominated deposits at foreign banks. Because of the size of their transactions, many larger banks are willing to go overseas if it means a slightly better rate. For example, the 3 month US Dollar (USD) LIBOR interest rate is the average interest rate at which a selection of banks in London are prepared to lend to one another in American dollars with a maturity of 3 months.

Post financial crisis regulation has significantly reduced bank appetite to issue commercial paper and wholesale deposits. As such, there is now a very low volume of transactions for banks to base their LIBOR submissions and as a result, banks must rely upon their "expert judgement" translating other interest rates into a LIBOR rate. In fact, submissions based upon "expert judgement" as opposed to real transactions now make up approximately 70% of the daily three-month LIBOR submissions according to Barclay's Bank. The liability associated with generating such an important and highly utilized interest rate based upon expert judgement is enormous, especially in the wake of the LIBOR fixing scandals. During this scandal, it was discovered that some banks were falsely inflating or deflating their rates in order to profit from trades or to give the impression that they were more creditworthy than they actually were. Accordingly, a replacement for LIBOR is needed.

Removing and replacing LIBOR is an enormously complicated task. While there are trillions of dollars' worth of financial instruments that reference LIBOR, the largest complication rests is those financial assets and those financial contracts that have a maturity beyond the 2021 deadline. As it relates to futures and derivatives contracts, ISDA master agreements between counterparties will have to be amended or replaced. Retail mortgages, home equity lines of credit, and any other consumer or business debt tied to LIBOR will have to be amended unless a back-up interest rate index is referenced in the original documentation. Mortgage backed securities, loans and floating rate bonds all tied to LIBOR will have to be addressed contractually, and with regard to deal specific covenants, may require consents from the owners of these securities. In addition, as previously discussed, all of the parties involved will need to come to some consensus that the compensating spread, i.e. between LIBOR and the rate/system which replaces it, is fair and reflective of the original interest rate and credit risk imbedded within LIBOR.

Benchmark rates are useful as long as they are considered reliable and unbiased - ideally they should be calculated in a transparent manner, and the rates should be easily and publicly accessible. If a contract is based on a reliable benchmark rate, neither party can influence the agreed rate of interest. This means that a dependable benchmark rate can ensure that the value of a contract remains impartial and indisputable.

The Federal Reserve Board and the Federal Reserve Bank of New York convened the Alternative Reference Rates Committee (ARRC) to identify an alternative to LIBOR. The Office of Financial Research (OFR) is a member of ARRC and has collaborated with the Federal Reserve and the Federal Reserve Bank of New York to develop three new rates. In June 2017, the ARRC selected one of these rates, the Secured Overnight Financing Rate (SOFR), as its recommended alternative to U.S. dollar LIBOR.

The SOFR is based on repo interest rates. A repo, or repurchase agreement, is a secured loan; one party sells a security to another party and agrees to repurchase it later at a set date and price. Because repos are a key source of short-term funding in the financial system, a rate based on these transactions is a good candidate for an alternative reference rate. The SOFR, like the Fed funds rate, is a one day overnight rate and is the daily average rate for repo transactions secured against US treasuries. It measures the rate on average traded notional value.

The SOFR will include overnight, Treasury-backed repo transactions that take place in the Bank of New York Mellon's triparty repo system or are cleared through one of two Fixed Income Clearing Corporation platforms: (1) the Delivery-Versus-Payment Repo Service and (2) the General Collateral Finance (GCF) Repo Service.

The Secured Overnight Financing Rate (SOFR) is calculated and published by the Federal Reserve Bank of New York and was introduced as the preferred overnight reference rate for U.S. Dollar contracts.

Each business day, the NY Fed publishes the SOFR Index on the NY Fed website at approximately 8:00 a.m. ET."

In addition to the SOFR Index and in collaboration with the Treasury Department's Office of Financial Research, the NY Fed is publishing three daily compounded averages of SOFR:

- 30-day Average SOFR
- 90-day Average SOFR
- 180-day Average SOFR

A Bank of England working group approved SONIA as its preferred short-term interest rate benchmark thereafter. The SONIA index tracks the rates of actual overnight funding deals on the wholesale money markets, rather than relying on submitters like the Libor benchmark does. SONIA's use will minimize "opportunities for misconduct,"

As both SOFR and SONIA look at prior transactions, e.g. repo transactions or overnight funding agreements, to set their rates, they may also be considered "backward" looking rates as discussed above. However, LIBOR, being based on projected transactions, and predetermined at the start of a time period, may be considered a "forward" looking rate. It may be advantageous, then, to replace LIBOR with a similar forward looking alternative.

Furthermore, while computers may be used as tools in determining LIBOR, the underlying survey methodology at its core render the process one which cannot be fully automated and objectively calculated and will necessitate significant regulation and oversight.

BRIEF DESCRIPTION OF THE DRAWINGS

Fig. 1 depicts a computer network system, according to some embodiments.
Fig. 2 depicts a general computer system, according to some embodiments.
Fig. 3 depicts a storage data structure, according to some embodiments.
Fig. 4A depicts another storage data structure, according to some embodiments.
Fig. 4B depicts yet another storage data structure, according to some embodiments.
Fig. 5 depicts a block diagram a system for automatically determining a forward interest rate value for one or selected future time periods.
Fig. 6 depicts a flow chart showing the operation of the system of Fig. 5 according to one embodiment.
Fig. 7 depicts a flow chart showing example operation of the system of Figs. 1-5.
Fig. 8 depicts a graph of SOFR overnight rates vs time.

DETAILED DESCRIPTION

The disclosed embodiments relate to automated generation of objective data for use in computation of a forward interest rate for a select future time period subsequent to a current date, as well as post-computation validation thereof. In particular, the disclosed embodiments automatically obtain, from an anonymized electronic trading system, periodic sample sets of the prices of actual completed trades between anonymized parties of each of a set of interest rate futures contracts having consecutive expiration months which collectively include the selected future time period. At a randomly selected time within each sampling period, the prices of then current best offers to buy and sell each of that same set of contracts are also obtained. Each sample set, in conjunction with the randomly selected best prices, is then processed to identify a subset of the sample prices which are consistent with a relationship between the underlying interest rate of the set of interest rate futures contracts and time period covered thereby, e.g., outlier values are excluded. The identified subset of the sample prices of each sampling period are then combined into an objective data set for submission to a rate generator which computes one or more forward interest rates, for one or more tenors, based thereon. Subsequent thereto, the generated forward interest rate(s) may be further subject to tests to confirm that the generated rate is within expected tolerances and to provide alternatives when the generated forward interest rate exceeds those tolerances.

The disclosed embodiments provide an automated and reliable process to derive forward looking term interest rates from sampled prices of a regulated futures market. The disclosed embodiments enable generation of a Term SOFR Reference Rate benchmark which provides the forward-looking measurement of overnight SOFR based on market expectations implied from derivatives markets.

It will be appreciated that the actual trade prices of an interest rate futures contact are representative of a consensus between the participating traders of the subjective, e.g. based on personal and/or professional judgment, valuations of that futures contract, and thereby, its interest rate underlier, and the current best prices/offers to buy and sell represent the collective subjective sentiment/estimate of the future value by traders currently holding or seeking to acquire that futures contract.

The disclosed embodiments, by utilizing anonymized trades, e.g., trades which occur via a central limit order book where orders to buy and sell are matched based on factors such as price, time and quantity without regard to identity of the entities submitting those orders, sampled at multiple periods throughout a trading session, optimized for consistency based on a randomized selection of the best offer to buy/sell prices, effectively generate a data set, on which one or more forward rates may be generated, which eliminates, or at least minimizes, subjective influence, e.g. professional and/or personal judgement, therein.

Accordingly, the disclosed embodiments enable automated determination of a stable, replicable and risk-free short term forward reference rate which may be predetermined at the start of a time period and which further eliminates the inherent issues with LIBOR discussed above.

The disclosed embodiments utilize data observed or otherwise derived from the trading of futures contracts having short term interest rate based underliers, e.g. based on overnight interest rates, and, in one embodiment, are integrated with an anonymized electronic transaction processing system, e.g. an electronic trading system, to access data indicative of the trading thereof, and therefore avoid reliance upon subjective/opinion inputs. The disclosed embodiments enable generation of rates for varying forward terms, e.g. 1, 2, 3, 6 or 12 months, using the observed prices of a set of suitable futures contracts, e.g. data indicative of the symbiotic market driven negotiated estimates/consensus of capitalistic/self-motivated traders of multiple overlapping short term backward looking interest rate products. Inherent biases, being a necessary and visible part of any market, are eliminated, at least in part, via the negotiated and transparent operation of the transaction processing system, the use of multiple sample periods, as well as the randomization of data captures during each period, based on upon which the disclosed embodiments derive the automatically determined forward short-term interest rate.

The disclosed embodiments may be operated on a daily basis using a rolling set of inputs to provide continuously updated projections for the desired terms.

As the disclosed system utilizes data collected from the trading of futures contracts, it may be implemented in conjunction with electronic data transaction processing system which implements an electronic trading system, described below, which processes data transactions comprising trades for futures contracts.

As will be described, in one embodiment, the prices of SOFR futures contracts are utilized. SOFR Futures contracts, such as those provided by CME, may be listed in consecutive monthly and quarterly contracts reflecting SOFR expectations between IMM dates, with contract expiries extending out to 10 years and providing a term structure to fulfill risk management needs.

It will be appreciated that other futures contracts now or later developed may also be used as described, such as Fed funds futures contracts based on the Fed funds rate as well as new SOFR contracts, e.g. having different contract terms, such as 6 months, etc. SOFR futures contracts are a way for one, via the price they pay for the contract, to assess or hedge the future SOFR rate, e.g. to hedge against or speculate on changes in short term interest rates. Essentially, traders buy these contracts when rates are expected to fall and sell them when rates are expected to rise and, accordingly, the price of a given SOFR futures contract, being the negotiated price as between the transacting parties, represents what traders think will happen to the rate in the near future, not what it is right now. Generally, for contracts which expire in the current month, the price of the contract is equal to the weighted average of the actual SOFR rates realized to date and expected rates for the remainder of the month: as the expiration/settlement date approaches, the contract price varies less on expected rates and is determined primarily by the realized rates during the month. Accordingly, FOMC actions that occur in middle of delivery month may have little impact on price as the price factors in rates already realized except where the FOMC may make an unexpected change in rates and the remaining unrealized rates differ from those already realized. In contrast, a contract expiring in the month after a fed meeting more fully expresses market expectations as, for deferred expirations, the price is based on the average expected SOFR rate for the expiration month, i.e. completely based on expected rates. Therefore, the disclosed embodiments leverage the price of SOFR futures contracts for different months so as to determine how the market expects the SOFR rate to move over time and automatically predict the cost of money beyond the current date.

While the underlying contract term of each futures contract used by the disclosed methodology will be monthly, e.g., 1 or 3 months, the disclosed system is capable of computing a forward rate for different terms, e.g. 1 month, 3 months, 6 months, 12 months, similar to the terms for which LIBOR rates are made available.

The disclosed Term SOFR benchmark is a daily set of forward looking interest rate estimates, calculated which may be published for 1-month, 3-month, 6-month and 12-month tenors. In one embodiment, each Term SOFR tenor may start on (and include) the second London/New York bank business day following the publication day and span the corresponding tenor (e.g., 1-month, 3-month, 6-month) in accordance with Modified Following day-count conventions.

The disclosed Term SOFR Publication may be on the next Business Day following the Business Day during which futures data sampling takes place. Term SOFR Reference Rates may be computed based on a Reference Period that begins two business days (T+2) after the Publication Date settlement where publication occurs on the Business Day following the sampling date.

Term SOFR Reference Rates may be calculated for each day the Federal Reserve Bank of New York calculate and publish SOFR. Publication will occur at 5.00am CT (6.00am ET, typically 11.00am GMT).

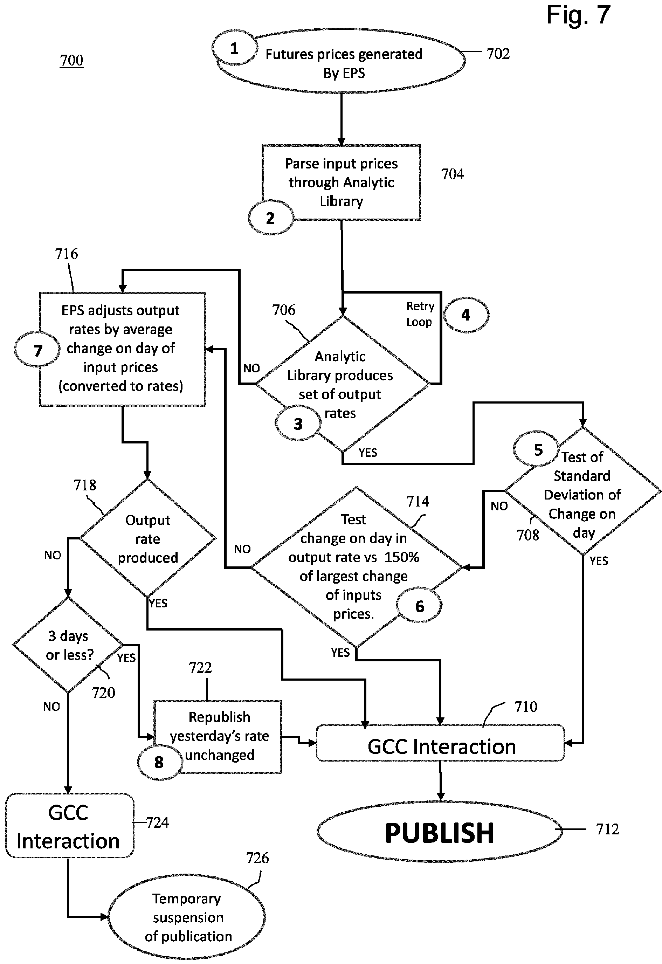

Figure 7 depicts a flow chart of an example process 700, which may be implemented by the system 500 described below, by which one or more forward rates may be published for a given day according to the disclosed embodiments. In particular, a data set comprising objective futures contract pricing data is obtained, as described below, such as from CME's Enterprise Pricing System (EPS) (Block 700). This objective data set is then processed to determine one or more prospective forward rates, e.g. prospective Term SOFR Reference Rates (Blocks 704 and 706).

The prospective forward rate(s) are then validated prior to being accepted as the actual rates which will be published and used. In particular, the tests described below are designed to ensure, in a logical way, that the generated forward rates are not only numerically valid but also that they are plausible given knowledge of how such rates change over time and/or how the inputs to such rates can affect their change, thus providing some level of intelligence to the system that the outputs are ready for publication.

In one embodiment, the prospective rates are first tested to ensure they are within one standard deviation of the change in the prior rates computed for one or more previous day (Block 708). If so, the prospective rates are determined to be acceptable and are submitted, for example, to CME's Global Command Center (GCC), which is charged with publishing the reference rates to the market participants, etc. (Block 710), for publication (Block 712). In particular, for each tenor of Term Rate the system will measure the rate that is to be published vs the rate published the previous day to calculate the change on day in the rate. This change on day will be tested vs a the mean of prior change on days in the same tenor wherein the test will be that the change is within a set multiple of the standard deviation of the prior changes that make up the average. The date range or "look-back" period for the sample that provides the mean and standard deviation is configurable as is the multiple of standard deviations within which the datum needs to fall to pass the test. The test is a binary pass fail based on these configurable inputs. Initial values for testing may be provided to the system based on adjacent data, however it is intended that the system will calculate the averages and standard deviations from its own historical data when enough data has been collected, i.e., when enough days of publishing have occurred to provide a sufficient look-back sample.

If the prospective forward rate(s) are not within one standard deviation of the change in the rates from the prior days, the generated rates are then tested to determine whether the change in prices on that day is less than a threshold percentage, e.g. 150%, of the largest change of the input prices (Block 714). If the change in prices on that day is less than the threshold percentage, the rates are determined to be acceptable and are published (Blocks 710, 712). In particular, this test will compare the change on day in the term rate to be published with the largest change on day in any of the futures final input prices to the original calculation. The test will compare the actual change of the term rate with a configurable multiple of the change of the (largest) input price, wherein change of input price will be converted to a change of rate for comparison purposes whereby change of price = -1 * change of rate.

If the change in prices on that day is not less than a threshold percentage, the system looks to generate alternative rates for the day. In one embodiment, the EPS is used to adjust the generated forward rates by the average change of the input prices on that day (converted to rates) (Block 716). If an output rate is produced (Block 718), the rate is published (Blocks 110, 712). If an output rate is not produced, and it is less than a threshold number of days since a validated forward rate was published, e.g., 3 consecutive days or less from when an acceptable rate was produced by the system, (Block 720), the prior day's rate(s) are published (Blocks 722, 710, 712). Otherwise, publication of rates is temporarily suspended (Blocks 724, 726). It is expected that suspension will rarely occur and only due to a catastrophic technical failure resulting in an inability to generate a credible forward rate.

Generally, the disclosed embodiments are used to compute the inputs to a rate generator, which, as will be described below, utilizes a model, which then generates forward rates for one or more future time periods based on those inputs.

In one embodiment, the model underlying the rate generator may be based on the model described in Heitfield, Erik, and Yang-Ho Park (2019), "Inferring Term Rates from SOFR Futures Prices," Finance and Economics Discussion Series 2019-014, Washington: Board of Governors of the Federal Reserve System, https://doi.org/10.17016/FEDS.2019.014, incorporated by reference herein ("Heitfield"). Alternatively, the model underlying the rate generator may be based on the system described in U.S. Patent Application No. 15/954,175 incorporated by reference herein.

Heitfield lays out a method to determine a possible path, i.e., forecast, of overnight rates that is consistent with the observable averages implied by SOFR based derivative contracts. Upon determining a path of overnight rates, averages over standard tenors, e.g. the disclosed Term SOFR Reference Rates, can directly be created and subsequently published.

Though projected forward starting overnight SOFR rates are not directly observable (i.e., as the price of a one-month SOFR Future represents the average of SOFR during the calendar month, the rate of an individual day (e.g. the rate for Tuesday, August 18) cannot be observed, but only the rate for the entire period (e.g. the average rate between August 1 and August 31)), as suggested in Heitfield and as utilized by various market participants for other overnight indexes, the disclosed embodiments may determine the path of overnight SOFR rates by assuming the overnight SOFR rates follow a piecewise constant step function and can only jump up or down the day after FOMC policy rate announcement dates and remains at those levels across all dates in between the FOMC policy rate announcement dates.

The optimal path for the overnight SOFR rates may be determined such that implied value of selected SR1 and SR3 futures contracts under the optimal path matches the observed prices as closely as possible. Final term rates may be constructed by compounding overnight SOFR rates following specific conventions. The details of the disclosed embodiments computation of input data is described in detail below.

Once the input data has been computed, the estimation of projected overnight SOFR rates using, for example, the model proposed by Heitfield may include the following.

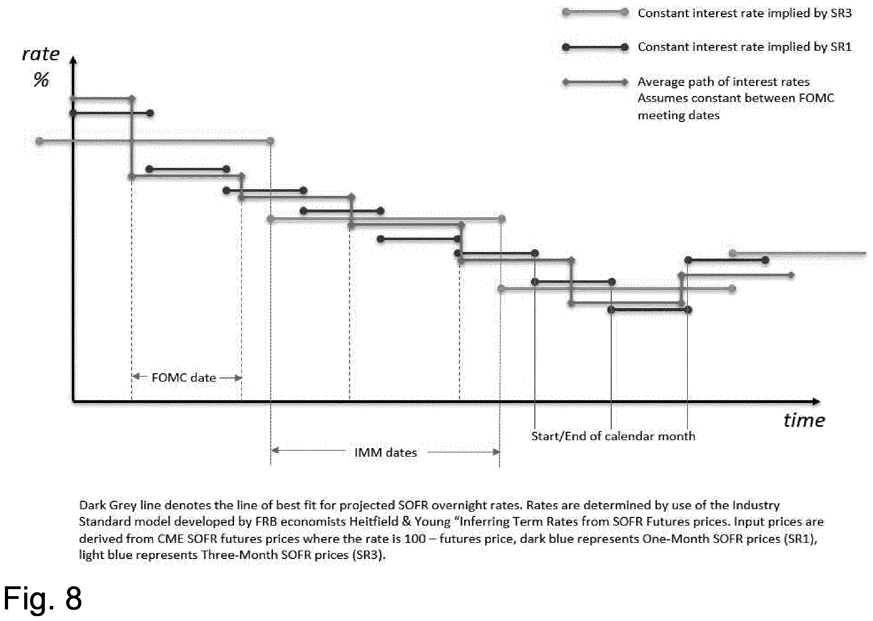

Referring to Figure 8, suppose the as of date for SOFR term rate is $t_0$ and $t$ represents a day after $t_0$ that is a business day (in accordance with, for example, the CME Group Holiday Calendar available at https://www.cmegroup.com/tools-information/holiday-calendar.html (last accessed August 20, 2020) incorporated by reference herein). The following notations are used for calculation of projected overnight SOFR rates:

$M_{(k)}$: the date of the k-th FOMC policy rate announcement date that occurs at least one day after $t_0$;
$\theta_0$: the initial overnight SOFR rate as of date $t_0$;
$\theta_k$: the jump size in overnight SOFR rate occurs on the day after the k-th FOMC policy rate announcement date. A positive $\theta_k$ means the overnight SOFR rate jumps up after the k-th FOMC policy rate announcement date $M_{(k)}$; a negative means the overnight SOFR rate jumps down after the k-th FOMC policy rate announcement date $M_{(k)}$;
$f(t; \Theta)$: the overnight SOFR rate as of date $t$, where $\Theta = (\theta_0,...,\theta_K)$ and K is the index of the last relevant FOMC policy rate announcement date;
$1\{\cdot\}$: binary function returning 1 if the statement in the parenthesis is true and 0 otherwise.

The overnight SOFR rate for date t can be computed as:

$$f(t; \Theta) = \theta_0 + \sum_k \theta_k \times 1\{t > M_{(k)}\}$$

The disclosed embodiments solve for the unknown parameter set $\Theta = (\theta_0,...,\theta_K)$ such the the projected path of overnight SOFR rates results in smallest mismatches for SR1 and SR3 prices determined by the periodic and random sampling process of the disclosed embodiments as described below.

The example in the graph shown in Figure 8 illustrates the piecewise constant step function followed by the overnight SOFR rates and the corresponding average overnight SOFR rates implied by each SR1 and SR3 contracts.

In order to determine the optimal path for the overnight SOFR rates, the disclosed embodiments implement Broyden-Fletcher-Goldfarb-Shanno algorithm that solves for the unknown parameter set $\Theta = (\theta_0,...,\theta_K)$ and utilizes 7 SR1 and up to 4 SR3 contracts, as described in more detail below, to cover the SOFR term rates computation period up to, for example, a 6 month tenor. The optimization function is designed to solve the following minimization problem:

$$min_\Theta \left\{ \left[ \sum_{m=0}^{6} w_m^1 \times \left( P_m^1 - \hat{P}_m^1(\Theta) \right)^2 + \sum_{q=0}^{3} w_q^3 \times \left( P_q^3 - \hat{P}_q^3(\Theta) \right)^2 \right]^{\frac{1}{2}} + \lambda \right.$$

$$\left. \times \left[ \sum_k (\theta_k)^2 \right]^{\frac{1}{2}} \right\}$$

where

$P_m^1$ and $P_q^3$: the observed blended prices of SR1 and SR3 contract with reference month m and reference quarter q, respectively;

$\hat{P}_m^1(\Theta)$ and $\hat{P}_q^3(\Theta)$: the implied value of SR1 and SR3 contract with referene month m and reference quarter *q*, respectively;

$w_m^1$ and $w_q^3$: weighting parameters for pricing errors of SR1 and SR3 with reference month *m* and reference quarter *q*, respectively; and

$\lambda$: weighting parameter for penalty function.

For the SR1 contract, whose reference month is not current month (*m* > 0), the implied value only depends on projected overnight SOFR rates:

$$\hat{P}_m^1(\Theta) = 100 \times \left( 1 - \frac{1}{N_m^1} \sum_{t \epsilon T_m^1} f(t; \Theta) \right)$$

where

$T_m^1$: set of calendar days for the *m*-th month; and

$N_m^1$: total number of calendar days in *m*-th month.

For the SR1 contract, whose reference month is the current month (*m* = 0), the implied value can be calculated using published SOFR fixings and projected overnight SOFR rates:

$$\hat{P}_0^1(\Theta) = 100 \times \left[ 1 - \frac{1}{N_0^1} \left( \sum_{t \epsilon T_0^{1-}} r_t + \sum_{t \epsilon T_0^{1+}} f(t; \Theta) \right) \right]$$

where $T_0^{1+} = \{t \epsilon T_0^1 | t \geq t_0\}; \quad T_0^{1-} = \{t \epsilon T_0^1 | t < t_0\};$ and

$r_t$: published SOFR fixing for date *t*.

For the SR3 contract, whose reference quarter is not current quarter (*q* > 0), the implied value only depends on projected overnight SOFR rates:

$$\hat{P}_q^3(\Theta) = 100 \times \left[ 1 - \frac{360}{N_q^3} \left( \prod_{t \epsilon T_q^3} (1 + \frac{f(t; \Theta) \times d_t}{360}) - 1 \right) \right]$$

where

$T_q^3$: set of business days for the *q*-th quarter;

$N_q^3$: total number of calendar days in *q*-th quarter; and

$d_t$: the number of calendar days from date *t* to its next business day following the CME Group Holiday Calendar, if the next business day is no later than the end date of the *q*-th quarter; otherwise, $d_t$ equals to the number of days from date *t* to the end date of the *q*-th quarter.

For the SR3 contract, whose reference quarter is the current quarter (*q* = 0), the implied value can be calculated using published SOFR fixings and projected overnight SOFR rates:

$$\hat{P}_0^3(\Theta) = 100 \times \left[ 1 - \frac{360}{N_0^3} \left( \prod_{t \epsilon T_q^{3-}} (1 + \frac{r_t \times d_t}{360}) \times \prod_{t \epsilon T_q^{3+}} (1 + \frac{f(t;\Theta) \times d_t}{360}) - 1 \right) \right]$$

where $T_q^{3+} = \{t \epsilon T_q^3 | t \geq t_0\};$ $T_q^{3-} = \{t \epsilon T_q^3 | t < t_0\};$ and

$r_t$: published SOFR fixing for date $t$.

The framework of the Optimization method may be guided by the following principles:

Reflect Market Expectations. The first term of the optimization function is the weighted average squared error between implied values and observed prices of the 7 SR1 and 3 SR3 contracts. The optimization algorithm is trying to minimize the root mean squared errors of the deviations from market expectations;

Equally Weighted. The disclosed embodiments assign the same weight to each input future contract in the optimization at current stage without considering any volume based adjustment. The weight for each future contract is 0.1 for all 7 SR1 and 3 SR3 contracts;

Six Month Jump Window. The disclosed embodiments assume that no jumps will occur more than six months after the as of date. That is the largest FOMC policy rate announcement date $M_{(K)}$ used in the algorithm is the first FOMC policy rate announcement date that occurs more than six months after the as of date for SOFR term rate $t_0$; and

Policy Gradualism. The second term of the optimization function is a penalty function which will impose punishment on large jump size. This regularization term in the optimization function ensures that the optimization prefers "gradual jump patterns" of the overnight SOFR rates rather than "extreme jump patterns" if the two patterns leads to the same contract prices. For example, suppose two or more FOMC meetings occurred during the lifespan of a single SR3 contract, multiple jump patterns, like a big jump at one FOMC policy rate announcement date and no jumps at other meetings or equal jump at each FOMC policy rate announcement date, may have the same implied contract price. In this case, the penalty function will select the equal jump pattern to minimize the absolute value of the largest individual jump size such that the path for overnight SOFR rates will be more smooth. A small positive number will be assigned to $\lambda$ and hence it will not materially affect the parameter estimates.

Term Rates are then derived by compounding the overnight SOFR rates over one, three and six months. The compounding follows conventions listed as below:

$$h(T) = \frac{360}{T} \times \left[ \prod_{t \epsilon \tilde{T}(T)} \left( 1 + \frac{f(t;\Theta) \times d_t}{360} \right) - 1 \right]$$

where

$\tilde{T}(T)$: the set of business days from the term start date to date $T$ days in the future. Each term tenor will start on (and include) two business days following the publication day, adjusted for USNY calendar based on Following convention. The term rate will span the corresponding tenor (eg, 1-month, 3-month, 6-month which is represented by $T$ days in the formula) in accordance with Modified Following conventions USNY calendar;

$t$: a business day in set $\tilde{T}(T)$;

$d_t$: the number of calendar days from date $t$ to its next business day following, for example, the CME Group Holiday Calendar, if the next business day is no later than the end date of SOFR term rate; otherwise, $d_t$ is equal to the number of days from date $t$ to the end date of SOFR term rate; and

$f(t, \Theta)$: the overnight SOFR rate as of date $t$;

In one embodiment, the disclosed system may operate as follows to generate the data set to be used by the rate generator to generate the one or more forward rates by sourcing transacted prices from the futures electronic trading system and supplementing with executable bid/offer orders to create a robust representation of the market pricing.

The disclosed embodiments use executed transactions and executable bids and offers in, for example, SOFR Futures, such as those traded on a CME Group Designated Contract Market (DCM) with contract specifications detailed below. This data may be obtained the CME's Enterprise Pricing System (EPS).

In one embodiment, the disclosed Term SOFR Reference Rates methodology is based solely on SOFR futures as described herein. Alternatively, the disclosed Term SOFR Reference Rates methodology may utilize a combination of SOFR Futures and SOFR Overnight Indexed Swaps (OIS) to ensure that the term structure is appropriately calculated, providing as many data points as possible.

As described above, the rate generator, using the described model, generates estimates of SOFR Term rates for one or more tenors, e.g., for 1 month, 3 month and 6 month tenors. *See* "One-Month SOFR Futures Contract Specs" available at https://www.cmegroup.com/trading/interest-rates/stir/one-month-sofr_contract_specifications.html (last accessed August 15, 2020) and "Three-Month SOFR Futures Contract Specs" available at https://www.cmegroup.com/trading/interest-rates/stir/three-month-sofr_contract_specifications.html (last accessed August 15, 2020) both of which are incorporated by reference herein. To ensure full coverage of the above tenors, the calculation algorithm may use:

> One-month SOFR Futures (SRI): 7 (seven) consecutive months contracts
> Three-month SOFR Futures (SR3): 3 (three) consecutive months contracts.

CME One-month SOFR Future (SRI) and CME Three-month SOFR Future (SR3) contracts provide estimates of values of overnight SOFR on average over the specific contract dates; CME SOFR Futures do not directly provide estimates of individual overnight SOFR rates.

For SR3 futures, a 4th month contract will be added if the expiry date of the third SR3 contract falls short of the 6-mth IMM relevant day count.

Accordingly, the sampled set of contracts may, in one embodiment, include a total of 10 or 11 contracts (7 SR1 contracts of consecutive months, and either 3 or 4 SR3 contracts of consecutive months). It will be appreciated that the number and expiration of contracts may be vary and is implementation dependent, e.g., the selection may depend upon the tenor for which a forward rate is to be computed.

Futures contracts may be rolled, as described above, two business days prior to the respective expiry day.

In one embodiment, the SR1 and SR3 contract price sampling market hours are 7:00am CT until 2:00pm CT and the observation period is sub-divided in 14 (fourteen) windows of 30 (thirty) minutes each. It will be appreciated that the sampling hours may be dependent upon electronic trading system from which the prices are obtained and may vary and need not align with the actual trading hours of the trading system, e.g. the sampling windows may commence after an elapse of a period of time after trading commences and the last sampling window may be concluded prior to the closing of trading or, alternatively, the sampling windows may span multiple trading sessions/days. Market events, such as trading halts, may accounted for when conducting a particular sampling, e.g., to exclude the affected sample window or obtain alternative data. Further, the number of sampling windows/periods and/or the duration thereof implemented for each forward rate computation may vary and is implementation dependent.

Note that for both the SR1 and SR3 contracts that have entered their reference period it may be necessary to include the known historical SOFR overnight rates into a calculation in order to determine the implied average value of unknown SOFR rates for the remainder of such contract; compounded returns are expressed as Actual/360.

As described elsewhere herein, there are two variations of the SOFR Futures product set, both reference the same underlying interest rate while providing comprehensive coverage of the yield curve including more granularity in the nearby by months.

The One-Month SOFR Futures (SRI) is a monthly contract that follows a calendar month schedule. Final settlement price is determined by the formula 100-R, where R represents the annualized rate of interest calculated as a simple average of individual rates applied to all days in the month. An overnight rate is assigned to every day in the contract month (SOFR values are published on the next good business day after transaction date). Weekends and holidays are assigned the prevailing rate from the last preceding day for which a rate was published. To calculate the final settlement of a One-month SOFR Future, calculate the simple arithmetic average of the daily SOFR rates of the calendar month (i.e. the sum of all rates in the month period divided by the number of calendar days in the month period). The arithmetic average is rounded to the nearest 1/10th of a basis point, and the contract Final Settlement Price is equal to 100-the rounded arithmetic average.

The Three-Month SOFR Futures (SR3) is a quarterly contract that follows the IMM schedule. The final settlement price of an expiring SR3 contract is based on SOFR benchmark values for all US government securities market business days (business days) occurring within the contract reference quarter. A contract reference quarter starts on (and includes) the third Wednesday of its contract name identification month (SR3M0 begins on June 17, 2020), and ends on (and not including) the third Wednesday of the next quarterly month (SR3M0 ends on Sept 16, 2020). Final settlement price is determined by the formula 100-R where R represents the annualized rate of interest derived from compounding of all SOFR benchmark settings during the reference quarter. Simple interest is accrued to all non-business days in the reference quarter (weekends and holidays) based on the SOFR benchmark from the preceding good business day. Then all business days' interest is compounded. The resulting rate is represented as an annualized interest rate using money market day count convention (Actual/360).

As was noted above, other futures contracts now available or later developed, such as a 6 month SOFR futures contract, may also be used with the disclosed embodiments and may, for example, depend on the tenor for a forward rate is to be computed.

The disclosed embodiments calculate a set of Volume Weighted Average Prices (VWAP) using transaction prices, e.g., the prices of actual completed trades, observed for each of the 10 or 11 consecutively expiring SR1 and SR3 contracts during a given sampling period, along with a snapshot of the executable Bid/Offer prices for each contract, e.g., the best bid (lowest) and best offer (highest) prices of resting (not yet fully satisfied) orders in the order book, at a random moment during the sampling period. That is, during a given sampling window, the transaction prices are collected and further, at a determined random time, the executable bid/offer prices are obtained. Subsequent to the closing of the sampling window, e.g., immediately or upon the close of all of the sampling windows on which the forward rate will be computed, e.g., for the current trading session or day, the process continues as described below.

In one embodiment, configurable consecutive or non-consecutive sampling periods/intervals may be used wherein the duration and number of sampling periods, as well as the time interval therebetween for non-consecutive periods, may be configured to have as many meaningful Volume Weighted Average Price solutions as possible. The duration of each of a set of consecutive sampling period may be set, for example, at 30 minutes and the number of consecutive sampling periods in each daily calculation may be 14, e.g., so as to cover the CME SOFR Futures market hours, from 7:00am CT until 2:00pm CT. The snapshot of Executable Bid/Offer prices may be taken at a randomized point during each sampling period; care may be taken to ensure that consecutive snapshots, i.e., between sampling periods, are not highly proximate in time (i.e. at the end of one period and at the beginning of the subsequent period). In one embodiment, the random snapshot it taken towards the end of period, e.g. within the last 3-5 minutes or less of the period. In one embodiment, the window over which the random snapshot make be obtained is dependent upon the configurable overall duration of the sampling period, e.g. the random window is of a duration equal to a percentage, such as 10%, of the sampling window duration, e.g., for a 30 minute window, the random window is the last 3 minutes. In one embodiment, the random snapshot of one period may not be less than a configurable threshold time, e.g., 15 minutes, from the time the snapshot was randomly taken in the prior sampling period.

Subsequent to the end of a given sampling period, Candidate Solution Sets consisting of a subset, e.g., series, of the observed prices for each contract are identified using trade activity in outright contracts occurring during the interval. The candidate solution sets are each identified by: first determining a set of seed values, one for each contract, using either a Volume Weighted Average Price (VWAP), if there is at least some trading volume during the sampling interval, or a midpoint of the randomly sampled bid/ask prices where there are no transactions occurring in the given sampling interval. An initial candidate solution set includes one price, e.g. the seed values, i.e. VWAP or mid-point of the best offer/ask prices, for each of the 10/11 contracts. Additional candidate solutions may be formed using other sampled actual trade prices for each contract that are within a threshold number of increments, e.g. 5 increments of 0.01 basis points, of the seed value if a trade at such a price occurred. It will be appreciated that the number of increments and the basis points, or tick size, thereof may be implementation dependent. Additional candidate solution sets may be formed on an as needed basis, and using an increasing price increment threshold, until a suitable solution set is identified as described below. In one embodiment, each additional candidate solution set may be found by incrementally varying each one of the 10 or 11 contracts at a time, i.e., to create the next candidate solutions set, e.g. changing the price to the next price within the threshold number of increments, wherein ultimately the entire set of candidate solutions would contain all permutations of all trade prices of each contract. The following table shows Example Solution Prices derived from the VWAP while staying within Bid/Ask constraints:

|     | Bid | Ask | VWAP | Solution Price |
| --- | --- | --- | --- | --- |
| May | 5.0 | 5.25 | 5.22 | 5.22 |
| Jun | 4.5 | 5.0 | 4.85 | 4.85 |
| Jul | 3.5 | 4.0 | 3.50 | 3.5 |
| Aug | 2.0 | 2.5 | 2.54 | 2.5 |
| Sep | 1.5 | 2.5 | 2.5 | 2.5 |
| Oct | 0.5 | 1.5 | 1.64 | 1.5 |
| Nov | 0.5 | 1.0 | 0.85 | 0.85 |

An algorithm is then used to select a solution price for each contract from among the candidate solution sets, applying linear optimization to find a "best fit" set of values that minimize violations of the bid/ask quotations in outright markets, calendar spread markets and butterfly markets. Each candidate solution set, starting with the initial candidate solution set, e.g. the seed prices, is tested one at a time until a suitable valid solution set is identified, the process then stopping thereafter. The algorithm locates the set of relevant SOFR futures contract prices that accommodates the maximum number of bids and asks in these instruments. It then selects the "optimum" as the candidate solution set that, in aggregate, is closest to the VWAP seed values, weighted so as to give higher priority to futures contracts nearer to expiration. For a given candidate solution set, the score for the candidate solution is the sum of the squared differences between each contract's price in the solution set and the VWAP price. The same calculation is repeated for each candidate solution set. The candidate solution set with the lowest aggregate score is selected as the "optimal" solution.

In one embodiment, the algorithm to select a solution price for each contract comprises a quasi-settlement algorithm, wherein each market price sample of the SR1 and SR3 futures contracts is processed via the quasi-settlement algorithm which ensures the prices are consistent with each other within given sample set.

In one embodiment, the quasi-settlement algorithm may be the optimized value selection process described in U.S. Patent 10,430,881, incorporated by reference herein, which describes, generally, selecting optimum values for inter-related objects, e.g., objects influencing and/or dependent upon other system objects, when a computer process computes multiple potential values for each object. In one embodiment, an exchange computer system may convert contracts or legs to base objects and may convert spread instruments to composite objects. Specifically, the disclosed embodiments optimize overall system performance by determining and selecting object values that conform to pre-defined rules and/or relationships between different objects, including identifying and discarding object values that deviate from or otherwise result in a violation of the pre-defined rules and relationships. Thus, the disclosed embodiments reduce the load on a computer by identifying and eliminating solutions that would result in undesirable object relationships. In other words, the disclosed embodiments rely on desirable object relationships to select object values, so that the selected object values result in the desired object relationships. The desired object relationships may be derived from data input into the system. In one embodiment, the desired object relationships reflect a high level of overall system performance and user satisfaction. In one embodiment, the disclosed embodiments may be implemented to determine object values so that a maximum number of inter-object transactions can be enabled and do so in an iterative process that conserves computing time and resources. The relationship logic may be pre-configured into a computer, such that the computer optimizes its solutions to conform to as many of the pre-configured logic or criterion as it can. In one embodiment, the object relationships are ranked or are hierarchal in nature, and the computing systems begins with the highest ranked relationship and attempts to meet its rules, then processes the second-highest ranked relationship, and so on. Any object optimization performed during processing of the highest relationship is used during processing of the second relationship. In other words, instead of processing each object relationship separately and independently, the relationship rules are prioritized, and results of processing the highest priority relationship are used during processing of the second highest priority relationship, and the results after processing the second highest priority relationship are used during processing of the third highest priority relationship, and so on until optimum values are determined, or until all of the relationship rules are processed. In one embodiment, if there are multiple solutions for an object value even after all the relationship rules have been processed, the computing system may add additional rules, e.g., based on historical object values, to optimize the final solution. A system may depend on certain rules, logic, and inter-related objects and data. In technical and computing environments, a system may calculate values for multiple objects subject to rules, e.g., business or environment logic, associated with the objects. Certain object types may also depend on other object types. For example, a computing environment may include multiple objects of different types, e.g., base objects and composite objects. A composite object as used herein is an object whose value depends on, is related to, or is influenced by, the values of other objects, such as base objects or other composite objects. For example, a composite object may involve transactions between multiple, e.g., two, base objects. Or, a composite object may define a relationship between other objects. Thus, composite objects depend on the values of other system objects. In one embodiment, a composite object involves or defines a transaction or relationship between at least two other objects. For example, a composite object involves or defines a transaction or relationship between two base objects. The optimization module in one application can rapidly and efficiently determine solutions for the objects that meet predetermined rules for the objects. Predetermined rules may be programmed into the computer. An example predetermined rule may be a rule about the difference in values, e.g., the net value, between contracts. The rules may be hard rules, or system requirements. Alternatively, rules may be soft rules that are not requirements but reflect system or user preferences. For example, the disclosed embodiments may optimize the values of base objects by considering the effects of base object values on other composite objects that are related to the base objects. Moreover, the system environment may impose restrictions on the values of the composite objects. For example, the system may impose certain performance requirements on composite objects. Or, the system may impose a minimum or maximum value for a composite object value that is based on at least two base objects' values. Thus, the system attempts to select base object values that conform to the composite object value requirement. In such a computing environment, it may be desirable to optimize overall system behavior by assigning values to objects such that rules or relationships involving the objects, e.g., composite object definitions, are met. In one embodiment, the computing may receive values for base objects and composite objects, and the computing system attempts to select values in accordance with relationships associated with the base objects and composite objects. In particular, the system may receive high and low values for each base and composite object. Even though a composite object may define a relationship between base objects, or be related to the base objects, the values received for the composite objects may be independent of the values received for the corresponding base objects, e.g., fluctuations in the values of the corresponding base objects may have no effect on the values received for the composite object, and vice versa.

In contrast to the system taught by U.S. Patent 10,430,881 which tests all candidate solution sets at once, however, as noted, in the disclosed embodiments, the search for a suitable solution set starts with the initial candidate solution set comprising the seed values. If this solution set proves to be invalid, the system generates/selects and tests another candidate solution set with one or more of the contract prices with a threshold number of increments of the seed value and where still no valid solution set is identified, the threshold number of increments is increased to generate additional candidate solution sets to be tested one at a time. Accordingly, by starting with a likely candidate solution set and only generating and testing additional candidate solution sets as needed, the disclosed embodiments improve on the efficiency of the validity evaluation and reduce the computational resource necessary in order to identify a suitable result.

Once a solution is found for each sampling period, the solution prices for each contract for each sampling period are aggregated, e.g., they will be combined using a simple average of the price derived during each interval.

Further, each tenor may be measured for robustness based on both the volume of transactions in SR1 and SR3 futures contracts and also by the magnitude of order book bids and offers that underpin each snapshot of futures prices. Both total, traded volumes and executable volumes, represented by top of order book at snapshots will be counted. Volumes will be standardized by DV01 to represent notional of the rate tenor. For each tenor the notional volume underpinning it will be defined as any contract that has a reference period coinciding with the tenor's reference period. In particular, once all of the solution sets for current period, e.g. all fourteen solution sets for the current trading session, have been established, they are weighted by the total volume of trade in the contracts during the time period/interval they were sampled from and averaged at each tenor. The final price at each tenor is the volume weighted average of the prices in each candidate set, where the volume is determined by the volume of all contracts during that time interval.

The aggregated prices of each contract are then provided to the rate generator for computation of the forward rates as described above.

In an alternative embodiment, as noted above, in addition to futures markets, the over the counter (OTC) market for SOFR Overnight Indexed Swaps (OIS) may provide an indication of Term SOFR values. In particular, data may be sourced from regulated venues such as Swap Execution Facilities (SEFs) and Multilateral Trading Facilities (MTFs). To be considered for inclusion in the computation of the one or more forward rates as described herein, the volume of OTC OIS may need to represent in excess of 25% of the relevant futures notional volume for a particular tenor for a continuous 6 month period. Verification of admission criteria and authorization to include such data will be a matter reviewed by an Oversight Committee, and the sources may be reviewed regularly by an Administrator and the Oversight Committee to ensure they are still relevant.

In this embodiment, OIS activity from all trading venues will be aggregated, based on a volume-weighted-median-average-rate (VWMAP) of transactions supplemented with snapshots of the Executable Orders on the venues.

The futures and OIS Datasets may be combined by weighting the relevant data sources based on the total notional volume in those instruments during the prior calendar quarter. Each tenor may be measured for robustness based on the level of volume underpinning that rate. Both total volume and top of order book at snapshots may be counted. Volumes will be standardized to represent notional of the rate tenor.

Each tenor will be measured for robustness based on both the volume of transactions in CME SOFR futures and also by the magnitude of order book bids and offers that underpin each snap of futures prices. Both total, traded volumes and executable volumes, represented by top of order book at snapshots will be counted. Volumes will be standardized by DV01 to represent notional of the rate tenor. For each tenor the notional volume underpinning it will be defined as any contract that has a reference period coinciding with the tenor's reference period.

Once the rate generator has computed the one or more forward rates, those rates may be validated, and or certified, using one or more tests to confirm they are within expected tolerances. For example, reliability checks may be performed each day, as follow:

the benchmark's change since previous day will be evaluated relative to the historical standard deviation, to test whether the move is relatively large; and
a second test will be performed to evaluate whether the rate's change on the day is larger than the rate of change of any of the input prices.

Mechanisms to provide an alternative rate value may be provided for when the above tests fail.

As described above, no personal or professional judgement, i.e., subjective information, is applied to the determination of the one or more forward rates.

Once validated, the computed one or more forward rates may be published, e.g., on the next Business Day following the Business Day during which futures data sampling takes place.

As described, the one or more forward rates may be computed based on a Reference Period that begins two business days (T+2) after the Publication Date settlement, where publication occurs on the Business Day following the sampling date.

As described, the one or more forward rates may be computed for each day the Federal Reserve Bank of New York calculate and publish SOFR. Publication will occur at 5.00am CT (6.00am ET, typically 11.00am GMT/BST).

Once published, the one or more forward rates may not be republished for that given day so as to prevent possible market disruptions.

Examples of the operation of the above described process are shown in the Appendix included herewith. The examples include an example of the successful sampling and resultant forward rate computation. Further, the examples include additional examples demonstrating the operation of the system when one or more of the disclosed post-forward-rate computation validation checks fail prior to publication.

The disclosed technology addresses the need in the art for a system which can operate automatically without subjective inputs. Specifically, the disclosed technology solves a problem that uniquely arises in the fields of computer technology and exchange computing systems, where forward values need to be computed based on objectively obtained data rather than manually generated subjective/opinion data. For example, by interfacing with an electronic trading system and utilizing data indicative of the results of the trading of particular futures contracts, the system may determine objective expected interest rate values determined via the negotiations between self-interested parties and utilize this data to generate an interest rate model for an overall future time period from which interest rate values for particular sub-periods may be derived. Thus, the disclosed solution is rooted in computer technology in order to overcome a problem specifically arising in the computer systems used by electronic trading systems. Indeed, the subject technology improves the functioning of the computer by allowing it to automatically generate data it could not generate previously.

The disclosed embodiments are drawn to systems and methods that include specific computing components, each being specially programmed to perform a technological function as part of a greater technological process. The disclosed embodiments include separate system components interconnected in a specific way to implement aspects of the disclosed system and include sufficient specific structure and function and, as such, are not drawn to an abstract idea.

The disclosed embodiments are not directed to any method for "obtaining, transforming and determining," which is involved in all computing functionality. The disclosed embodiments and features recited in this regard provide numerous advantages. The instant embodiments do not preempt all methods of "obtaining, transforming, and determining," and are specifically directed towards the disclosed functionality. The disclosed embodiments implement specific rules and features that improve the operation of a particular genus of a technological process, which does not preempt all techniques of obtaining, transforming and determining, which, at some level, is part of every computing process.

The disclosed embodiments may be implemented in an electronic data transaction processing system, as described below, that processes data items or objects, such as an exchange computing system as described in more detail below. Customer or user devices (e.g., client computers) may submit electronic data transaction request messages, e.g., inbound messages, to the data transaction processing system over a data communication network. The electronic data transaction request messages may include, for example, transaction matching parameters, such as instructions and/or values, for processing the data transaction request messages within the data transaction processing system. The instructions may be to perform transactions, e.g., buy or sell a quantity of a product at a range of values defined by equations. Products, e.g., financial instruments, or order books representing the state of an electronic marketplace for a product, may be represented as data objects within the exchange computing system. The instructions may also be conditional, e.g., buy or sell a quantity of a product at a given value if a trade for the product is executed at some other reference value. The data transaction processing system may include various specifically configured matching processors that match, e.g., automatically, electronic data transaction request messages for the same one of the data items or objects. The specifically configured matching processors may match, or attempt to match, electronic data transaction request messages based on multiple transaction matching parameters from the different client computers. The specifically configured matching processors may additionally generate information indicative of a state of an environment (e.g., the state of the order book) based on the processing, and report this information to data recipient computing systems via outbound messages published via one or more data feeds.

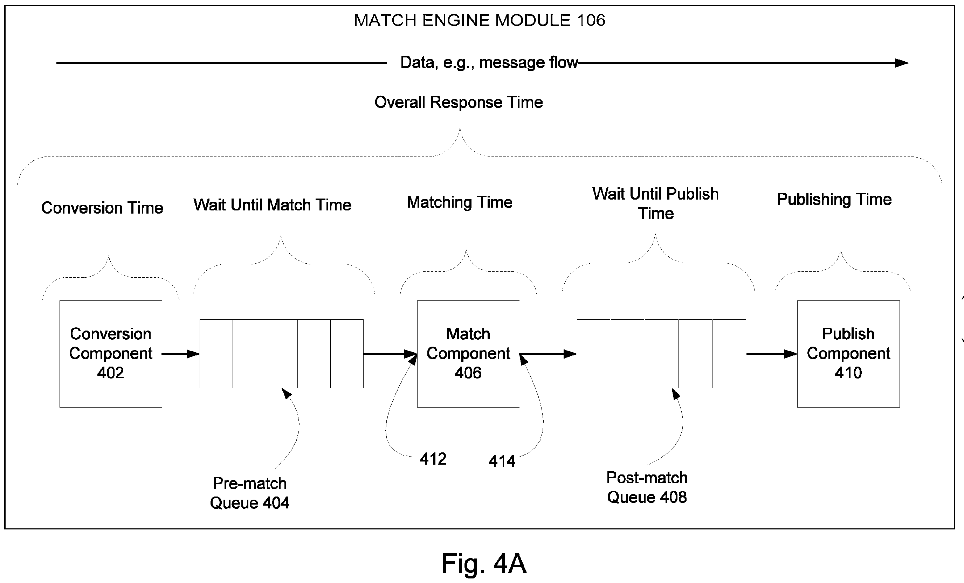

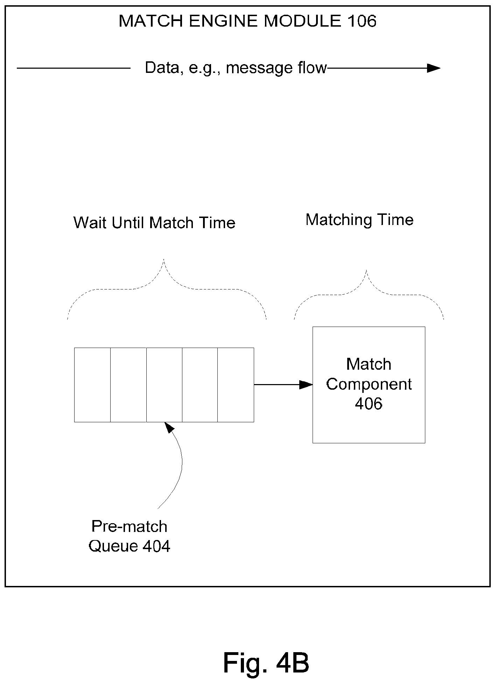

The application may be executed by one or more of the matching processors. Thus, the application may be a software match engine module, such as the match engine module illustrated in Figures 4A and 4B, which includes multiple different stages, e.g., the conversion component 402, match component 406, and publish component 410.

FUTURES EXCHANGE

A Futures Exchange, referred to herein also as an "Exchange", such as the Chicago Mercantile Exchange Inc. (CME), utilizing an Exchange Computing System, described in detail below, provides an electronic data processing system which implements a contract market where futures and options on futures are traded. Futures is a term used to designate all contracts for the purchase or sale of financial instruments or physical commodities for future delivery or cash settlement on a commodity futures exchange. A futures contract is a legally binding agreement to buy or sell a commodity or other underlier, such as a financial instrument, at a specified price at a predetermined future time. An option is the right, but not the obligation, to sell or buy the underlying instrument (in this case, a futures contract) at a specified price within a specified time. The commodity or instrument to be delivered in fulfillment of the contract, or alternatively the commodity/instrument for which the cash market price shall determine the final settlement price of the futures contract, is known as the contract's underlying reference or "underlier." The terms and conditions of each futures contract are standardized as to the specification of the contract's underlying reference, the quality of such underlier, quantity, delivery date, and means of contract settlement. Cash Settlement is a method of settling a futures contract whereby the parties effect final settlement when the contract expires by paying/receiving the loss/gain related to the contract in cash, rather than by effecting physical sale and purchase of the underlying reference at a price determined by the futures contract price.

In particular all futures contracts may be characterized by at least a date of first availability, i.e. the first day on which the contract may be traded, and an expiration date when the contract will be settled. The time between the first availability and the expiration may be referred to as the contract life or lifespan.

An interest rate futures contract, also referred to as an interest rate future, is a futures contract having an underlying instrument/asset that pays interest, for which the parties to the contract are a buyer and a seller agreeing to the future delivery of the interest bearing asset, or a contractually specified substitute. Such a futures contract permits a buyer and seller to lock in the price, or in more general terms the interest rate exposure, of the interest-bearing asset for a future date. One example of an interest rate futures contract is a short term interest rate ("STIR") contract. Examples of such short-term interest rate ("STIR") futures include CBOT 30-Day Fed Funds futures, CME 1-Month Eurodollar futures, 3-Month Eurodollar futures, or 3-Month Overnight Interest Rate Swap ("OIS") futures, and NYSE Liffe Eonia futures, Eonia Swap Index futures, or Short Sterling futures. As described above, these are backwards looking futures contracts as opposed to futures contracts based on forward looking rate, e.g. Eurodollar futures based on Libor.

With regards to futures contracts based on backwards looking rates, e.g. Fed Funds Futures, in addition to being characterized by a first availability and an expiration, interest rate futures may be further characterized by a duration over which the subject interest rate will be calculated, e.g. averaged, for the purpose of determining the final settlement price. Typical durations are monthly and quarterly. So for a monthly interest rate contract, average interest rate during the expiration month will be calculated to determine the final settlement price for that contract and for a quarterly contract, the average interest rate for the quarter at the end of which the contract expires, will be calculated to determine the final settlement price, etc.

One purpose of interest rate futures contracts may be to achieve synthetic interest rate swap exposure through use of interest rate futures that directly reference the short-term interest rate that serves as the floating rate benchmark for the interest rate swap. The market participant may construct a futures proxy for the desired interest rate swap exposure with strips of such futures, i.e., sequences of STIR futures contracts with consecutive delivery months. For example, a market participant might use CME 3-month Eurodollar futures in each of the nearest 40 quarterly delivery months, in varying quantities, to synthesize a 10-year US dollar interest rate swap. Similarly, varying amounts of CBOT 30-Day federal funds futures for each of the nearest 12 monthly delivery months might be combined to create a synthetic proxy for a 1-year US dollar overnight index swap.

Typically, the Exchange provides for a "clearing house" through which all trades made must be confirmed, matched, and settled each day until offset, i.e. closed or otherwise nullified by an opposing position, or delivered. The clearing house is an adjunct to the Exchange, and may be an operating division of the Exchange, which is responsible for settling trading accounts, clearing trades, collecting and maintaining performance bond funds, regulating delivery, and reporting trading data. The essential role of the clearing house is to mitigate credit risk. Clearing is the procedure through which the Clearing House becomes buyer to each seller of a futures contract, and seller to each buyer and assumes responsibility for protecting buyers and sellers from financial loss due to breach of contract, by assuring performance on each contract. A clearing member is a firm qualified to clear trades through the Clearing House.

As an intermediary, the Exchange bears a certain amount of risk in each transaction that takes place. To that end, risk management mechanisms protect the Exchange via the Clearing House. The Clearing House establishes performance bonds (margins) for all Exchange products and establishes minimum performance bond requirements for customers of Exchange products. Performance bonds, also referred to as margins, are the funds that must be deposited by a customer with his or her broker, by a broker with a clearing member, or by a clearing member with the Clearing House, for the purpose of insuring the broker or Clearing House against loss due to breach of contract on open futures or options contracts. Performance bond is not a part payment on a purchase. Rather, performance bond helps to ensure the financial integrity of brokers, clearing members, and the Exchange. The Performance Bond to Clearing House refers to the minimum dollar deposit which is required by the Clearing House from clearing members in accordance with their positions. The initial margin is the total amount of margin per contract required by the broker when a futures position is opened. Maintenance, or maintenance margin, refers to a minimum amount, usually smaller than the initial performance bond, which must remain on deposit in the customer's account for any position at all times. A drop in funds below the maintenance margin level requires a deposit back to the initial margin level, i.e., a performance bond call. If a customer's equity in any futures position drops to or under the maintenance level because of adverse price action, the broker must issue a performance bond/margin call to restore the customer's equity. A performance bond call, also referred to as a margin call, is a demand for additional funds to bring the customer's account back up to the initial performance bond level whenever adverse price movements cause the account to go below the maintenance margin level. Within any given Exchange trading day, a futures contract position that is newly entered and cleared, and then held through the end of the trading day, is marked-to-market by the Exchange, i.e. the current market value, as opposed to the book value, is determined, from the trade price at which the contract position was entered to the trading day's end-of-day settlement price for the contract. Similarly, a futures contract position that is extant at the beginning of a given Exchange trading day, and that is then held through the end of the trading day, is marked-to-market by the Exchange from the previous day's end-of-day settlement price to the current day's end-of-day settlement price for the contract. In both cases, the net of these amounts is banked in cash. That is, if the mark-to-market records an increase in the price of the contract, the Clearing House credits to those clearing members holding open long positions, and debits from those clearing members holding open short positions, the pecuniary value of the change in contract price. If the mark-to-market records a decrease in the price of the contract, the Clearing House debits those clearing members holding open long positions, and credits to those clearing members holding open short positions, the pecuniary value of the change in contract price. Such credits to, or debits from, clearing member accounts at the Clearing House are typically referred to as "variation margin."

Multiple futures contracts for a given underlier may be issued, or otherwise made available for sale/trading, having various future expiration dates, such as monthly or quarterly expiration dates. For example, various futures contracts for oil, gas, treasury securities, etc. may be issued, each having a different expiration. For example, for given underlier, contracts expiring each month of a future calendar year may be available for trading today. These contracts may be made available for trading close to or well in advance of their particular expiration date. For example, a contract having a January 2019 expiration date may be made available for trading in January of 2017. The time between issuance and expiration may be months or even years. At the time a trader takes a position in a particular contract for given underlier, e.g. buys a futures contract to buy or sell the underlier in the future, the nearest expiring available futures contract for that particular underlier is referred to as the "front month" contract. All later expiring contracts for that underlier are referred to as "back month" contracts.

Particularly, with respect to interest rate futures contracts, such as STIR contracts, different traders may wish to trade contracts for many different time periods, e.g. to gain or hedge exposure to future interest rate changes, and for different durations over which the subject interest rate is calculated, e.g. monthly quarterly etc. Depending on the needs of the of the trader, e.g. their trading strategy, a given trader may desire to trade front month, back month or a combination of those contracts, and different durations, e.g. monthly quarterly, etc. e.g. for the purpose of hedging or mitigating risk, etc.

Accordingly, the Exchange may offer many different contract variations in order to meet these trader needs. Of course, it may not be feasible to offer every possible expiry/duration permutation of every contract. This limitation, coupled with a trader's typical desire to minimize the number of transactions and the number of positions, results in Exchanges offering select subset of contracts for trading at any given point in time. Typically, shorter duration contracts are offered with expirations occurring in the near future while quarterly duration contracts are offered with expirations occurring further out. This reflects the decreasing need for precision the further into the future one looks. For example, an exchange may offer monthly duration interest rate contracts with expirations in the following 6-12 months while quarterly duration contracts may be offered with expirations 12-36 months out.

For example, the 30-Day Fed Funds futures and options contracts are important risk management tools for anyone who wants to hedge against or speculate on changes in short-term interest rates brought about by changes in Federal Reserve monetary policy. Fed Funds futures provide trading opportunities and hedging resources for the management of risk exposures associated with a variety of money market interest rates. Standard and mid-curve options on Fed Funds futures offer market participants instruments with defined risk parameters that can be used to express a view on the likelihood of Fed policy changes. Together, these products serve a wide spectrum of users and uses.

The Fed funds futures contract price represents the market opinion of the average daily fed funds effective rate as calculated and reported by the Federal Reserve Bank of New York for a given calendar month. It is designed to capture the market's need for an instrument that reflects Federal Reserve monetary policy. Because the Fed Funds futures contract is based on the daily fed funds effective rate for a given month, it tends to be highly correlated with other short-term interest rates and is useful for managing the risk associated with changing credit costs for virtually any short-term cash instrument. Fed Funds futures can be used either speculatively to anticipate changes in monetary policy or more conservatively to hedge inventory financing risk across many different markets.

Another interest rate futures contract which may be offered is one based on the above described SOFR, and which may be offered and administered similar to the Fed Funds contracts, e.g. expiring 4 to 7 months out. Furthermore, strips of SOFR contracts, i.e. consecutive SOFR contracts transacted together, e.g. 3 month or quarterly, may be offered.

For example, 3 month International Monetary Market ("IMM") compounded contracts may be offered which settle at the end of the quarter, with 16 quarterly contracts offered covering 4 years.

For example, One and Three Month SOFR Futures may be defined as follows:

Three-Month SOFR futures

- Price is IMM Index = 100 minus Rate.
- "Rate" is business-day-compounded SOFR interest during the contract Reference Quarter.
- Contract Reference Quarter starts on IMM Wednesday of third month before contract delivery month, and ends immediately before IMM Wednesday of contract delivery month.
- "Contract Month" is the month in which Reference Quarter begins. Example: For a "March" contract, Reference Quarter starts on IMM Wednesday of March and ends with contract final settlement on IMM Wednesday of June, the contract delivery month.
- Each basis point of contract interest is worth $25. Contract size = $2,500 x IMM Index.
- Initial contract listings will comprise the 20 March Quarterly months starting with June 2018 (i.e., the contract scheduled for final settlement on Wednesday, 19 September 2018)
- Intermarket spreads versus the nearby 20 Three-Month Eurodollar (GE) futures - quarterly, White year through Gold year - should furnish a clear view of market assessment of the term structure of basis spreads between 3-month SOFR OIS exposures and corresponding 3-month Eurodollar exposures.

One-Month SOFR futures

- Price is IMM Index = 100 minus Rate.
- "Rate" is arithmetic average of daily SOFR values during contract delivery month.
- Each basis point of contract interest is worth $41.67. Contract size = $4,167 x IMM Index.
- Initial contract listings will comprise the nearest 7 calendar months, starting with May 2018.
- Intermarket spreads versus the nearest 7 monthly CBOT 30-Day Federal Funds futures should provide timely indication of market expectations across the nearby term structure of the fed funds-SOFR basis spread.

Complementarity between Three-Month SOFR futures and One-Month SOFR futures: For any Three-Month SOFR futures contract prior to the start of its Reference Quarter, the contract rate - the "Rate" portion of the "100 minus Rate" contract price - gauges market expectation of business-day compounded SOFR during the Reference Quarter, expressed as an interest rate per annum. After the nearby contract enters its Reference Quarter, the contract rate becomes a mix of (i) known SOFR values, i.e., published values for all days from start of the Reference Quarter to the present, and (ii) market expectations of SOFR values for all remaining days in the Reference Quarter that lie ahead. As the expiring contract progresses through its Reference Quarter, the forward-looking expectational component of its price plays a steadily diminishing role in fair valuation of the contract. In general, progressively decreasing uncertainty about the contract's final settlement price means steadily less contract price volatility. Seen in this light, the One-Month SOFR futures strip will make a useful complement to Three-Month SOFR futures for market participants who seek finer granularity in framing market expectations of future SOFR values, or who seek finer resolution of SOFR volatility, over the nearby 1-month to 4-month interval.

EXCHANGE COMPUTING SYSTEM

For example, one exemplary environment where the disclosed embodiments may be desirable is in financial markets, and in particular, electronic financial exchanges, such as a futures exchange, such as the Chicago Mercantile Exchange Inc. (CME).

As described above, financial instrument trading system, such as a futures exchange, such as the Chicago Mercantile Exchange Inc. (CME), provides a contract market where financial instruments, e.g., futures and options on futures, are traded using electronic systems. "Futures" is a term used to designate all contracts for the purchase or sale of financial instruments or physical commodities for future delivery or cash settlement on a commodity futures exchange. A futures contract is a legally binding agreement to buy or sell a commodity at a specified price at a predetermined future time. An option contract is the right, but not the obligation, to sell or buy the underlying instrument (in this case, a futures contract) at a specified price on or before a certain expiration date. An option contract offers an opportunity to take advantage of futures price moves without actually having a futures position. The commodity to be delivered in fulfillment of the contract, or alternatively the commodity for which the cash market price shall determine the final settlement price of the futures contract, is known as the contract's underlying reference or "underlier." The underlying or underlier for an options contract is the corresponding futures contract that is purchased or sold upon the exercise of the option.

The terms and conditions of each futures contract are standardized as to the specification of the contract's underlying reference commodity, the quality of such commodity, quantity, delivery date, and means of contract settlement. Cash settlement is a method of settling a futures contract whereby the parties effect final settlement when the contract expires by paying/receiving the loss/gain related to the contract in cash, rather than by effecting physical sale and purchase of the underlying reference commodity at a price determined by the futures contract, price. Options and futures may be based on more generalized market indicators, such as stock indices, interest rates, futures contracts and other derivatives.

ELECTRONIC TRADING

Electronic trading of financial instruments, such as futures contracts, is conducted by market participants sending orders, such as to buy or sell one or more futures contracts, in electronic form to the exchange, i.e. to the electronic data processing system which implements the electronic trading system. These electronically submitted orders to buy and sell are then matched, if possible, by the exchange, i.e., by the exchange's matching engine, to execute a trade. Outstanding (unmatched, wholly unsatisfied/unfilled or partially satisfied/filled) orders are maintained in one or more data structures or databases referred to as "order books," such orders being referred to as "resting," and made visible, i.e., their availability for trading is advertised, to the market participants through electronic notifications/broadcasts, referred to as market data feeds. An order book is typically maintained for each product, e.g., instrument, traded on the electronic trading system and generally defines or otherwise represents the state of the market for that product, i.e., the current prices at which the market participants are willing buy or sell that product. As such, as used herein, an order book for a product may also be referred to as a market for that product.

Upon receipt of an incoming order to trade in a particular financial instrument, whether for a single-component financial instrument, e.g., a single futures contract, or for a multiple-component financial instrument, e.g., a combination contract such as a spread contract, a match engine, as described herein, will attempt to identify a previously received but unsatisfied order counter thereto, i.e., for the opposite transaction (buy or sell) in the same financial instrument at the same or better price (but not necessarily for the same quantity unless, for example, either order specifies a condition that it must be entirely filled or not at all).

Previously received but unsatisfied orders, i.e., orders which either did not match with a counter order when they were received or their quantity was only partially satisfied, referred to as a partial fill, are maintained by the electronic trading system in an order book database/data structure to await the subsequent arrival of matching orders or the occurrence of other conditions which may cause the order to be modified or otherwise removed from the order book.

If the match engine identifies one or more suitable previously received but unsatisfied counter orders, they, and the incoming order, are matched to execute a trade there between to at least partially satisfy the quantities of one or both the incoming order or the identified orders. If there remains any residual unsatisfied quantity of the identified one or more orders, those orders are left on the order book with their remaining quantity to await a subsequent suitable counter order, i.e., to rest. If the match engine does not identify a suitable previously received but unsatisfied counter order, or the one or more identified suitable previously received but unsatisfied counter orders are for a lesser quantity than the incoming order, the incoming order is placed on the order book, referred to as "resting", with original or remaining unsatisfied quantity, to await a subsequently received suitable order counter thereto. The match engine then generates match event data reflecting the result of this matching process. Other components of the electronic trading system, as will be described, then generate the respective order acknowledgment and market data messages and transmit those messages to the market participants.

Matching, which is a function typically performed by the exchange, is a process, for a given order which specifies a desire to buy or sell a quantity of a particular instrument at a particular price, of seeking/identifying one or more wholly or partially, with respect to quantity, satisfying counter orders thereto, e.g., a sell counter to an order to buy, or vice versa, for the same instrument at the same, or sometimes better, price (but not necessarily the same quantity), which are then paired for execution to complete a trade between the respective market participants (via the exchange) and at least partially satisfy the desired quantity of one or both of the order and/or the counter order, with any residual unsatisfied quantity left to await another suitable counter order, referred to as "resting." A match event may occur, for example, when an aggressing order matches with a resting order. In one embodiment, two orders match because one order includes instructions for or specifies buying a quantity of a particular instrument at a particular price, and the other order includes instructions for or specifies selling a (different or same) quantity of the instrument at a same or better price. It should be appreciated that performing an instruction associated with a message may include attempting to perform the instruction. Whether or not an exchange computing system is able to successfully perform an instruction may depend on the state of the electronic marketplace.

While the disclosed embodiments will be described with respect to a product by product or market by market implementation, e.g. implemented for each market/order book, it will be appreciated that the disclosed embodiments may be implemented so as to apply across markets for multiple products traded on one or more electronic trading systems, such as by monitoring an aggregate, correlated or other derivation of the relevant indicative parameters as described herein.

While the disclosed embodiments may be discussed in relation to futures and/or options on futures trading, it should be appreciated that the disclosed embodiments may be applicable to any equity, fixed income security, currency, commodity, options or futures trading system or market now available or later developed. It may be appreciated that a trading environment, such as a futures exchange as described herein, implements one or more economic markets where rights and obligations may be traded. As such, a trading environment may be characterized by a need to maintain market integrity, transparency, predictability, fair/equitable access and participant expectations with respect thereto. In addition, it may be appreciated that electronic trading systems further impose additional expectations and demands by market participants as to transaction processing speed, latency, capacity and response time, while creating additional complexities relating thereto. Accordingly, as will be described, the disclosed embodiments may further include functionality to ensure that the expectations of market participants are met, e.g., that transactional integrity and predictable system responses are maintained.

Financial instrument trading systems allow traders to submit orders and receive confirmations, market data, and other information electronically via electronic messages exchanged using a network. Electronic trading systems ideally attempt to offer a more efficient, fair and balanced market where market prices reflect a true consensus of the value of traded products among the market participants, where the intentional or unintentional influence of any one market participant is minimized if not eliminated, and where unfair or inequitable advantages with respect to information access are minimized if not eliminated.

Electronic marketplaces attempt to achieve these goals by using electronic messages to communicate actions and related data of the electronic marketplace between market participants, clearing firms, clearing houses, and other parties. The messages can be received using an electronic trading system, wherein an action or transaction associated with the messages may be executed. For example, the message may contain information relating to an order to buy or sell a product in a particular electronic marketplace, and the action associated with the message may indicate that the order is to be placed in the electronic marketplace such that other orders which were previously placed may potentially be matched to the order of the received message. Thus the electronic marketplace may conduct market activities through electronic systems.

An exchange may provide for a centralized "clearing house" through which trades made must be confirmed, matched, and settled each day until offset or delivered. The clearing house may be an adjunct to an exchange, and may be an operating division of an exchange, which is responsible for settling trading accounts, clearing trades, collecting and maintaining performance bond funds, regulating delivery, and reporting trading data. One of the roles of the clearing house is to mitigate credit risk. Clearing is the procedure through which the clearing house becomes buyer to each seller of a futures contract, and seller to each buyer, also referred to as a novation, and assumes responsibility for protecting buyers and sellers from financial loss due to breach of contract, by assuring performance on each contract. A clearing member is a firm qualified to clear trades through the clearing house.

An exchange computing system may operate under a central counterparty model, where the exchange acts as an intermediary between market participants for the transaction of financial instruments. In particular, the exchange computing system novates itself into the transactions between the market participants, i.e., splits a given transaction between the parties into two separate transactions where the exchange computing system substitutes itself as the counterparty to each of the parties for that part of the transaction, sometimes referred to as a novation. In this way, the exchange computing system acts as a guarantor and central counterparty and there is no need for the market participants to disclose their identities to each other, or subject themselves to credit or other investigations by a potential counterparty. For example, the exchange computing system insulates one market participant from the default by another market participant. Market participants need only meet the requirements of the exchange computing system. Anonymity among the market participants encourages a more liquid market environment as there are lower barriers to participation. The exchange computing system can accordingly offer benefits such as centralized and anonymous matching and clearing.

ELECTRONIC DATA TRANSACTION REQUEST MESSAGES

As used herein, a financial message, or an electronic message, refers both to messages communicated by market participants to an electronic trading or market system and vice versa. The messages may be communicated using packeting or other techniques operable to communicate information between systems and system components. Some messages may be associated with actions to be taken in the electronic trading or market system. In particular, in one embodiment, upon receipt of a request, a token is allocated and included in a TCP shallow acknowledgment transmission sent back to the participant acknowledging receipt of the request. It should be appreciated that while this shallow acknowledgment is, in some sense, a response to the request, it does not confirm the processing of an order included in the request. The participant, i.e., their device, then sends back a TCP acknowledgment which acknowledges receipt of the shallow acknowledgment and token.

Financial messages communicated to the electronic trading system, also referred to as "inbound" messages, may include associated actions that characterize the messages, such as trader orders, order modifications, order cancellations and the like, as well as other message types. Inbound messages may be sent from client devices associated with market participants, or their representatives, e.g., trade order messages, etc., to an electronic trading or market system. For example, a market participant may submit an electronic message to the electronic trading system that includes an associated specific action to be undertaken by the electronic trading system, such as entering a new trade order into the market or modifying an existing order in the market. In one embodiment, if a participant wishes to modify a previously sent request, e.g., a prior order which has not yet been processed or traded, they may send a request message comprising a request to modify the prior request. In one exemplary embodiment, the incoming request itself, e.g., the inbound order entry, may be referred to as an iLink message. iLink is a bidirectional communications/message protocol/message format implemented by the Chicago Mercantile Exchange Inc.

Financial messages communicated from the electronic trading system, referred to as "outbound" messages, may include messages responsive to inbound messages, such as confirmation messages, or other messages such as market update messages, quote messages, and the like. Outbound messages may be disseminated via data feeds.

Financial messages may further be categorized as having or reflecting an impact on a market or electronic marketplace, also referred to as an "order book" or "book," for a traded product, such as a prevailing price therefore, number of resting orders at various price levels and quantities thereof, etc., or not having or reflecting an impact on a market or a subset or portion thereof. In one embodiment, an electronic order book may be understood to be an electronic collection of the outstanding or resting orders for a financial instrument.

For example, a request to place a trade may result in a response indicative of the trade either being matched with, or being rested on an order book to await, a suitable counter-order. This response may include a message directed solely to the trader who submitted the order to acknowledge receipt of the order and report whether it was matched, and the extent thereto, or rested. The response may further include a message to all market participants reporting a change in the order book due to the order. This response may take the form of a report of the specific change to the order book, e.g., an order for quantity X at price Y was added to the book (referred to, in one embodiment, as a Market By Order message), or may simply report the result, e.g., price level Y now has orders for a total quantity of Z (where Z is the sum of the previous resting quantity plus quantity X of the new order). In some cases, requests may elicit a non-impacting response, such as temporally proximate to the receipt of the request, and then cause a separate market-impact reflecting response at a later time. For example, a stop order, fill or kill order (FOK), also known as an immediate or cancel order, or other conditional request may not have an immediate market impacting effect, if at all, until the requisite conditions are met.

An acknowledgement or confirmation of receipt, e.g., a non-market impacting communication, may be sent to the trader simply confirming that the order was received. Upon the conditions being met and a market impacting result thereof occurring, a market-impacting message may be transmitted as described herein both directly back to the submitting market participant and to all market participants (in a Market By Price "MBP" e.g., Aggregated By Value ("ABV") book, or Market By Order "MBO", e.g., Per Order ("PO") book format). It should be appreciated that additional conditions may be specified, such as a time or price limit, which may cause the order to be dropped or otherwise canceled and that such an event may result in another non-market-impacting communication instead. In some implementations, market impacting communications may be communicated separately from non-market impacting communications, such as via a separate communications channel or feed.

For additional details and descriptions of different market data feeds, see U.S. Patent Application Publication No. 2017/0331774 A1, filed on May 16, 2016, entitled "Systems and Methods for Consolidating Multiple Feed Data", assigned to the assignee of the present application, the entirety of which is incorporated by reference herein and relied upon.

CLEARING HOUSE

The clearing house of an exchange clears, settles and guarantees matched transactions in contracts occurring through the facilities of the exchange. In addition, the clearing house establishes and monitors financial requirements for clearing members and conveys certain clearing privileges in conjunction with the relevant exchange markets.

The clearing house establishes clearing level performance bonds (margins) for all products of the exchange and establishes minimum performance bond requirements for customers of such products. A performance bond, also referred to as a margin requirement, corresponds with the funds that must be deposited by a customer with his or her broker, by a broker with a clearing member or by a clearing member with the clearing house, for the purpose of insuring the broker or clearing house against loss on open futures or options contracts. This is not a part payment on a purchase. The performance bond helps to ensure the financial integrity of brokers, clearing members and the exchange as a whole. The performance bond refers to the minimum dollar deposit required by the clearing house from clearing members in accordance with their positions. Maintenance, or maintenance margin, refers to a sum, usually smaller than the initial performance bond, which must remain on deposit in the customer's account for any position at all times. The initial margin is the total amount of margin per contract required by the broker when a futures position is opened. A drop in funds below this level requires a deposit back to the initial margin levels, i.e., a performance bond call. If a customer's equity in any futures position drops to or under the maintenance level because of adverse price action, the broker must issue a performance bond/margin call to restore the customer's equity. A performance bond call, also referred to as a margin call, is a demand for additional funds to bring the customer's account back up to the initial performance bond level whenever adverse price movements cause the account to go below the maintenance.

The exchange derives its financial stability in large part by removing debt obligations among market participants as they occur. This is accomplished by determining a settlement price at the close of the market each day for each contract and marking all open positions to that price, referred to as "mark to market." Every contract is debited or credited based on that trading session's gains or losses. As prices move for or against a position, funds flow into and out of the trading account. In the case of the CME, each business day by 6:40 a.m. Chicago time, based on the mark-to-the-market of all open positions to the previous trading day's settlement price, the clearing house pays to or collects cash from each clearing member. This cash flow, known as settlement variation, is performed by CME's settlement banks based on instructions issued by the clearing house. All payments to and collections from clearing members are made in "same-day" funds. In addition to the 6:40 a.m. settlement, a daily intra-day mark-to-the market of all open positions, including trades executed during the overnight GLOBEX®, the CME's electronic trading systems, trading session and the current day's trades matched before 11:15 a.m., is performed using current prices. The resulting cash payments are made intra-day for same day value. In times of extreme price volatility, the clearing house has the authority to perform additional intra-day mark-to-the-market calculations on open positions and to call for immediate payment of settlement variation. CME's mark-to-the-market settlement system differs from the settlement systems implemented by many other financial markets, including the interbank, Treasury securities, over-the-counter foreign exchange and debt, options, and equities markets, where participants regularly assume credit exposure to each other. In those markets, the failure of one participant can have a ripple effect on the solvency of the other participants. Conversely, CME's mark-to-the-market system does not allow losses to accumulate over time or allow a market participant the opportunity to defer losses associated with market positions.

While the disclosed embodiments may be described in reference to the CME, it should be appreciated that these embodiments are applicable to any exchange. Such other exchanges may include a clearing house that, like the CME clearing house, clears, settles and guarantees all matched transactions in contracts of the exchange occurring through its facilities. In addition, such clearing houses establish and monitor financial requirements for clearing members and convey certain clearing privileges in conjunction with the relevant exchange markets.

The disclosed embodiments are also not limited to uses by a clearing house or exchange for purposes of enforcing a performance bond or margin requirement. For example, a market participant may use the disclosed embodiments in a simulation or other analysis of a portfolio. In such cases, the settlement price may be useful as an indication of a value at risk and/or cash flow obligation rather than a performance bond. The disclosed embodiments may also be used by market participants or other entities to forecast or predict the effects of a prospective position on the margin requirement of the market participant.

TRADING ENVIRONMENT

The embodiments may be described in terms of a distributed computing system. The particular examples identify a specific set of components useful in a futures and options exchange. However, many of the components and inventive features are readily adapted to other electronic trading environments. The specific examples described herein may teach specific protocols and/or interfaces, although it should be understood that the principals involved may be extended to, or applied in, other protocols and interfaces.

It should be appreciated that the plurality of entities utilizing or involved with the disclosed embodiments, e.g., the market participants, may be referred to by other nomenclature reflecting the role that the particular entity is performing with respect to the disclosed embodiments and that a given entity may perform more than one role depending upon the implementation and the nature of the particular transaction being undertaken, as well as the entity's contractual and/or legal relationship with another market participant and/or the exchange.

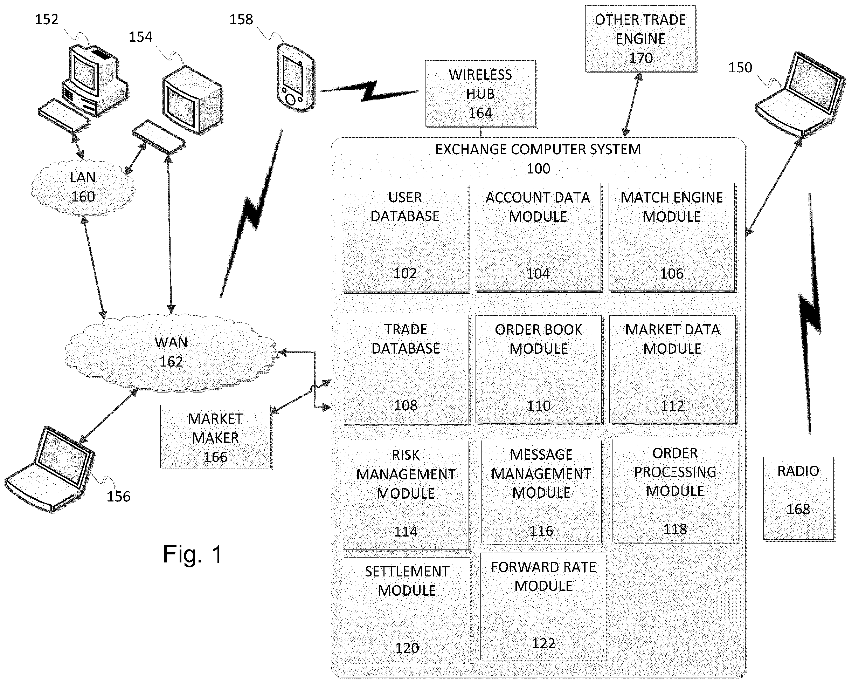

An exemplary trading network environment for implementing trading systems and methods is shown in Figure 1. An exchange computer system 100 receives messages that include orders and transmits market data related to orders and trades to users, such as via wide area network 162 and/or local area network 160 and computer devices 150, 152, 154, 156 and 158, as described herein, coupled with the exchange computer system 100.

Herein, the phrase "coupled with" is defined to mean directly connected to or indirectly connected through one or more intermediate components. Such intermediate components may include both hardware and software based components. Further, to clarify the use in the pending claims and to hereby provide notice to the public, the phrases "at least one of <A>, <B>, ... and <N>" or "at least one of <A>, <B>, ... <N>, or combinations thereof" are defined by the Applicant in the broadest sense, superseding any other implied definitions herebefore or hereinafter unless expressly asserted by the Applicant to the contrary, to mean one or more elements selected from the group comprising A, B, ... and N, that is to say, any combination of one or more of the elements A, B, ... or N including any one element alone or in combination with one or more of the other elements which may also include, in combination, additional elements not listed.

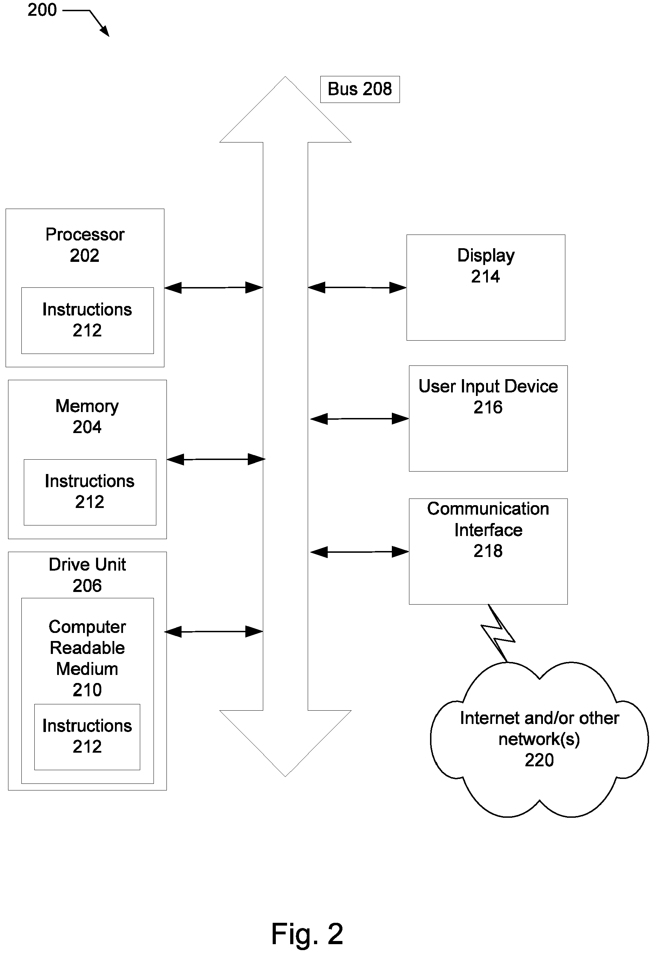

The exchange computer system 100 may be implemented with one or more mainframe, desktop or other computers, such as the example computer 200 described herein with respect to Figure 2.

A user database 102 may be provided which includes information identifying traders and other users of exchange computer system 100, such as account numbers or identifiers, user names and passwords. An account data module 104 may be provided which may process account information that may be used during trades.

A match engine module 106 may be included to match bid and offer prices and may be implemented with software that executes one or more algorithms for matching bids and offers. A trade database 108 may be included to store information identifying trades and descriptions of trades. In particular, a trade database may store information identifying the time that a trade took place and the contract price. An order book module 110 may be included to compute or otherwise determine current bid and offer prices, e.g., in a continuous auction market, or also operate as an order accumulation buffer for a batch auction market.

A market data module 112 may be included to collect market data and prepare the data for transmission to users.

A risk management module 114 may be included to compute and determine a user's risk utilization in relation to the user's defined risk thresholds. The risk management module 114 may also be configured to determine risk assessments or exposure levels in connection with positions held by a market participant. The risk management module 114 may be configured to administer, manage or maintain one or more margining mechanisms implemented by the exchange computer system 100. Such administration, management or maintenance may include managing a number of database records reflective of margin accounts of the market participants. In some embodiments, the risk management module 114 implements one or more aspects of the disclosed embodiments, including, for instance, principal component analysis (PCA) based margining, in connection with interest rate swap (IRS) portfolios, as described herein.

A message management module 116 may be included to, among other things, receive, and extract orders from, electronic data transaction request messages. The message management module 116 may define a point of ingress into the exchange computer system 100 where messages are ordered and considered to be received by the system. This may be considered a point of determinism in the exchange computer system 100 that defines the earliest point where the system can ascribe an order of receipt to arriving messages. The point of determinism may or may not be at or near the demarcation point between the exchange computer system 100 and a public/internet network infrastructure. The message management module 116 processes messages by interpreting the contents of a message based on the message transmit protocol, such as the transmission control protocol ("TCP"), to provide the content of the message for further processing by the exchange computer system.

The message management module 116 may also be configured to detect characteristics of an order for a transaction to be undertaken in an electronic marketplace. For example, the message management module 116 may identify and extract order content such as a price, product, volume, and associated market participant for an order. The message management module 116 may also identify and extract data indicating an action to be executed by the exchange computer system 100 with respect to the extracted order. For example, the message management module 116 may determine the transaction type of the transaction requested in a given message. A message may include an instruction to perform a type of transaction. The transaction type may be, in one embodiment, a request/offer/order to either buy or sell a specified quantity or units of a financial instrument at a specified price or value. The message management module 116 may also identify and extract other order information and other actions associated with the extracted order. All extracted order characteristics, other information, and associated actions extracted from a message for an order may be collectively considered an order as described and referenced herein.

Order or message characteristics may include, for example, the state of the system after a message is received, arrival time (e.g., the time a message arrives at the MSG or Market Segment Gateway), message type (e.g., new, modify, cancel), and the number of matches generated by a message. Order or message characteristics may also include market participant side (e.g., buyer or seller) or time in force (e.g., a good until end of day order that is good for the full trading day, a good until canceled ordered that rests on the order book until matched, or a fill or kill order that is canceled if not filled immediately, or a fill and kill order (FOK) that is filled to the maximum amount possible, and any remaining or unfilled/unsatisfied quantity is not stored on the books or allowed to rest).

An order processing module 118 may be included to decompose delta-based, spread instrument, bulk and other types of composite orders for processing by the order book module 110 and/or the match engine module 106. The order processing module 118 may also be used to implement one or more procedures related to clearing an order. The order may be communicated from the message management module 118 to the order processing module 118. The order processing module 118 may be configured to interpret the communicated order, and manage the order characteristics, other information, and associated actions as they are processed through an order book module 110 and eventually transacted on an electronic market. For example, the order processing module 118 may store the order characteristics and other content and execute the associated actions. In an embodiment, the order processing module may execute an associated action of placing the order into an order book for an electronic trading system managed by the order book module 110. In an embodiment, placing an order into an order book and/or into an electronic trading system may be considered a primary action for an order. The order processing module 118 may be configured in various arrangements, and may be configured as part of the order book module 110, part of the message management module 118, or as an independent functioning module.

As an intermediary to electronic trading transactions, the exchange bears a certain amount of risk in each transaction that takes place. To that end, the clearing house implements risk management mechanisms to protect the exchange. One or more of the modules of the exchange computer system 100 may be configured to determine settlement prices for constituent contracts, such as deferred month contracts, of spread instruments, such as for example, settlement module 120. A settlement module 120 (or settlement processor or other payment processor) may be included to provide one or more functions related to settling or otherwise administering transactions cleared by the exchange. Settlement module 120 of the exchange computer system 100 may implement one or more settlement price determination techniques. Settlement-related functions need not be limited to actions or events occurring at the end of a contract term. For instance, in some embodiments, settlement-related functions may include or involve daily or other mark to market settlements for margining purposes. In some cases, the settlement module 120 may be configured to communicate with the trade database 108 (or the memory(ies) on which the trade database 108 is stored) and/or to determine a payment amount based on a spot price, the price of the futures contract or other financial instrument, or other price data, at various times. The determination may be made at one or more points in time during the term of the financial instrument in connection with a margining mechanism. For example, the settlement module 120 may be used to determine a mark to market amount on a daily basis during the term of the financial instrument. Such determinations may also be made on a settlement date for the financial instrument for the purposes of final settlement.

In some embodiments, the settlement module 120 may be integrated to any desired extent with one or more of the other modules or processors of the exchange computer system 100. For example, the settlement module 120 and the risk management module 114 may be integrated to any desired extent. In some cases, one or more margining procedures or other aspects of the margining mechanism(s) may be implemented by the settlement module 120.

A forward rate module 122 may be coupled with the match engine module 106 and/or order book module 110, or any other module necessary to provide the requisite data as described below. As will be discussed in more detail below, the forward rate module 122 monitors the trading of particular futures contracts and, based thereon, generates forward interest rates for select time periods. These forward interest rates may be output one or more market participants and/or communicated to other modules of the exchange computer system 100 to be utilized in the calculation of other data, such as values of positions in interest rate instrument products held by market participants, e.g. stored in the user database, such as for computation of risk of loss by the risk management module 114.

The forward rate module 122 may be implemented by a processor and a memory, such as the processor 202, memory 204 described in detail above with reference to Figure 2, where in the memory is operative to store computer executable instructions, such as in the form of one or more logic components, that when executed by the processor, cause the processor to operate as described herein. Alternatively, the computer executable instructions or logic components described herein may be implemented as one or more separate components, such as on an FPGA which may include a memory or reconfigurable component to store logic and a processing component to execute the stored logic.

In one embodiment, the forward rate module 122 is coupled with the matching engine 106 of the exchange computer system of the electronic trading system, wherein, as described above, the matching engine 106 includes an order book database in which previously received but not fully satisfied data transaction requests, e.g. orders to trade, are stored.

One or more of the above-described modules of the exchange computer system 100 may be used to gather or obtain data to support the settlement price determination, as well as a subsequent margin requirement determination. For example, the order book module 110 and/or the market data module 112 may be used to receive, access, or otherwise obtain market data, such as bid-offer values of orders currently on the order books. The trade database 108 may be used to receive, access, or otherwise obtain trade data indicative of the prices and volumes of trades that were recently executed in a number of markets. In some cases, transaction data (and/or bid/ask data) may be gathered or obtained from open outcry pits and/or other sources and incorporated into the trade and market data from the electronic trading system(s).

It should be appreciated that concurrent processing limits may be defined by or imposed separately or in combination on one or more of the trading system components, including the user database 102, the account data module 104, the match engine module 106, the trade database 108, the order book module 110, the market data module 112, the risk management module 114, the message management module 116, the order processing module 118, the settlement module 120, the forward rate module 122, or other component of the exchange computer system 100.

The disclosed mechanisms may be implemented at any logical and/or physical point(s), or combinations thereof, at which the relevant information/data (e.g., message traffic and responses thereto) may be monitored or flows or is otherwise accessible or measurable, including one or more gateway devices, modems, the computers or terminals of one or more market participants, e.g., client computers, etc.

One skilled in the art will appreciate that one or more modules described herein may be implemented using, among other things, a tangible computer-readable medium comprising computer-executable instructions (e.g., executable software code). Alternatively, modules may be implemented as software code, firmware code, specifically configured hardware or processors, and/or a combination of the aforementioned. For example, the modules may be embodied as part of an exchange 100 for financial instruments. It should be appreciated the disclosed embodiments may be implemented as a different or separate module of the exchange computer system 100, or a separate computer system coupled with the exchange computer system 100 so as to have access to margin account record, pricing, and/or other data. As described herein, the disclosed embodiments may be implemented as a centrally accessible system or as a distributed system, e.g., where some of the disclosed functions are performed by the computer systems of the market participants.

The trading network environment shown in Figure 1 includes exemplary computer devices 150, 152, 154, 156 and 158 which depict different exemplary methods or media by which a computer device may be coupled with the exchange computer system 100 or by which a user may communicate, e.g., send and receive, trade or other information therewith. It should be appreciated that the types of computer devices deployed by traders and the methods and media by which they communicate with the exchange computer system 100 is implementation dependent and may vary and that not all of the depicted computer devices and/or means/media of communication may be used and that other computer devices and/or means/media of communications, now available or later developed may be used. Each computer device, which may comprise a computer 200 described in more detail with respect to Figure 2, may include a central processor, specifically configured or otherwise, that controls the overall operation of the computer and a system bus that connects the central processor to one or more conventional components, such as a network card or modem. Each computer device may also include a variety of interface units and drives for reading and writing data or files and communicating with other computer devices and with the exchange computer system 100. Depending on the type of computer device, a user can interact with the computer with a keyboard, pointing device, microphone, pen device or other input device now available or later developed.

An exemplary computer device 150 is shown directly connected to exchange computer system 100, such as via a T1 line, a common local area network (LAN) or other wired and/or wireless medium for connecting computer devices, such as the network 220 shown in Figure 2 and described with respect thereto. The exemplary computer device 150 is further shown connected to a radio 168. The user of radio 168, which may include a cellular telephone, smart phone, or other wireless proprietary and/or non-proprietary device, may be a trader or exchange employee. The radio user may transmit orders or other information to the exemplary computer device 150 or a user thereof. The user of the exemplary computer device 150, or the exemplary computer device 150 alone and/or autonomously, may then transmit the trade or other information to the exchange computer system 100.

Exemplary computer devices 152 and 154 are coupled with a local area network ("LAN") 160 which may be configured in one or more of the well-known LAN topologies, e.g., star, daisy chain, etc., and may use a variety of different protocols, such as Ethernet, TCP/IP, etc. The exemplary computer devices 152 and 154 may communicate with each other and with other computer and other devices which are coupled with the LAN 160. Computer and other devices may be coupled with the LAN 160 via twisted pair wires, coaxial cable, fiber optics or other wired or wireless media. As shown in Figure 1, an exemplary wireless personal digital assistant device ("PDA") 158, such as a mobile telephone, tablet based compute device, or other wireless device, may communicate with the LAN 160 and/or the Internet 162 via radio waves, such as via WiFi, Bluetooth and/or a cellular telephone based data communications protocol. PDA 158 may also communicate with exchange computer system 100 via a conventional wireless hub 164.

Figure 1 also shows the LAN 160 coupled with a wide area network ("WAN") 162 which may be comprised of one or more public or private wired or wireless networks. In one embodiment, the WAN 162 includes the Internet 162. The LAN 160 may include a router to connect LAN 160 to the Internet 162. Exemplary computer device 156 is shown coupled directly to the Internet 162, such as via a modem, DSL line, satellite dish or any other device for connecting a computer device to the Internet 162 via a service provider therefore as is known. LAN 160 and/or WAN 162 may be the same as the network 220 shown in Figure 2 and described with respect thereto.

Users of the exchange computer system 100 may include one or more market makers 166 which may maintain a market by providing constant bid and offer prices for a derivative or security to the exchange computer system 100, such as via one of the exemplary computer devices depicted. The exchange computer system 100 may also exchange information with other match or trade engines, such as trade engine 170. One skilled in the art will appreciate that numerous additional computers and systems may be coupled to exchange computer system 100. Such computers and systems may include clearing, regulatory and fee systems.

The operations of computer devices and systems shown in Figure 1 may be controlled by computer-executable instructions stored on a non-transitory computer-readable medium. For example, the exemplary computer device 152 may store computer-executable instructions for receiving order information from a user, transmitting that order information to exchange computer system 100 in electronic messages, extracting the order information from the electronic messages, executing actions relating to the messages, and/or calculating values from characteristics of the extracted order to facilitate matching orders and executing trades. In another example, the exemplary computer device 154 may include computer-executable instructions for receiving market data from exchange computer system 100 and displaying that information to a user.

Numerous additional servers, computers, handheld devices, personal digital assistants, telephones and other devices may also be connected to exchange computer system 100. Moreover, one skilled in the art will appreciate that the topology shown in Figure 1 is merely an example and that the components shown in Figure 1 may include other components not shown and be connected by numerous alternative topologies.

Referring now to Figure 2, an illustrative embodiment of a general computer system 200 is shown. The computer system 200 can include a set of instructions that can be executed to cause the computer system 200 to perform any one or more of the methods or computer based functions disclosed herein. The computer system 200 may operate as a standalone device or may be connected, e.g., using a network, to other computer systems or peripheral devices. Any of the components discussed herein, such as processor 202, may be a computer system 200 or a component in the computer system 200. The computer system 200 may be specifically configured to implement a match engine, margin processing, payment or clearing function on behalf of an exchange, such as the Chicago Mercantile Exchange, of which the disclosed embodiments are a component thereof.

In a networked deployment, the computer system 200 may operate in the capacity of a server or as a client user computer in a client-server user network environment, or as a peer computer system in a peer-to-peer (or distributed) network environment. The computer system 200 can also be implemented as or incorporated into various devices, such as a personal computer (PC), a tablet PC, a set-top box (STB), a personal digital assistant (PDA), a mobile device, a palmtop computer, a laptop computer, a desktop computer, a communications device, a wireless telephone, a landline telephone, a control system, a camera, a scanner, a facsimile machine, a printer, a pager, a personal trusted device, a web appliance, a network router, switch or bridge, or any other machine capable of executing a set of instructions (sequential or otherwise) that specify actions to be taken by that machine. In a particular embodiment, the computer system 200 can be implemented using electronic devices that provide voice, video or data communication. Further, while a single computer system 200 is illustrated, the term "system" shall also be taken to include any collection of systems or sub-systems that individually or jointly execute a set, or multiple sets, of instructions to perform one or more computer functions.

As illustrated in Figure 2, the computer system 200 may include a processor 202, e.g., a central processing unit (CPU), a graphics processing unit (GPU), or both. The processor 202 may be a component in a variety of systems. For example, the processor 202 may be part of a standard personal computer or a workstation. The processor 202 may be one or more general processors, digital signal processors, specifically configured processors, application specific integrated circuits, field programmable gate arrays, servers, networks, digital circuits, analog circuits, combinations thereof, or other now known or later developed devices for analyzing and processing data. The processor 202 may implement a software program, such as code generated manually (i.e., programmed).

The computer system 200 may include a memory 204 that can communicate via a bus 208. The memory 204 may be a main memory, a static memory, or a dynamic memory. The memory 204 may include, but is not limited to, computer readable storage media such as various types of volatile and non-volatile storage media, including but not limited to random access memory, read-only memory, programmable read-only memory, electrically programmable read-only memory, electrically erasable read-only memory, flash memory, magnetic tape or disk, optical media and the like. In one embodiment, the memory 204 includes a cache or random access memory for the processor 202. In alternative embodiments, the memory 204 is separate from the processor 202, such as a cache memory of a processor, the system memory, or other memory. The memory 204 may be an external storage device or database for storing data. Examples include a hard drive, compact disc ("CD"), digital video disc ("DVD"), memory card, memory stick, floppy disc, universal serial bus ("USB") memory device, or any other device operative to store data. The memory 204 is operable to store instructions executable by the processor 202. The functions, acts or tasks illustrated in the figures or described herein may be performed by the programmed processor 202 executing the instructions 212 stored in the memory 204. The functions, acts or tasks are independent of the particular type of instructions set, storage media, processor or processing strategy and may be performed by software, hardware, integrated circuits, firm-ware, micro-code and the like, operating alone or in combination. Likewise, processing strategies may include multiprocessing, multitasking, parallel processing and the like.

As shown, the computer system 200 may further include a display unit 214, such as a liquid crystal display (LCD), an organic light emitting diode (OLED), a flat panel display, a solid state display, a cathode ray tube (CRT), a projector, a printer or other now known or later developed display device for outputting determined information. The display 214 may act as an interface for the user to see the functioning of the processor 202, or specifically as an interface with the software stored in the memory 204 or in the drive unit 206.

Additionally, the computer system 200 may include an input device 216 configured to allow a user to interact with any of the components of system 200. The input device 216 may be a number pad, a keyboard, or a cursor control device, such as a mouse, or a joystick, touch screen display, remote control or any other device operative to interact with the system 200.

In a particular embodiment, as depicted in Figure 2, the computer system 200 may also include a disk or optical drive unit 206. The disk drive unit 206 may include a computer-readable medium 210 in which one or more sets of instructions 212, e.g., software, can be embedded. Further, the instructions 212 may embody one or more of the methods or logic as described herein. In a particular embodiment, the instructions 212 may reside completely, or at least partially, within the memory 204 and/or within the processor 202 during execution by the computer system 200. The memory 204 and the processor 202 also may include computer-readable media as discussed herein.

The present disclosure contemplates a computer-readable medium that includes instructions 212 or receives and executes instructions 212 responsive to a propagated signal, so that a device connected to a network 220 can communicate voice, video, audio, images or any other data over the network 220. Further, the instructions 212 may be transmitted or received over the network 220 via a communication interface 218. The communication interface 218 may be a part of the processor 202 or may be a separate component. The communication interface 218 may be created in software or may be a physical connection in hardware. The communication interface 218 is configured to connect with a network 220, external media, the display 214, or any other components in system 200, or combinations thereof. The connection with the network 220 may be a physical connection, such as a wired Ethernet connection or may be established wirelessly. Likewise, the additional connections with other components of the system 200 may be physical connections or may be established wirelessly.

The network 220 may include wired networks, wireless networks, or combinations thereof. The wireless network may be a cellular telephone network, an 802.11, 802.16, 802.20, or WiMax network. Further, the network 220 may be a public network, such as the Internet, a private network, such as an intranet, or combinations thereof, and may utilize a variety of networking protocols now available or later developed including, but not limited to, TCP/IP based networking protocols.

Embodiments of the subject matter and the functional operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented as one or more computer program products, i.e., one or more modules of computer program instructions encoded on a computer readable medium for execution by, or to control the operation of, data processing apparatus. While the computer-readable medium is shown to be a single medium, the term "computer-readable medium" includes a single medium or multiple media, such as a centralized or distributed database, and/or associated caches and servers that store one or more sets of instructions. The term "computer-readable medium" shall also include any medium that is capable of storing, encoding or carrying a set of instructions for execution by a processor or that cause a computer system to perform any one or more of the methods or operations disclosed herein. The computer readable medium can be a machine-readable storage device, a machine-readable storage substrate, a memory device, or a combination of one or more of them. The term "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them.

In a particular non-limiting, exemplary embodiment, the computer-readable medium can include a solid-state memory such as a memory card or other package that houses one or more non-volatile read-only memories. Further, the computer-readable medium can be a random access memory or other volatile rewritable memory. Additionally, the computer-readable medium can include a magnetooptical or optical medium, such as a disk or tapes or other storage device to capture carrier wave signals such as a signal communicated over a transmission medium. A digital file attachment to an e-mail or other self-contained information archive or set of archives may be considered a distribution medium that is a tangible storage medium. Accordingly, the disclosure is considered to include any one or more of a computer-readable medium or a distribution medium and other equivalents and successor media, in which data or instructions may be stored.

In an alternative embodiment, dedicated or otherwise specifically configured hardware implementations, such as application specific integrated circuits, programmable logic arrays and other hardware devices, can be constructed to implement one or more of the methods described herein. Applications that may include the apparatus and systems of various embodiments can broadly include a variety of electronic and computer systems. One or more embodiments described herein may implement functions using two or more specific interconnected hardware modules or devices with related control and data signals that can be communicated between and through the modules, or as portions of an application-specific integrated circuit. Accordingly, the present system encompasses software, firmware, and hardware implementations.

In accordance with various embodiments of the present disclosure, the methods described herein may be implemented by software programs executable by a computer system. Further, in an exemplary, non-limited embodiment, implementations can include distributed processing, component/object distributed processing, and parallel processing. Alternatively, virtual computer system processing can be constructed to implement one or more of the methods or functionality as described herein.

Although the present specification describes components and functions that may be implemented in particular embodiments with reference to particular standards and protocols, the invention is not limited to such standards and protocols. For example, standards for Internet and other packet switched network transmission (e.g., TCP/IP, UDP/IP, HTML, HTTP, HTTPS) represent examples of the state of the art. Such standards are periodically superseded by faster or more efficient equivalents having essentially the same functions. Accordingly, replacement standards and protocols having the same or similar functions as those disclosed herein are considered equivalents thereof.

A computer program (also known as a program, software, software application, script, or code) can be written in any form of programming language, including compiled or interpreted languages, and it can be deployed in any form, including as a standalone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and anyone or more processors of any kind of digital computer. Generally, a processor will receive instructions and data from a read only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio player, a Global Positioning System (GPS) receiver, to name just a few. Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

As used herein, the terms "microprocessor" or "general-purpose processor" ("GPP") may refer to a hardware device that fetches instructions and data from a memory or storage device and executes those instructions (for example, an Intel Xeon processor or an AMD Opteron processor) to then, for example, process the data in accordance therewith. The term "reconfigurable logic" may refer to any logic technology whose form and function can be significantly altered (i.e., reconfigured) in the field post-manufacture as opposed to a microprocessor, whose function can change post-manufacture, e.g. via computer executable software code, but whose form, e.g. the arrangement/layout and interconnection of logical structures, is fixed at manufacture. The term "software" may refer to data processing functionality that is deployed on a GPP. The term "firmware" may refer to data processing functionality that is deployed on reconfigurable logic. One example of a reconfigurable logic is a field programmable gate array ("FPGA") which is a reconfigurable integrated circuit. An FPGA may contain programmable logic components called "logic blocks", and a hierarchy of reconfigurable interconnects that allow the blocks to be "wired together", somewhat like many (changeable) logic gates that can be inter-wired in (many) different configurations. Logic blocks may be configured to perform complex combinatorial functions, or merely simple logic gates like AND, OR, NOT and XOR. An FPGA may further include memory elements, which may be simple flip-flops or more complete blocks of memory.

To provide for interaction with a user, embodiments of the subject matter described in this specification can be implemented on a device having a display, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well. Feedback provided to the user can be any form of sensory feedback, e.g., visual feedback, auditory feedback, or tactile feedback. Input from the user can be received in any form, including acoustic, speech, or tactile input.

Embodiments of the subject matter described in this specification can be implemented in a computing system that includes a back end component, e.g., a data server, or that includes a middleware component, e.g., an application server, or that includes a front end component, e.g., a client computer having a graphical user interface or a Web browser through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

It should be appreciated that the disclosed embodiments may be applicable to other types of messages depending upon the implementation. Further, the messages may comprise one or more data packets, datagrams or other collection of data formatted, arranged configured and/or packaged in a particular one or more protocols, e.g., the FIX protocol, TCP/IP, Ethernet, etc., suitable for transmission via a network 214 as was described, such as the message format and/or protocols described in U.S. Patent No. 7,831,491 and U.S. Patent Publication No. 2005/0096999 A1, both of which are incorporated by reference herein in their entireties and relied upon. Further, the disclosed message management system may be implemented using an open message standard implementation, such as FIX, FIX Binary, FIX/FAST, or by an exchange-provided API.

The embodiments described herein utilize trade related electronic messages such as mass quote messages, individual order messages, modification messages, cancellation messages, etc., so as to enact trading activity in an electronic market. The trading entity and/or market participant may have one or multiple trading terminals associated with the session. Furthermore, the financial instruments may be financial derivative products. Derivative products may include futures contracts, options on futures contracts, futures contracts that are functions of or related to other futures contracts, swaps, swaptions, or other financial instruments that have their price related to or derived from an underlying product, security, commodity, equity, index, or interest rate product. In one embodiment, the orders are for options contracts that belong to a common option class. Orders may also be for baskets, quadrants, other combinations of financial instruments, etc. The option contracts may have a plurality of strike prices and/or comprise put and call contracts. A mass quote message may be received at an exchange. As used herein, an exchange computing system 100 includes a place or system that receives and/or executes orders.

In an embodiment, a plurality of electronic messages is received from the network. The plurality of electronic messages may be received at a network interface for the electronic trading system. The plurality of electronic messages may be sent from market participants. The plurality of messages may include order characteristics and be associated with actions to be executed with respect to an order that may be extracted from the order characteristics. The action may involve any action as associated with transacting the order in an electronic trading system. The actions may involve placing the orders within a particular market and/or order book of a market in the electronic trading system.

In an embodiment, an incoming transaction may be received. The incoming transaction may be from, and therefore associated with, a market participant of an electronic market managed by an electronic trading system. The transaction may involve an order as extracted from a received message, and may have an associated action. The actions may involve placing an order to buy or sell a financial product in the electronic market, or modifying or deleting such an order. In an embodiment, the financial product may be based on an associated financial instrument which the electronic market is established to trade.

In an embodiment, the action associated with the transaction is determined. For example, it may be determined whether the incoming transaction comprises an order to buy or sell a quantity of the associated financial instrument or an order to modify or cancel an existing order in the electronic market. Orders to buy or sell and orders to modify or cancel may be acted upon differently by the electronic market. For example, data indicative of different characteristics of the types of orders may be stored.

In an embodiment, data relating to the received transaction is stored. The data may be stored in any device, or using any technique, operable to store and provide recovery of data. For example, a memory 204 or computer readable medium 210, may be used to store data, as is described with respect to Figure 2 in further detail herein. Data may be stored relating received transactions for a period of time, indefinitely, or for a rolling most recent time period such that the stored data is indicative of the market participant's recent activity in the electronic market.

If and/or when a transaction is determined to be an order to modify or cancel a previously placed, or existing, order, data indicative of these actions may be stored. For example, data indicative of a running count of a number or frequency of the receipt of modify or cancel orders from the market participant may be stored. A number may be a total number of modify or cancel orders received from the market participant, or a number of modify or cancel orders received from the market participant over a specified time. A frequency may be a time based frequency, as in a number of cancel or modify orders per unit of time, or a number of cancel or modify orders received from the market participant as a percentage of total transactions received from the participant, which may or may not be limited by a specified length of time.

If and/or when a transaction is determined to be an order to buy or sell a financial product, or financial instrument, other indicative data may be stored. For example, data indicative of quantity and associated price of the order to buy or sell may be stored.

Data indicative of attempts to match incoming orders may also be stored. The data may be stored in any device, or using any technique, operable to store and provide recovery of data. For example, a memory 204 or computer readable medium 210, may be used to store data, as is described with respect to Figure 2. The acts of the process as described herein may also be repeated. As such, data for multiple received transactions for multiple market participants may be stored and used as describe herein.

The order processing module 118 may also store data indicative of characteristics of the extracted orders. For example, the order processing module may store data indicative of orders having an associated modify or cancel action, such as by recording a count of the number of such orders associated with particular market participants. The order processing module may also store data indicative of quantities and associated prices of orders to buy or sell a product placed in the market order book 110, as associated with particular market participants.

Also, the order processing module 118 may be configured to calculate and associate with particular orders a value indicative of an associated market participant's market activity quality, which is a value indicative of whether the market participant's market activity increases or tends to increase liquidity of a market. This value may be determined based on the price of the particular order, previously stored quantities of orders from the associated market participant, the previously stored data indicative of previously received orders to modify or cancel as associated with the market participant, and previously stored data indicative of a result of the attempt to match previously received orders stored in association with the market participant. The order processing module 118 may determine or otherwise calculate scores indicative of the quality value based on these stored extracted order characteristics, such as an MQI as described herein.

Further, electronic trading systems may perform actions on orders placed from received messages based on various characteristics of the messages and/or market participants associated with the messages. These actions may include matching the orders either during a continuous auction process, or at the conclusion of a collection period during a batch auction process. The matching of orders may be by any technique.

The matching of orders may occur based on a priority indicated by the characteristics of orders and market participants associated with the orders. Orders having a higher priority may be matched before orders of a lower priority. Such priority may be determined using various techniques. For example, orders that were indicated by messages received earlier may receive a higher priority to match than orders that were indicated by messages received later. Also, scoring or grading of the characteristics may provide for priority determination. Data indicative of order matches may be stored by a match engine and/or an order processing module 118, and used for determining MQI scores of market participants.

EXAMPLE USERS

Generally, a market may involve market makers, such as market participants who consistently provide bids and/or offers at specific prices in a manner typically conducive to balancing risk, and market takers who may be willing to execute transactions at prevailing bids or offers may be characterized by more aggressive actions so as to maintain risk and/or exposure as a speculative investment strategy. From an alternate perspective, a market maker may be considered a market participant who places an order to sell at a price at which there is no previously or concurrently provided counter order. Similarly, a market taker may be considered a market participant who places an order to buy at a price at which there is a previously or concurrently provided counter order. A balanced and efficient market may involve both market makers and market takers, coexisting in a mutually beneficial basis. The mutual existence, when functioning properly, may facilitate liquidity in the market such that a market may exist with "tight" bid-ask spreads (e.g., small difference between bid and ask prices) and a "deep" volume from many currently provided orders such that large quantity orders may be executed without driving prices significantly higher or lower.

As such, both market participant types are useful in generating liquidity in a market, but specific characteristics of market activity taken by market participants may provide an indication of a particular market participant's effect on market liquidity. For example, a Market Quality Index ("MQI") of an order may be determined using the characteristics. An MQI may be considered a value indicating a likelihood that a particular order will improve or facilitate liquidity in a market. That is, the value may indicate a likelihood that the order will increase a probability that subsequent requests and transaction from other market participants will be satisfied. As such, an MQI may be determined based on a proximity of the entered price of an order to a midpoint of a current bid-ask price spread, a size of the entered order, a volume or quantity of previously filled orders of the market participant associated with the order, and/or a frequency of modifications to previous orders of the market participant associated with the order. In this way, an electronic trading system may function to assess and/or assign an MQI to received electronic messages to establish messages that have a higher value to the system, and thus the system may use computing resources more efficiently by expending resources to match orders of the higher value messages prior to expending resources of lower value messages.

While an MQI may be applied to any or all market participants, such an index may also be applied only to a subset thereof, such as large market participants, or market participants whose market activity as measured in terms of average daily message traffic over a limited historical time period exceeds a specified number. For example, a market participant generating more than 500, 1,000, or even 10,000 market messages per day may be considered a large market participant.

An exchange provides one or more markets for the purchase and sale of various types of products including financial instruments such as stocks, bonds, futures contracts, options, currency, cash, and other similar instruments. Agricultural products and commodities are also examples of products traded on such exchanges. A futures contract is a product that is a contract for the future delivery of another financial instrument such as a quantity of grains, metals, oils, bonds, currency, or cash. Generally, each exchange establishes a specification for each market provided thereby that defines at least the product traded in the market, minimum quantities that must be traded, and minimum changes in price (e.g., tick size). For some types of products (e.g., futures or options), the specification further defines a quantity of the underlying product represented by one unit (or lot) of the product, and delivery and expiration dates. As will be described, the exchange may further define the matching algorithm, or rules, by which incoming orders will be matched/allocated to resting orders.

MATCHING AND TRANSACTION PROCESSING

Market participants, e.g., traders, use software to send orders or messages to the trading platform. The order identifies the product, the quantity of the product the trader wishes to trade, a price at which the trader wishes to trade the product, and a direction of the order (i.e., whether the order is a bid, i.e., an offer to buy, or an ask, i.e., an offer to sell). It will be appreciated that there may be other order types or messages that traders can send including requests to modify or cancel a previously submitted order.

The exchange computer system monitors incoming orders received thereby and attempts to identify, i.e., match or allocate, as described herein, one or more previously received, but not yet matched, orders, i.e., limit orders to buy or sell a given quantity at a given price, referred to as "resting" orders, stored in an order book database, wherein each identified order is contra to the incoming order and has a favorable price relative to the incoming order. An incoming order may be an "aggressor" order, i.e., a market order to sell a given quantity at whatever may be the current resting bid order price(s) or a market order to buy a given quantity at whatever may be the current resting ask order price(s). An incoming order may be a "market making" order, i.e., a market order to buy or sell at a price for which there are currently no resting orders. In particular, if the incoming order is a bid, i.e., an offer to buy, then the identified order(s) will be an ask, i.e., an offer to sell, at a price that is identical to or higher than the bid price. Similarly, if the incoming order is an ask, i.e., an offer to sell, the identified order(s) will be a bid, i.e., an offer to buy, at a price that is identical to or lower than the offer price.

An exchange computing system may receive conditional orders or messages for a data object, where the order may include two prices or values: a reference value and a stop value. A conditional order may be configured so that when a product represented by the data object trades at the reference price, the stop order is activated at the stop value. For example, if the exchange computing system's order management module includes a stop order with a stop price of 5 and a limit price of 1 for a product, and a trade at 5 (i.e., the stop price of the stop order) occurs, then the exchange computing system attempts to trade at 1 (i.e., the limit price of the stop order). In other words, a stop order is a conditional order to trade (or execute) at the limit price that is triggered (or elected) when a trade at the stop price occurs.

Stop orders also rest on, or are maintained in, an order book to monitor for a trade at the stop price, which triggers an attempted trade at the limit price. In some embodiments, a triggered limit price for a stop order may be treated as an incoming order.

Upon identification (matching) of a contra order(s), a minimum of the quantities associated with the identified order and the incoming order is matched and that quantity of each of the identified and incoming orders become two halves of a matched trade that is sent to a clearing house. The exchange computer system considers each identified order in this manner until either all of the identified orders have been considered or all of the quantity associated with the incoming order has been matched, i.e., the order has been filled. If any quantity of the incoming order remains, an entry may be created in the order book database and information regarding the incoming order is recorded therein, i.e., a resting order is placed on the order book for the remaining quantity to await a subsequent incoming order counter thereto.

It should be appreciated that in electronic trading systems implemented via an exchange computing system, a trade price (or match value) may differ from (i.e., be better for the submitter, e.g., lower than a submitted buy price or higher than a submitted sell price) the limit price that is submitted, e.g., a price included in an incoming message, or a triggered limit price from a stop order.

As used herein, "better" than a reference value means lower than the reference value if the transaction is a purchase (or acquire) transaction, and higher than the reference value if the transaction is a sell transaction. Said another way, for purchase (or acquire) transactions, lower values are better, and for relinquish or sell transactions, higher values are better.

Traders access the markets on a trading platform using trading software that receives and displays at least a portion of the order book for a market, i.e., at least a portion of the currently resting orders, enables a trader to provide parameters for an order for the product traded in the market, and transmits the order to the exchange computer system. The trading software typically includes a graphical user interface to display at least a price and quantity of some of the entries in the order book associated with the market. The number of entries of the order book displayed is generally preconfigured by the trading software, limited by the exchange computer system, or customized by the user. Some graphical user interfaces display order books of multiple markets of one or more trading platforms. The trader may be an individual who trades on his/her behalf, a broker trading on behalf of another person or entity, a group, or an entity. Furthermore, the trader may be a system that automatically generates and submits orders.

If the exchange computer system identifies that an incoming market order may be filled by a combination of multiple resting orders, e.g., the resting order at the best price only partially fills the incoming order, the exchange computer system may allocate the remaining quantity of the incoming, i.e., that which was not filled by the resting order at the best price, among such identified orders in accordance with prioritization and allocation rules/algorithms, referred to as "allocation algorithms" or "matching algorithms," as, for example, may be defined in the specification of the particular financial product or defined by the exchange for multiple financial products. Similarly, if the exchange computer system identifies multiple orders contra to the incoming limit order and that have an identical price which is favorable to the price of the incoming order, i.e., the price is equal to or better, e.g., lower if the incoming order is a buy (or instruction to purchase, or instruction to acquire) or higher if the incoming order is a sell (or instruction to relinquish), than the price of the incoming order, the exchange computer system may allocate the quantity of the incoming order among such identified orders in accordance with the matching algorithms as, for example, may be defined in the specification of the particular financial product or defined by the exchange for multiple financial products.

An exchange responds to inputs, such as trader orders, cancellation, etc., in a manner as expected by the market participants, such as based on market data, e.g., prices, available counter-orders, etc., to provide an expected level of certainty that transactions will occur in a consistent and predictable manner and without unknown or unascertainable risks. Accordingly, the method by which incoming orders are matched with resting orders must be defined so that market participants have an expectation of what the result will be when they place an order or have resting orders and an incoming order is received, even if the expected result is, in fact, at least partially unpredictable due to some component of the process being random or arbitrary or due to market participants having imperfect or less than all information, e.g., unknown position of an order in an order book. Typically, the exchange defines the matching/allocation algorithm that will be used for a particular financial product, with or without input from the market participants. Once defined for a particular product, the matching/allocation algorithm is typically not altered, except in limited circumstance, such as to correct errors or improve operation, so as not to disrupt trader expectations. It will be appreciated that different products offered by a particular exchange may use different matching algorithms.

For example, a first-in/first-out (FIFO) matching algorithm, also referred to as a "Price Time" algorithm, considers each identified order sequentially in accordance with when the identified order was received. The quantity of the incoming order is matched to the quantity of the identified order at the best price received earliest, then quantities of the next earliest best price orders, and so on until the quantity of the incoming order is exhausted. Some product specifications define the use of a pro-rata matching algorithm, wherein a quantity of an incoming order is allocated to each of plurality of identified orders proportionally. Some exchange computer systems provide a priority to certain standing orders in particular markets. An example of such an order is the first order that improves a price (i.e., improves the market) for the product during a trading session. To be given priority, the trading platform may require that the quantity associated with the order is at least a minimum quantity. Further, some exchange computer systems cap the quantity of an incoming order that is allocated to a standing order on the basis of a priority for certain markets. In addition, some exchange computer systems may give a preference to orders submitted by a trader who is designated as a market maker for the product. Other exchange computer systems may use other criteria to determine whether orders submitted by a particular trader are given a preference. Typically, when the exchange computer system allocates a quantity of an incoming order to a plurality of identified orders at the same price, the trading host allocates a quantity of the incoming order to any orders that have been given priority. The exchange computer system thereafter allocates any remaining quantity of the incoming order to orders submitted by traders designated to have a preference, and then allocates any still remaining quantity of the incoming order using the FIFO or pro-rata algorithms. Pro-rata algorithms used in some markets may require that an allocation provided to a particular order in accordance with the pro-rata algorithm must meet at least a minimum allocation quantity. Any orders that do not meet or exceed the minimum allocation quantity are allocated to on a FIFO basis after the pro-rata allocation (if any quantity of the incoming order remains). More information regarding order allocation may be found in U.S. Patent No. 7,853,499, the entirety of which is incorporated by reference herein and relied upon. Other examples of matching algorithms which may be defined for allocation of orders of a particular financial product include: Price Explicit Time; Order Level Pro Rata; Order Level Priority Pro Rata; Preference Price Explicit Time; Preference Order Level Pro Rata; Preference Order Level Priority Pro Rata; Threshold Pro-Rata; Priority Threshold Pro-Rata; Preference Threshold Pro-Rata; Priority Preference Threshold Pro-Rata; and Split Price-Time Pro-Rata, which are described in U.S. Patent Application Serial No. 13/534,499, filed on Jun. 27, 2012, entitled "Multiple Trade Matching Algorithms," published as U.S. Patent Application Publication No. 2014/0006243 A1, the entirety of which is incorporated by reference herein and relied upon.

With respect to incoming orders, some traders, such as automated and/or algorithmic traders, attempt to respond to market events, such as to capitalize upon a mispriced resting order or other market inefficiency, as quickly as possible. This may result in penalizing the trader who makes an errant trade, or whose underlying trading motivations have changed, and who cannot otherwise modify or cancel their order faster than other traders can submit trades there against. It may considered that an electronic trading system that rewards the trader who submits their order first creates an incentive to either invest substantial capital in faster trading systems, participate in the market substantially to capitalize on opportunities (aggressor side/lower risk trading) as opposed to creating new opportunities (market making/higher risk trading), modify existing systems to streamline business logic at the cost of trade quality, or reduce one's activities and exposure in the market. The result may be a lesser quality market and/or reduced transaction volume, and corresponding thereto, reduced fees to the exchange.

With respect to resting orders, allocation/matching suitable resting orders to match against an incoming order can be performed, as described herein, in many different ways. Generally, it will be appreciated that allocation/matching algorithms are only needed when the incoming order quantity is less than the total quantity of the suitable resting orders as, only in this situation, is it necessary to decide which resting order(s) will not be fully satisfied, which trader(s) will not get their orders filled. It can be seen from the above descriptions of the matching/allocation algorithms, that they fall generally into three categories: time priority/first-in-first-out ("FIFO"), pro rata, or a hybrid of FIFO and pro rata.

FIFO generally rewards the first trader to place an order at a particular price and maintains this reward indefinitely. So if a trader is the first to place an order at price X, no matter how long that order rests and no matter how many orders may follow at the same price, as soon as a suitable incoming order is received, that first trader will be matched first. This "first mover" system may commit other traders to positions in the queue after the first move traders. Furthermore, while it may be beneficial to give priority to a trader who is first to place an order at a given price because that trader is, in effect, taking a risk, the longer that the trader's order rests, the less beneficial it may be. For instance, it could deter other traders from adding liquidity to the marketplace at that price because they know the first mover (and potentially others) already occupies the front of the queue.

With a pro rata allocation, incoming orders are effectively split among suitable resting orders. This provides a sense of fairness in that everyone may get some of their order filled. However, a trader who took a risk by being first to place an order (a "market turning" order) at a price may end up having to share an incoming order with a much later submitted order. Furthermore, as a pro rata allocation distributes the incoming order according to a proportion based on the resting order quantities, traders may place orders for large quantities, which they are willing to trade but may not necessarily want to trade, in order to increase the proportion of an incoming order that they will receive. This results in an escalation of quantities on the order book and exposes a trader to a risk that someone may trade against one of these orders and subject the trader to a larger trade than they intended. In the typical case, once an incoming order is allocated against these large resting orders, the traders subsequently cancel the remaining resting quantity which may frustrate other traders. Accordingly, as FIFO and pro rata both have benefits and problems, exchanges may try to use hybrid allocation/matching algorithms which attempt to balance these benefits and problems by combining FIFO and pro rata in some manner. However, hybrid systems define conditions or fixed rules to determine when FIFO should be used and when pro rata should be used. For example, a fixed percentage of an incoming order may be allocated using a FIFO mechanism with the remainder being allocated pro rata.

ORDER BOOK OBJECT DATA STRUCTURES

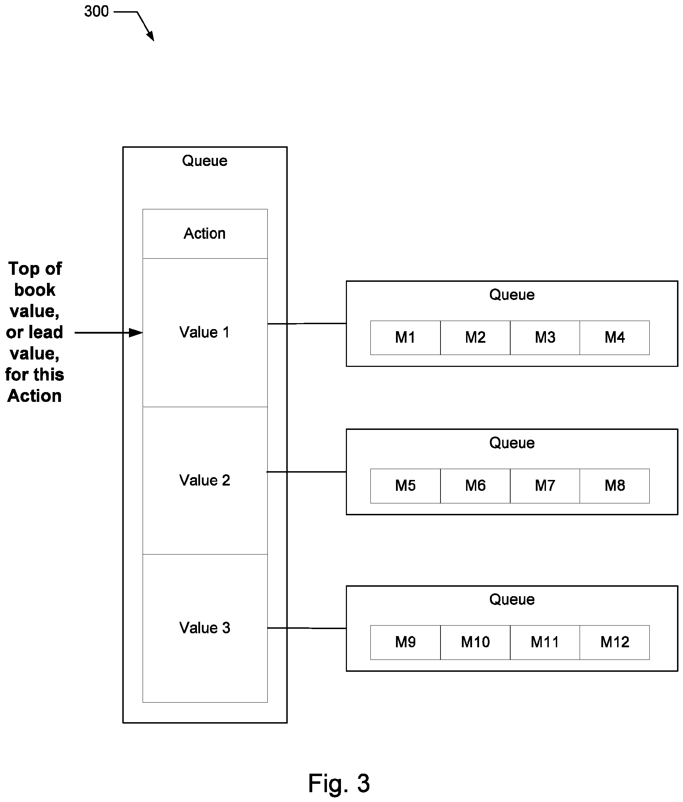

In one embodiment, the messages and/or values received for each object may be stored in queues according to value and/or priority techniques implemented by an exchange computing system 100. Figure 3 illustrates an example data structure 300, which may be stored in a memory or other storage device, such as the memory 204 or storage device 206 described with respect to Figure 2, for storing and retrieving messages related to different values for the same action for an object. For example, data structure 300 may be a set of queues or linked lists for multiple values for an action, e.g., bid, on an object. Data structure 300 may be implemented as a database. It should be appreciated that the system may store multiple values for the same action for an object, for example, because multiple users submitted messages to buy specified quantities of an object at different values. Thus, in one embodiment, the exchange computing system may keep track of different orders or messages for buying or selling quantities of objects at specified values.

Although the present patent application contemplates using queue data structures for storing messages in a memory, the implementation may involve additional pointers, i.e., memory address pointers, or linking to other data structures. Incoming messages may be stored at an identifiable memory address. The transaction processor can traverse messages in order by pointing to and retrieving different messages from the different memories. Thus, messages that may be depicted sequentially may actually be stored in memory in disparate locations. The software programs implementing the transaction processing may retrieve and process messages in sequence from the various disparate (e.g.,

random) locations. Thus, in one embodiment, each queue may store different values, which could represent prices, where each value points to or is linked to the messages (which may themselves be stored in queues and sequenced according to priority techniques, such as prioritizing by value) that will match at that value. For example, as shown in Figure 3, all of the values relevant to executing an action at different values for an object are stored in a queue. Each value in turn points to, e.g., a linked list or queue logically associated with the values. The linked list stores the messages that instruct the exchange computing system to buy specified quantities of the object at the corresponding value.

TRANSACTION PROCESSOR DATA STRUCTURES

Figures 4A and 4B illustrate an example embodiment of a data structure used to implement match engine module 106. Match engine module 106 may include a conversion component 402, pre-match queue 404, match component 406, post-match queue 408 and publish component 410.

Although the embodiments are disclosed as being implemented in queues, it should be understood that different data structures, such as for example linked lists or trees, may also be used. Although the application contemplates using queue data structures for storing messages in a memory, the implementation may involve additional pointers, i.e., memory address pointers, or linking to other data structures. Thus, in one embodiment, each incoming message may be stored at an identifiable memory address. The transaction processing components can traverse messages in order by pointing to and retrieving different messages from the different memories. Thus, messages that may be processed sequentially in queues may actually be stored in memory in disparate locations. The software programs implementing the transaction processing may retrieve and process messages in sequence from the various disparate (e.g., random) locations.

The queues described herein may, in one embodiment, be structured so that the messages are stored in sequence according to time of receipt, e.g., they may be first-in/first-out (FIFO) queues.

The match engine module 106 may be an example of a transaction processing system. The pre-match queue 404 may be an example of a pre-transaction queue. The match component 406 may be an example of a transaction component. The post-match queue 408 may be an example of a post-transaction queue. The publish component 410 may be an example of a distribution component. The transaction component may process messages and generate transaction component results.

It should be appreciated that match engine module 106 may not include all of the components described herein. For example, match engine module 106 may only include pre-match queue 404 and match component 406, as shown in Figure 4B. In one embodiment, the latency detection system may detect how long a message waits in a pre-match queue 404 (e.g., latency), and compares the latency to the maximum allowable latency associated with the message.

In one embodiment, the publish component may be a distribution component that can distribute data to one or more market participant computers. In one embodiment, match engine module 106 operates according to a first-in/first-out (FIFO) ordering. The conversion component 402 converts or extracts a message received from a trader via the Market Segment Gateway or MSG into a message format that can be input into the pre-match queue 404.

Messages from the pre-match queue may enter the match component 406 sequentially and may be processed sequentially. In one regard, the pre-transaction queue, e.g., the pre-match queue, may be considered to be a buffer or waiting spot for messages before they can enter and be processed by the transaction component, e.g., the match component. The match component matches orders, and the time a messages spends being processed by the match component can vary, depending on the contents of the message and resting orders on the book. Thus, newly received messages wait in the pre-transaction queue until the match component is ready to process those messages. Moreover, messages are received and processed sequentially or in a first-in, first-out FIFO methodology. The first message that enters the pre-match or pre-transaction queue will be the first message to exit the pre-match queue and enter the match component. In one embodiment, there is no out-of-order message processing for messages received by the transaction processing system. The pre-match and post-match queues are, in one embodiment, fixed in size, and any messages received when the queues are full may need to wait outside the transaction processing system or be resent to the transaction processing system.

The match component 406 processes an order or message, at which point the transaction processing system may consider the order or message as having been processed. The match component 406 may generate one message or more than one message, depending on whether an incoming order was successfully matched by the match component. An order message that matches against a resting order in the order book may generate dozens or hundreds of messages. For example, a large incoming order may match against several smaller resting orders at the same price level. For example, if many orders match due to a new order message, the match engine needs to send out multiple messages informing traders which resting orders have matched. Or, an order message may not match any resting order and only generate an acknowledgement message. Thus, the match component 406 in one embodiment will generate at least one message, but may generate more messages, depending upon the activities occurring in the match component. For example, the more orders that are matched due to a given message being processed by the match component, the more time may be needed to process that message. Other messages behind that given message will have to wait in the pre-match queue.

Messages resulting from matches in the match component 406 enter the post-match queue 408. The post-match queue may be similar in functionality and structure to the pre-match queue discussed above, e.g., the post-match queue is a FIFO queue of fixed size. As illustrated in Figures 4A and 4B, a difference between the pre- and post-match queues may be the location and contents of the structures, namely, the pre-match queue stores messages that are waiting to be processed, whereas the post-match queue stores match component results due to matching by the match component. The match component receives messages from the pre-match queue, and sends match component results to the post-match queue. In one embodiment, the time that results messages, generated due to the transaction processing of a given message, spend in the post-match queue is not included in the latency calculation for the given message.

Messages from the post-match queue 408 enter the publish component 410 sequentially and are published via the MSG sequentially. Thus, the messages in the post-match queue 408 are an effect or result of the messages that were previously in the pre-match queue 404. In other words, messages that are in the pre-match queue 404 at any given time will have an impact on or affect the contents of the post-match queue 408, depending on the events that occur in the match component 406 once the messages in the pre-match queue 404 enter the match component 406.

As noted above, the match engine module 106 in one embodiment operates in a first-in, first-out (FIFO) scheme. In other words, the first message that enters the match engine module 106 is the first message that is processed by the match engine module 106. Thus, the match engine module 106 in one embodiment processes messages in the order the messages are received. In Figures 4A and 4B, as shown by the data flow arrow, data is processed sequentially by the illustrated structures from left to right, beginning at the conversion component 402, to the pre-match queue, to the match component 406, to the post-match queue 408, and to the publish component 410. The overall transaction processing system operates in a FIFO scheme such that data flows from element 402 to 404 to 406 to 408 to 410, in that order. If any one of the queues or components of the transaction processing system experiences a delay, that creates a backlog for the structures preceding the delayed structure. For example, if the match or transaction component is undergoing a high processing volume, and if the pre-match or pre-transaction queue is full of messages waiting to enter the match or transaction component, the conversion component may not be able to add any more messages to the pre-match or pre-transaction queue.

Messages wait in the pre-match queue. The time a message waits in the pre-match queue depends upon how many messages are ahead of that message (i.e., earlier messages), and how much time each of the earlier messages spends being serviced or processed by the match component. Messages also wait in the post-match queue. The time a message waits in the post-match queue depends upon how many messages are ahead of that message (i.e., earlier messages), and how much time each of the earlier messages spends being serviced or processed by the publish component. These wait times may be viewed as a latency that can affect a market participant's trading strategy.

After a message is published (after being processed by the components and / or queues of the match engine module), e.g., via a market data feed, the message becomes public information and is publicly viewable and accessible. Traders consuming such published messages may act upon those message, e.g., submit additional new input messages to the exchange computing system responsive to the published messages.

The match component attempts to match aggressing or incoming orders against resting orders. If an aggressing order does not match any resting orders, then the aggressing order may become a resting order, or an order resting on the books. For example, if a message includes a new order that is specified to have a one-year time in force, and the new order does not match any existing resting order, the new order will essentially become a resting order to be matched (or attempted to be matched) with some future aggressing order. The new order will then remain on the books for one year. On the other hand, an order specified as a fill or kill (e.g., if the order cannot be filled or matched with an order currently resting on the books, the order should be canceled) will never become a resting order, because it will either be filled or matched with a currently resting order, or it will be canceled. The amount of time needed to process or service a message once that message has entered the match component may be referred to as a service time. The service time for a message may depend on the state of the order books when the message enters the match component, as well as the contents, e.g., orders, that are in the message.

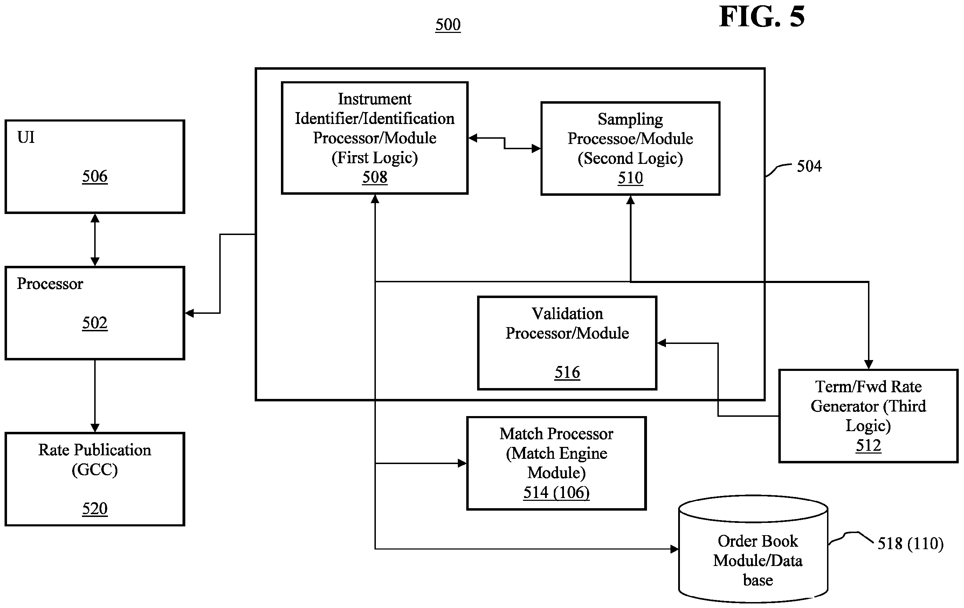

Figure 5 depicts a block diagram of a system 500 for automatically determining an interest rate associated with a future time period subsequent to a current date. It will be appreciated that the system 500 may be a part of, or coupled with, the Forward Rate Module 122, Match Engine Module 514/106, Order Book Module 518/110, Settlement Module 120, or other module of the exchange computing system 100 described above and shown in Figure 1. The system 500 includes a processor 502, and a non-transitory memory 504 and user interface 506 coupled therewith, such as the processor 202, memory 204 and/or interfaces 214, 216, 218 described in detail above with reference to Figure 2.

In particular, the system 500 may be coupled with a data transaction processing system, such as the exchange computer system 100 described above which is operative to transact one or more data items, e.g., data indicative of one or more financial instruments, using a hardware matching processor, e.g., the match engine module 106, that matches groups of electronic data transaction request messages to buy or sell the data items, each of the data items specifying term and an expiration time period of a set of future expiration time periods, including an incoming electronic data transaction request message and one or more previously received but unmatched electronic data transaction request messages represented in a data structure stored in a memory coupled with the hardware matching processor, for the same one of the data items based on multiple transaction parameters of the electronic data transaction request message, received from different client computers over a data communications network, the transaction parameters of each of the electronic data transaction request messages specifying the data item, order to buy or sell, and a proposed transaction price indicative of an interest rate value to be determined at the end of the specified expiration time period of the data item based on a set of daily interest rates set prior thereto over the term by a governing authority, each matched group of electronic data transaction request messages being associated with a prevailing transaction price indicative of an expected interest rate value to be determined at the end of the specified expiration time period based on the set of daily interest rates set prior thereto by the governing authority.

The memory 504 being operative to store instructions, that when executed by the processor 502, cause the processor 502 to: determine a set of data items to be sampled, each data item in the set having a different term and specified expiration time period consecutive with at least one other of the data items in the set; generate objective input data for a rate generator, for each of a set of sampling periods, the sampling processor being operative to: obtain, from the hardware matching processor, the prevailing transaction price of each of the groups of electronic data transaction request messages which are matched by the hardware matching processor during the sampling period for each of the set of data items, and at a random time within the sampling period, further obtain, from the hardware matching processor for each data item of the set of data items, a first best proposed transaction price of the one or more previously received but unmatched electronic data transaction request messages represented in the data structure comprising an order to buy and a second best proposed transaction price of the one or more previously received but unmatched electronic data transaction request messages represented in the data structure comprising an order to sell; upon conclusion of the sampling period, repeatedly generate one or more sets of values, each comprising a value for each data item of the set of data items, based on the obtained prevailing transaction prices and the first and second best proposed transaction prices, and for each generated set of values and validate the generated set of values to determine whether each value of the set of values is consistent with the other values of the set of values as a function of expected interest rate over the consecutive specified expiration time periods as a function of a yield curve, until a validated set of values is generated; and store the validated set of values for the sampling period is a memory coupled with the sampling processor; and upon conclusion of all of the sampling periods, aggregate each of the stored validated sets of values of each sampling period, wherein the aggregate stored validated sets of values comprises objective input data; and submit the objective input data to a rate generator, which may be based on the forward rate generation models described above, operative to generate the forward rate.

More particularly, the system 500 may include an interface 506, e.g. a user interface for receiving inputs, such as selection of a desired tenor for a forward rate, an instrument identification processor or instrument identifier 508 coupled with the interface 506, and a sampling processor 510. Further the system 500 may be coupled with a forward rate generator 512 such as one based on the forward rate generation model(s) described above. One or more of the instrument identifier 508, sampling processor 510 and forward rate generator 512 may be implemented as a separate component or as one or more logic components, such as on an FPGA which may include a memory or reconfigurable component to store logic and a processing component to execute the stored logic, or as first, second, and third logic respectively, e.g. computer program logic, stored in a memory, such as the memory 204 shown in Figure 2 and described in more detail above with respect thereto, or other non-transitory computer readable medium, and executable by a processor, such as the processor 204 shown in Figure 2 and described in more detail above with respect thereto, to cause the processor 504 to, or otherwise be operative as described. The instrument identifier 508 and sampling processor 510 may be further coupled with the hardware matching processor 514 (match engine module 106) and order book module/database 518/110 to have access to requisite trade and pricing data. The sampling processor 510 may be further coupled with the forward rate generator 512 so as to provide the generated objective input data thereto and receive the computed forward interest rate therefrom.

In one embodiment, the data items comprise financial instruments and the transactions transacted by the hardware matching processor 514/106 comprise orders received from the different client computers, via a network coupled between the client computers and the data transaction processing system, to buy or sell the financial instruments.

In one embodiment, the financial instruments comprise Secure Overnight Funding Rate futures contracts having a term of 1 month and specified expiration time periods of the next seven months, or a term of 3 months and specified expiration time periods of at least the next three months.

In one embodiment, the future time period of the determined interest rate comprises one, two, three, six or twelve months, or combinations thereof.

In one embodiment, the sampling processor 510 is operative to compute the aggregate prevailing transaction price using volume weighed average prices, time weighted average prices or a combination thereof.

In one embodiment, the sampling processor 510 is further operative to generate new objective input data each day.

In one embodiment, the set of sampling periods comprises 14 sampling periods, each having a duration of 30 minutes.

In one embodiment, the sampling processor 510 is further operative to generate a first set of the one or more sets of values by, for each data item of data items, determining one of the volume weighted average (VWAP) of the prevailing transaction prices for the data item or determining a mid-point value of the first and second best proposed transaction prices for the data item, wherein subsequent sets of values are generated as a function of the first set of values.

In one embodiment, the sampling processor 510 is further operative to aggregate each of the stored validated sets of values as an average value for each data item of the set of data items based on the values for the data item in each of the stored validated sets of values.

In one embodiment, the sampling processor 510 is further operative to: receive, from the rate generator 512, the generated forward rate; and validate the generated forward rate, e.g., using a rate validator 516, which may be implemented as a separate component or as one or more logic components, such as on an FPGA which may include a memory or reconfigurable component to store logic and a processing component to execute the stored logic, fourth logic respectively, e.g. computer program logic, stored in a memory, such as the memory 204 shown in Figure 2 and described in more detail above with respect thereto, or other non-transitory computer readable medium, and executable by a processor, such as the processor 204 shown in Figure 2 and described in more detail above with respect thereto, to cause the processor 504 to, or otherwise be operative as described. wherein the sampling processor 510/rate validator 516 is further operative to compare the generated forward rate to one or more previously generated forward rates to determine if the generated forward rate is within a first threshold tolerance of the one or more previously generated forward rates; and wherein, when the generated forward rate is within the first threshold tolerance of the one or more previously generated forward rates, transmit the generated forward rate to a rate publishing processor 520, which may comprise the GCC described above; and wherein, when the generated forward rate is not within the first threshold tolerance of the one or more previously generated forward rates, generate an alternative forward rate, reuse a prior forward rate or not produce a forward rate.

In particular, the interface 506 is operative to receive a selection of one or more periods of time subsequent to a current date, e.g. 1, 2, 3, 6 or 12 months, which may be overlapping or consecutive, for which to determine one or more associated interest rates.

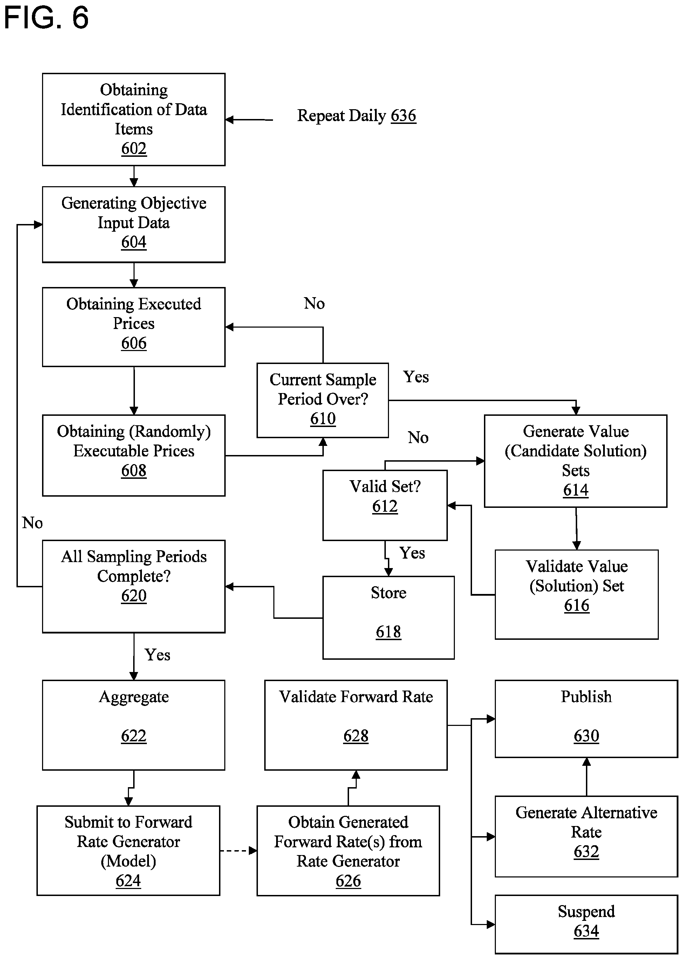

Figure 6 depicts a flow chart showing operation of the system 500 of Figures 1-5. In particular Figure 6 shows a method, which may be computer implemented, for automatically determining, by a data transaction processing system, such as the exchange computer system 100 described above, an interest rate associated with a future time period, the data transaction processing system being operative to transact one or more data items using a hardware matching processor that matches groups of electronic data transaction request messages to buy or sell the data items, each of the data items specifying term and an expiration time period of a set of future expiration time periods, including an incoming electronic data transaction request message and one or more previously received but unmatched electronic data transaction request messages represented in a data structure stored in a memory coupled with the hardware matching processor, for the same one of the data items based on multiple transaction parameters of the electronic data transaction request message, received from different client computers over a data communications network, the transaction parameters of each of the electronic data transaction request messages specifying the data item, order to buy or sell, and a proposed transaction price indicative of an interest rate value to be determined at the end of the specified expiration time period of the data item based on a set of daily interest rates set prior thereto over the term by a governing authority, each matched group of electronic data transaction request messages being associated with a prevailing transaction price indicative of an expected interest rate value to be determined at the end of the specified expiration time period based on the set of daily interest rates set prior thereto by the governing authority.

In one embodiment, the operation of the system 500 includes: determining, by a sampling processor, a set of data items to be sampled, each data item in the set having a different term and specified expiration time period consecutive with at least one other of the data items in the set (Block 602); generating, by a sampling processor, objective input data for a rate generator, for each of a set of sampling periods (Block 604), by: obtaining, by the sampling processor from the hardware matching processor, the prevailing transaction price of each of the groups of electronic data transaction request messages which are matched by the hardware matching processor during the sampling period for each of the set of data items, and at a random time within the sampling period (Block 606), further obtaining, by the sampling processor from the hardware matching processor for each data item of the set of data items, a first best proposed transaction price of the one or more previously received but unmatched electronic data transaction request messages represented in the data structure comprising an order to buy and a second best proposed transaction price of the one or more previously received but unmatched electronic data transaction request messages represented in the data structure comprising an order to sell (Block 608); upon conclusion of the sampling period (Block 610), repeatedly generating (Block 612), by the sampling processor, one or more sets of values, each comprising a value for each data item of the set of data items, based on the obtained prevailing transaction prices and the first and second best proposed transaction prices (Block 614), and for each generated set of values and validating the generated set of values to determine whether each value of the set of values is consistent with the other values of the set of values as a function of expected interest rate over the consecutive specified expiration time periods as a function of a yield curve, until a validated set of values is generated (Block 616); and storing, by the sampling processor, the validated set of values for the sampling period is a memory coupled with the sampling processor (Block 618); and upon conclusion of all of the sampling periods (Block 620), aggregating, by the sampling processor, each of the stored validated sets of values of each sampling period, wherein the aggregate stored validated sets of values comprises objective input data (Block 622); and submitting, by the sampling processor, the objective input data to a rate generator coupled with the sampling processor and operative to generate the forward rate (Block 624).

In one embodiment, the data items comprise financial instruments and the transactions transacted by the hardware matching processor comprise orders received from the different client computers, via a network coupled between the client computers and the data transaction processing system, to buy or sell the financial instruments.

In one embodiment, the financial instruments comprise Secure Overnight Funding Rate futures contracts having a term of 1 month and specified expiration time periods of the next seven months, or a term of 3 months and specified expiration time periods of at least the next three months.

In one embodiment, the future time period of the determined interest rate comprises one, two, three, six or twelve months, or combinations thereof.

In one embodiment, the sampling processor is operative to compute the aggregate prevailing transaction price using volume weighed average prices, time weighted average prices or a combination thereof.

In one embodiment, the operation of the system 500 further comprise repeating, by the sampling processor, the method on each day.

In one embodiment, the set of sampling periods comprises 14 sampling periods, each having a duration of 30 minutes.

In one embodiment, the generating of the one or more sets of values comprises generating a first set of the one or more sets of values by, for each data item of data items, determining one of the volume weighted average (VWAP) of the prevailing transaction prices for the data item or determining a mid-point value of the first and second best proposed transaction prices for the data item, wherein subsequent sets of values are generated as a function of the first set of values.

In one embodiment, the aggregating of each of the stored validated sets of values further comprises generating an average value for each data item of the set of data items based on the values for the data item in each of the stored validated sets of values.

In one embodiment, the operation of the system 500 further includes: receiving, by the sampling processor, from the rate generator, the generated forward rate (Block 626); and validating, by the sampling processor, the generated forward rate by comparing the generated forward rate to one or more previously generated forward rates to determine if the generated forward rate is within a first threshold tolerance of the one or more previously generated forward rates (Block 628); and wherein, when the generated forward rate is within the first threshold tolerance of the one or more previously generated forward rates, transmitting the generated forward rate to a rate publishing processor; and wherein, when the generated forward rate is not within the first threshold tolerance of the one or more previously generated forward rates, generating an alternative forward rate, reusing a prior forward rate or not producing a forward rate. For more detail, refer to Figure 7 discussed above.

The attached Appendix includes examples of the operation of the above described system. A first example demonstrates the periodic sampling and successful computation of a valid forward rate. The second example provides alternative scenarios wherein the computed forward rate passes or fails one or more of the validation tests described herein.

The illustrations of the embodiments described herein are intended to provide a general understanding of the structure of the various embodiments. The illustrations are not intended to serve as a complete description of all of the elements and features of apparatus and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the s are to be regarded as illustrative rather than restrictive.

While this specification contains many specifics, these should not be construed as limitations on the scope of the invention or of what may be claimed, but rather as descriptions of features specific to particular embodiments of the invention. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings and described herein in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

One or more embodiments of the disclosure may be referred to herein, individually and/or collectively, by the term "invention" merely for convenience and without intending to voluntarily limit the scope of this application to any particular invention or inventive concept. Moreover, although specific embodiments have been illustrated and described herein, it should be appreciated that any subsequent arrangement designed to achieve the same or similar purpose may be substituted for the specific embodiments shown. This disclosure is intended to cover any and all subsequent adaptations or variations of various embodiments. Combinations of the above embodiments, and other embodiments not specifically described herein, will be apparent to those of skill in the art upon reviewing the description.

The Abstract of the Disclosure is provided to comply with 37 C.F.R. § 1.72(b) and is submitted with the understanding that it will not be used to interpret or limit the scope or meaning of the claims. In addition, in the foregoing Detailed Description, various features may be grouped together or described in a single embodiment for the purpose of streamlining the disclosure. This disclosure is not to be interpreted as reflecting an intention that the claimed embodiments require more features than are expressly recited in each claim. Rather, as the following claims reflect, inventive subject matter may be directed to less than all of the features of any of the disclosed embodiments. Thus, the following claims are incorporated into the Detailed Description, with each claim standing on its own as defining separately claimed subject matter.

It is therefore intended that the foregoing detailed description be regarded as illustrative rather than limiting, and that it be understood that it is the following claims, including all equivalents, that are intended to define the spirit and scope of this invention.

Further embodiments of the invention are illustrated with the following numbered clauses:

Clause 1. A computer implemented method for automatically determining, by a data transaction processing system, an interest rate associated with a future time period, the data transaction processing system being operative to transact one or more data items using a hardware matching processor that matches groups of electronic data transaction request messages to buy or sell the data items, each of the data items specifying term and an expiration time period of a set of future expiration time periods, including an incoming electronic data transaction request message and one or more previously received but unmatched electronic data transaction request messages represented in a data structure stored in a memory coupled with the hardware matching processor, for the same one of the data items based on multiple transaction parameters of the electronic data transaction request message, received from different client computers over a data communications network, the transaction parameters of each of the electronic data transaction request messages specifying the data item, order to buy or sell, and a proposed transaction price indicative of an interest rate value to be determined at the end of the specified expiration time period of the data item based on a set of daily interest rates set prior thereto over the term by a governing authority, each matched group of electronic data transaction request messages being associated with a prevailing transaction price indicative of an expected interest rate value to be determined at the end of the specified expiration time period based on the set of daily interest rates set prior thereto by the governing authority, the method comprising: determining, by a sampling processor, a set of data items to be sampled, each data item in the set having a different term and specified expiration time period consecutive with at least one other of the data items in the set; generating, by a sampling processor, objective input data for a rate generator, for each of a set of sampling periods, by: obtaining, by the sampling processor from the hardware matching processor, the prevailing transaction price of each of the groups of electronic data transaction request messages which are matched by the hardware matching processor during the sampling period for each of the set of data items, and at a random time within the sampling period, further obtaining, by the sampling processor from the hardware matching processor for each data item of the set of data items, a first best proposed transaction price of the one or more previously received but unmatched electronic data transaction request messages represented in the data structure comprising an order to buy and a second best proposed transaction price of the one or more previously received but unmatched electronic data transaction request messages represented in the data structure comprising an order to sell; upon conclusion of the sampling period, repeatedly generating, by the sampling processor, one or more sets of values, each comprising a value for each data item of the set of data items, based on the obtained prevailing transaction prices and the first and second best proposed transaction prices, and for each generated set of values and validating the generated set of values to determine whether each value of the set of values is consistent with the other values of the set of values as a function of expected interest rate over the consecutive specified expiration time periods as a function of a yield curve, until a validated set of values is generated; and storing, by the sampling processor, the validated set of values for the sampling period is a memory coupled with the sampling processor; and upon conclusion of all of the sampling periods, aggregating, by the sampling processor, each of the stored validated sets of values of each sampling period, wherein the aggregate stored validated sets of values comprises objective input data; and submitting, by the sampling processor, the objective input data to a rate generator coupled with the sampling processor and operative to generate the forward rate.

Clause 2. A system for automatically determining an interest rate associated with a future time period, the system being coupled with a data transaction processing system being operative to transact one or more data items using a hardware matching processor that matches groups of electronic data transaction request messages to buy or sell the data items, each of the data items specifying term and an expiration time period of a set of future expiration time periods, including an incoming electronic data transaction request message and one or more previously received but unmatched electronic data transaction request messages represented in a data structure stored in a memory coupled with the hardware matching processor, for the same one of the data items based on multiple transaction parameters of the electronic data transaction request message, received from different client computers over a data communications network, the transaction parameters of each of the electronic data transaction request messages specifying the data item, order to buy or sell, and a proposed transaction price indicative of an interest rate value to be determined at the end of the specified expiration time period of the data item based on a set of daily interest rates set prior thereto over the term by a governing authority, each matched group of electronic data transaction request messages being associated with a prevailing transaction price indicative of an expected interest rate value to be determined at the end of the specified expiration time period based on the set of daily interest rates set prior thereto by the governing authority, the system comprising: an instrument identifier operative to determine a set of data items to be sampled, each data item in the set having a different term and specified expiration time period consecutive with at least one other of the data items in the set; a sampling processor coupled with the instrument identifier and operative to generate objective input data for a rate generator, for each of a set of sampling periods, the sampling processor being operative to: obtain, from the hardware matching processor, the prevailing transaction price of each of the groups of electronic data transaction request messages which are matched by the hardware matching processor during the sampling period for each of the set of data items, and at a random time within the sampling period, further obtain, from the hardware matching processor for each data item of the set of data items, a first best proposed transaction price of the one or more previously received but unmatched electronic data transaction request messages represented in the data structure comprising an order to buy and a second best proposed transaction price of the one or more previously received but unmatched electronic data transaction request messages represented in the data structure comprising an order to sell; upon conclusion of the sampling period, repeatedly generate one or more sets of values, each comprising a value for each data item of the set of data items, based on the obtained prevailing transaction prices and the first and second best proposed transaction prices, and for each generated set of values and validate the generated set of values to determine whether each value of the set of values is consistent with the other values of the set of values as a function of expected interest rate over the consecutive specified expiration time periods as a function of a yield curve, until a validated set of values is generated; and store the validated set of values for the sampling period is a memory coupled with the sampling processor; and upon conclusion of all of the sampling periods, aggregate each of the stored validated sets of values of each sampling period, wherein the aggregate stored validated sets of values comprises objective input data; and submit the objective input data to a rate generator operative to generate the forward rate.

Clause 3. The system of Clause 2, wherein the data items comprise financial instruments and the transactions transacted by the hardware matching processor comprise orders received from the different client computers, via a network coupled between the client computers and the data transaction processing system, to buy or sell the financial instruments.

Clause 4. The system of Clause 3, wherein the financial instruments comprise Secure Overnight Funding Rate futures contracts having a term of 1 month and specified expiration time periods of the next seven months, or a term of 3 months and specified expiration time periods of at least the next three months.

Clause 5. The system of Clause 2, wherein the future time period of the determined interest rate comprises one, two, three, six or twelve months, or combinations thereof.

Clause 6. The system of Clause 2, wherein the sampling processor is operative to compute the aggregate prevailing transaction price using volume weighed average prices, time weighted average prices or a combination thereof.

Clause 7. The system of Clause 2, wherein the sampling processor is further operative to generate new objective input data each day.

Clause 8. The system Clause 2, wherein the set of sampling periods comprises 14 sampling periods, each having a duration of 30 minutes.

Clause 9. The system of Clause 2, wherein the sampling processor is further operative to generate a first set of the one or more sets of values by, for each data item of data items, determining one of the volume weighted average (VWAP) of the prevailing transaction prices for the data item or determining a mid-point value of the first and second best proposed transaction prices for the data item, wherein subsequent sets of values are generated as a function of the first set of values.

Clause 10. The system of Clause 2, wherein the sampling processor is further operative to aggregate each of the stored validated sets of values as an average value for each data item of the set of data items based on the values for the data item in each of the stored validated sets of values.

Clause 11. The system of Clause 2, wherein the sampling processor is further operative to: receive, from the rate generator, the generated forward rate; and validate the generated forward rate, wherein the sampling processor is further operative to compare the generated forward rate to one or more previously generated forward rates to determine if the generated forward rate is within a first threshold tolerance of the one or more previously generated forward rates; and wherein, when the generated forward rate is within the first threshold tolerance of the one or more previously generated forward rates, transmit the generated forward rate to a rate publishing processor; and wherein, when the generated forward rate is not within the first threshold tolerance of the one or more previously generated forward rates, generate an alternative forward rate, reuse a prior forward rate or not produce a forward rate.

Clause 12. A system for automatically determining an interest rate associated with a future time period, the system being coupled with a data transaction processing system being operative to transact one or more data items using a hardware matching processor that matches groups of electronic data transaction request messages to buy or sell the data items, each of the data items specifying term and an expiration time period of a set of future expiration time periods, including an incoming electronic data transaction request message and one or more previously received but unmatched electronic data transaction request messages represented in a data structure stored in a memory coupled with the hardware matching processor, for the same one of the data items based on multiple transaction parameters of the electronic data transaction request message, received from different client computers over a data communications network, the transaction parameters of each of the electronic data transaction request messages specifying the data item, order to buy or sell, and a proposed transaction price indicative of an interest rate value to be determined at the end of the specified expiration time period of the data item based on a set of daily interest rates set prior thereto over the term by a governing authority, each matched group of electronic data transaction request messages being associated with a prevailing transaction price indicative of an expected interest rate value to be determined at the end of the specified expiration time period based on the set of daily interest rates set prior thereto by the governing authority, the system comprising: means for determining a set of data items to be sampled, each data item in the set having a different term and specified expiration time period consecutive with at least one other of the data items in the set; means for generating objective input data for a rate generator, for each of a set of sampling periods, the means for generating comprising: means for obtaining, from the hardware matching processor, the prevailing transaction price of each of the groups of electronic data transaction request messages which are matched by the hardware matching processor during the sampling period for each of the set of data items, and at a random time within the sampling period, further obtaining, from the hardware matching processor for each data item of the set of data items, a first best proposed transaction price of the one or more previously received but unmatched electronic data transaction request messages represented in the data structure comprising an order to buy and a second best proposed transaction price of the one or more previously received but unmatched electronic data transaction request messages represented in the data structure comprising an order to sell; means for, upon conclusion of the sampling period, repeatedly generating one or more sets of values, each comprising a value for each data item of the set of data items, based on the obtained prevailing transaction prices and the first and second best proposed transaction prices, and for each generated set of values and validating the generated set of values to determine whether each value of the set of values is consistent with the other values of the set of values as a function of expected interest rate over the consecutive specified expiration time periods as a function of a yield curve, until a validated set of values is generated; and means for storing the validated set of values for the sampling period is a memory; and means for, upon conclusion of all of the sampling periods, aggregating each of the stored validated sets of values of each sampling period, wherein the aggregate stored validated sets of values comprises objective input data; and means for submitting the objective input data to a rate generator coupled with the sampling processor and operative to generate the forward rate.

Appendix

# Example 1

## Example Term Rates Computed by the Disclosed Embodiments

| Tenor | Term Rates SOFR Strip Rate (%) | Last Published | Ledger |
|---|---|---|---|
| 1 Month | 0.0822 | | Tolerance Check: Max, Calculating the absolute value of the Rate Net Change for tenor, 1 Month (0.0014600 rate net change), Calculating the absolute value of the Maximum Final Calculation Rate Change * 150%: 0.00900, Checking Tenor's Net Change vs. the Maximum Final Calculation Net Change, 1 Month 0.0014600 <= 1.5 * Max Final Calculation Rate Change |
| 3 Month | 0.0737 | | Tolerance Check: Max, Calculating the absolute value of the Rate Net Change for tenor, 3 Month (0.0020100 rate net change), Calculating the absolute value of the Maximum Final Calculation Rate Change * 150%: 0.00900, Checking Tenor's Net Change vs. the Maximum Final Calculation Net Change, 3 Month 0.0020100 <= 1.5 * Max Final Calculation Rate Change |
| 6 Month | 0.0679 | | Tolerance Check: Max, Calculating the absolute value of the Rate Net Change for tenor, 6 Month (0.0026400 rate net change), Calculating the absolute value of the Maximum Final Calculation Rate Change * 150%: 0.00900, Checking Tenor's Net Change vs. the Maximum Final Calculation Net Change, 6 Month 0.0026400 <= 1.5 * Max Final Calculation Rate Change |

## Final Aggregate of Selected Prices from All of the Sampling Periods for the Day

| Contract | Prior* | Final VWAP Final VWAP | Manual Price | Last Updated | Ledger |
|---|---|---|---|---|---|
| SR1Q0 | 99.9171 | 99.9148 | | 14:01:01.013 By ERE | Total Volume from each hour 8228, Finalizing price from outright VWAP 99.9148 |
| SR1U0 | 99.9239 | 99.9233 | | 14:01:01.013 By ERE | Total Volume from each hour 8228, Finalizing price from outright VWAP 99.9233 |
| SR1V0 | 99.9375 | 99.9335 | | 14:01:01.013 By ERE | Total Volume from each hour 8228, Finalizing price from outright VWAP 99.9335 |
| SR1X0 | 99.9391 | 99.9352 | | 14:01:01.013 By ERE | Total Volume from each hour 8228, Finalizing price from outright VWAP 99.9352 |

| | | | | Total Volume from each hour 8228, |
|---|---|---|---|---|
| SR1Z0 | 99.9362 | 99.9328 | 14:01:01.01 3 By ERE | Finalizing price from outright VWAP 99.9328 |
| SR1F1 | 99.9444 | 99.9397 | 14:01:01.01 3 By ERE | Total Volume from each hour 8228, Finalizing price from outright VWAP 99.9397 |
| SR1G1 | 99.9596 | 99.9536 | 14:01:01.01 3 By ERE | Total Volume from each hour 8228, Finalizing price from outright VWAP 99.9536 |
| SR3M0 | 99.9123 | 99.9112 | 14:01:01.01 3 By ERE | Total Volume from each hour 8228, Finalizing price from outright VWAP 99.9112 |
| SR3U0 | 99.9331 | 99.9305 | 14:01:01.01 3 By ERE | Total Volume from each hour 8228, Finalizing price from outright VWAP 99.9305 |
| SR3Z0 | 99.9519 | 99.9482 | 14:01:01.01 3 By ERE | Total Volume from each hour 8228, Finalizing price from outright VWAP 99.9482 |
| SR3H1 | 99.98 | 99.978 | 14:01:01.01 3 By ERE | Total Volume from each hour 8228, Finalizing price from outright VWAP 99.9780 |

*Prior are the aggregate prices from prior day

Sampling Intervals

Interval 14

| | |
|---|---|
| | Total number of combinations SR1 (78125), Total volume SR1 (1435), 5 optimal solutions found (limited to 5): |
| | (99.9150, 99.9250, 99.9350, 99.9350, 99.9325, 99.9400, 99.9550) |
| | (99.9150, 99.9250, 99.9350, 99.9350, 99.9324, 99.9400, 99.9550) |
| | (99.9150, 99.9250, 99.9350, 99.9350, 99.9325, 99.9400, 99.9549) |
| | (99.9150, 99.9250, 99.9350, 99.9350, 99.9325, 99.9399, 99.9550) |
| SR1 Ledger : ( Interval 14 ) | (99.9150, 99.9250, 99.9350, 99.9350, 99.9325, 99.9400, 99.9551), Solution 1's sum of squared difference of absolute value is: 0.0, Solution 2's sum of squared difference of absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement (99.9150, 99.9250, 99.9350, 99.9350, 99.9325, 99.9400, 99.9550) |
| | Total number of combinations SR3 (625), Total volume SR3 (18), 5 optimal solutions found (limited to 5): |
| | (99.9112, 99.9300, 99.9475, 99.9775) |
| | (99.9112, 99.9300, 99.9474, 99.9775) |
| | (99.9111, 99.9300, 99.9475, 99.9775) |
| | (99.9112, 99.9300, 99.9475, 99.9774) |
| SR3 Ledger : ( Interval 14 ) | (99.9112, 99.9300, 99.9475, 99.9776), Solution 1's sum of squared difference of absolute value is: 0.0, Solution 2's sum of squared difference of absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement (99.9112, 99.9300, 99.9475, 99.9775) |

Interval 14 [ 13:30:00 - 13:59:59 ]

| Contract | Selected Price* | Seed Price | Model | Volume | Bid | Ask | Snapshot Time |
|----------|-----------------|------------|-------|--------|-----|-----|---------------|
| SR1Q0 | 99.915 | 99.915 | VWAP | 24 | 99.915 | 99.9175 | 13:55:48.974 |
| SR1U0 | 99.925 | 99.925 | VWAP | 1013 | 99.92 | 99.925 | 13:55:48.974 |
| SR1V0 | 99.935 | 99.935 | VWAP | 45 | 99.93 | 99.935 | 13:55:48.974 |
| SR1X0 | 99.935 | 99.935 | VWAP | 329 | 99.93 | 99.935 | 13:55:48.974 |
| SR1Z0 | 99.9325 | 99.9325 | MID | 0 | 99.93 | 99.935 | 13:55:48.974 |
| SR1F1 | 99.94 | 99.94 | VWAP | 3 | 99.935 | 99.94 | 13:55:48.974 |
| SR1G1 | 99.955 | 99.955 | VWAP | 21 | 99.95 | 99.96 | 13:55:48.974 |
| SR3M0 | 99.9112 | 99.9112 | MID | 0 | 99.91 | 99.9125 | 13:55:48.974 |
| SR3U0 | 99.93 | 99.93 | VWAP | 18 | 99.925 | 99.93 | 13:55:48.974 |
| SR3Z0 | 99.9475 | 99.9475 | MID | 0 | 99.945 | 99.95 | 13:55:48.974 |
| SR3H1 | 99.9775 | 99.9775 | MID | 0 | 99.975 | 99.98 | 13:55:48.974 |

*Selected Price is the optimized price selected for the particular contract for the particular interval

Interval 13

| | |
|---|---|
| | Total number of combinations SR1 (78125), Total volume SR1 (253), 5 optimal solutions found (limited to 5): |
| | (99.9150, 99.9250, 99.9350, 99.9350, 99.9350, 99.9400, 99.9550) |
| | (99.9150, 99.9250, 99.9350, 99.9350, 99.9350, 99.9400, 99.9551) |
| | (99.9150, 99.9250, 99.9350, 99.9350, 99.9349, 99.9400, 99.9550) |
| | (99.9150, 99.9249, 99.9350, 99.9350, 99.9350, 99.9400, 99.9550) |
| | (99.9149, 99.9250, 99.9350, 99.9350, 99.9350, 99.9400, 99.9550), Solution 1's sum of squared difference of absolute value is: 0.0, Solution 2's sum of squared difference of |
| SR1 Ledger : ( Interval 13 ) | absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement (99.9150, 99.9250, 99.9350, 99.9350, 99.9350, 99.9400, 99.9550) |
| | Total number of combinations SR3 (625), Total volume SR3 (373), 5 optimal solutions found (limited to 5): |
| | (99.9112, 99.9300, 99.9475, 99.9775) |
| | (99.9111, 99.9300, 99.9475, 99.9775) |
| | (99.9112, 99.9300, 99.9475, 99.9774) |
| | (99.9112, 99.9299, 99.9475, 99.9775) |
| SR3 Ledger : ( Interval 13 ) | (99.9113, 99.9300, 99.9475, 99.9775), Solution 1's sum of squared difference of absolute value is: 0.0, Solution 2's sum of squared difference of absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference |

which is closest to the VWAP and finalizing settlement
(99.9112, 99.9300, 99.9475, 99.9775)

Interval 13 [ 13:00:00 - 13:29:59 ]

| Contract | Selected Price | Seed Price | Model | Volume | Bid | Ask | Snapshot Time |
|---|---|---|---|---|---|---|---|
| SR1Q0 | 99.915 | 99.915 | VWAP | 11 | 99.9125 | 99.915 | 13:23:28.686 |
| SR1U0 | 99.925 | 99.925 | VWAP | 52 | 99.92 | 99.925 | 13:23:28.686 |
| SR1V0 | 99.935 | 99.935 | VWAP | 56 | 99.93 | 99.935 | 13:23:28.686 |
| SR1X0 | 99.935 | 99.935 | VWAP | 29 | 99.93 | 99.935 | 13:23:28.686 |
| SR1Z0 | 99.935 | 99.935 | VWAP | 51 | 99.93 | 99.935 | 13:23:28.686 |
| SR1F1 | 99.94 | 99.94 | VWAP | 4 | 99.935 | 99.94 | 13:23:28.686 |
| SR1G1 | 99.955 | 99.955 | VWAP | 50 | 99.955 | 99.96 | 13:23:28.686 |
| SR3M0 | 99.9112 | 99.9112 | MID | 0 | 99.91 | 99.9125 | 13:23:28.686 |
| SR3U0 | 99.93 | 99.93 | VWAP | 373 | 99.925 | 99.93 | 13:23:28.686 |
| SR3Z0 | 99.9475 | 99.9475 | MID | 0 | 99.945 | 99.95 | 13:23:28.686 |
| SR3H1 | 99.9775 | 99.9775 | MID | 0 | 99.975 | 99.98 | 13:23:28.686 |

Interval 12

| | |
|---|---|
| | Total number of combinations SR1 (78125), Total volume SR1 (2103), 5 optimal solutions found (limited to 5): |
| | (99.9150, 99.9225, 99.9325, 99.9350, 99.9325, 99.9400, 99.9525) |
| | (99.9150, 99.9224, 99.9325, 99.9350, 99.9325, 99.9400, 99.9525) |
| | (99.9150, 99.9225, 99.9325, 99.9350, 99.9324, 99.9400, 99.9525) |
| | (99.9150, 99.9225, 99.9325, 99.9350, 99.9325, 99.9400, 99.9524) |
| | (99.9150, 99.9225, 99.9325, 99.9350, 99.9325, 99.9399, 99.9525), Solution 1's sum of squared difference of absolute value is: 0.0, Solution 2's sum of squared difference of |
| SR1 Ledger : ( Interval 12 ) | absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement (99.9150, 99.9225, 99.9325, 99.9350, 99.9325, 99.9400, 99.9525) |
| | Total number of combinations SR3 (625), Total volume SR3 (582), 5 optimal solutions found (limited to 5): |
| | (99.9112, 99.9300, 99.9475, 99.9775) |
| | (99.9111, 99.9300, 99.9475, 99.9775) |
| | (99.9112, 99.9300, 99.9475, 99.9774) |
| | (99.9112, 99.9299, 99.9475, 99.9775) |
| | (99.9113, 99.9300, 99.9475, 99.9775), Solution 1's sum of squared difference of absolute value is: 0.0, Solution 2's sum of squared difference of absolute value is: 1.0E-8, |
| SR3 Ledger : ( Interval 12 ) | Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement (99.9112, 99.9300, 99.9475, 99.9775) |

Interval 12 [ 12:30:00 - 12:59:59 ]

| Contract | Selected Price | Seed Price | Model | Volume | Bid | Ask | Snapshot Time |
|---|---|---|---|---|---|---|---|
| SR1Q0 | 99.915 | 99.915 | VWAP | 1695 | 99.9125 | 99.915 | 12:51:35.778 |
| SR1U0 | 99.9225 | 99.9225 | MID | 0 | 99.92 | 99.925 | 12:51:35.778 |
| SR1V0 | 99.9325 | 99.9325 | MID | 0 | 99.93 | 99.935 | 12:51:35.778 |
| SR1X0 | 99.935 | 99.935 | VWAP | 358 | 99.93 | 99.935 | 12:51:35.778 |
| SR1Z0 | 99.9325 | 99.9325 | MID | 0 | 99.93 | 99.935 | 12:51:35.778 |
| SR1F1 | 99.94 | 99.94 | VWAP | 50 | 99.935 | 99.94 | 12:51:35.778 |
| SR1G1 | 99.9525 | 99.9525 | MID | 0 | 99.95 | 99.955 | 12:51:35.778 |
| SR3M0 | 99.9112 | 99.9112 | MID | 0 | 99.91 | 99.9125 | 12:51:35.778 |
| SR3U0 | 99.93 | 99.93 | VWAP | 582 | 99.925 | 99.93 | 12:51:35.778 |
| SR3Z0 | 99.9475 | 99.9475 | MID | 0 | 99.945 | 99.95 | 12:51:35.778 |
| SR3H1 | 99.9775 | 99.9775 | MID | 0 | 99.975 | 99.98 | 12:51:35.778 |

Interval 11

| | |
|---|---|
| | Total number of combinations SR1 (78125), Total volume SR1 (54), 5 optimal solutions found (limited to 5): |
| | (99.9137, 99.9225, 99.9325, 99.9350, 99.9325, 99.9375, 99.9525) |
| | (99.9136, 99.9225, 99.9325, 99.9350, 99.9325, 99.9375, 99.9525) |
| | (99.9137, 99.9224, 99.9325, 99.9350, 99.9325, 99.9375, 99.9525) |
| | (99.9137, 99.9225, 99.9325, 99.9350, 99.9324, 99.9375, 99.9525) |
| SR1 Ledger : ( Interval 11 ) | (99.9137, 99.9225, 99.9325, 99.9350, 99.9325, 99.9375, 99.9524), Solution 1's sum of squared difference of absolute value is: 0.0, Solution 2's sum of squared difference of absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement (99.9137, 99.9225, 99.9325, 99.9350, 99.9325, 99.9375, 99.9525) |
| | Total number of combinations SR3 (625), Total volume SR3 (788), 5 optimal solutions found (limited to 5): |
| | (99.9112, 99.9300, 99.9475, 99.9775) |
| | (99.9111, 99.9300, 99.9475, 99.9775) |
| | (99.9112, 99.9300, 99.9475, 99.9774) |
| | (99.9112, 99.9301, 99.9475, 99.9775) |
| SR3 Ledger : ( Interval 11 ) | (99.9113, 99.9300, 99.9475, 99.9775), Solution 1's sum of squared difference of absolute value is: 0.0, Solution 2's sum of squared difference of absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement (99.9112, 99.9300, 99.9475, 99.9775) |

Interval 11 [ 12:00:00 - 12:29:59 ]

| Contract | Selected Price | Seed Price | Model | Volume | Bid | Ask | Snapshot Time |
|---|---|---|---|---|---|---|---|

| Contract | Selected Price | Seed Price | Model | Volume | Bid | Ask | Snapshot Time |
|---|---|---|---|---|---|---|---|
| SR1Q0 | 99.9137 | 99.9137 | MID | 0 | 99.9125 | 99.915 | 12:21:34.221 |
| SR1U0 | 99.9225 | 99.9225 | MID | 0 | 99.92 | 99.925 | 12:21:34.221 |
| SR1V0 | 99.9325 | 99.9325 | MID | 0 | 99.93 | 99.935 | 12:21:34.221 |
| SR1X0 | 99.935 | 99.935 | VWAP | 54 | 99.935 | 99.94 | 12:21:34.221 |
| SR1Z0 | 99.9325 | 99.9325 | MID | 0 | 99.93 | 99.935 | 12:21:34.221 |
| SR1F1 | 99.9375 | 99.9375 | MID | 0 | 99.935 | 99.94 | 12:21:34.221 |
| SR1G1 | 99.9525 | 99.9525 | MID | 0 | 99.95 | 99.955 | 12:21:34.221 |
| SR3M0 | 99.9112 | 99.9112 | MID | 0 | 99.91 | 99.9125 | 12:21:34.221 |
| SR3U0 | 99.93 | 99.93 | VWAP | 788 | 99.93 | 99.935 | 12:21:34.221 |
| SR3Z0 | 99.9475 | 99.9475 | MID | 0 | 99.945 | 99.95 | 12:21:34.221 |
| SR3H1 | 99.9775 | 99.9775 | MID | 0 | 99.975 | 99.98 | 12:21:34.221 |

Interval 10

| | |
|---|---|
| SR1 Ledger : ( Interval 10 ) | Total number of combinations SR1 (78125), Total volume SR1 (0), 5 optimal solutions found (limited to 5):<br>(99.9137, 99.9225, 99.9325, 99.9375, 99.9325, 99.9375, 99.9525)<br>(99.9137, 99.9225, 99.9325, 99.9374, 99.9325, 99.9375, 99.9525)<br>(99.9136, 99.9225, 99.9325, 99.9375, 99.9325, 99.9375, 99.9525)<br>(99.9137, 99.9224, 99.9325, 99.9375, 99.9325, 99.9375, 99.9525)<br>(99.9137, 99.9225, 99.9325, 99.9375, 99.9325, 99.9375, 99.9524), Solution 1's sum of squared difference of absolute value is: 0.0, Solution 2's sum of squared difference of absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement<br>(99.9137, 99.9225, 99.9325, 99.9375, 99.9325, 99.9375, 99.9525) |
| SR3 Ledger : ( Interval 10 ) | Total number of combinations SR3 (625), Total volume SR3 (23), 5 optimal solutions found (limited to 5):<br>(99.9112, 99.9300, 99.9475, 99.9775)<br>(99.9111, 99.9300, 99.9475, 99.9775)<br>(99.9112, 99.9300, 99.9475, 99.9774)<br>(99.9112, 99.9301, 99.9475, 99.9775)<br>(99.9113, 99.9300, 99.9475, 99.9775), Solution 1's sum of squared difference of absolute value is: 0.0, Solution 2's sum of squared difference of absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement<br>(99.9112, 99.9300, 99.9475, 99.9775) |

Interval 10 [ 11:30:00 - 11:59:59 ]

| Contract | Selected Price | Seed Price | Model | Volume | Bid | Ask | Snapshot Time |
|---|---|---|---|---|---|---|---|
| SR1Q0 | 99.9137 | 99.9137 | MID | 0 | 99.9125 | 99.915 | 11:54:00.074 |
| SR1U0 | 99.9225 | 99.9225 | MID | 0 | 99.92 | 99.925 | 11:54:00.074 |

| SR1V0 | 99.9325 | 99.9325 | MID | 0 | 99.93 | 99.935 | 11:54:00.074 |
| SR1X0 | 99.9375 | 99.9375 | MID | 0 | 99.935 | 99.94 | 11:54:00.074 |
| SR1Z0 | 99.9325 | 99.9325 | MID | 0 | 99.93 | 99.935 | 11:54:00.074 |
| SR1F1 | 99.9375 | 99.9375 | MID | 0 | 99.935 | 99.94 | 11:54:00.074 |
| SR1G1 | 99.9525 | 99.9525 | MID | 0 | 99.95 | 99.955 | 11:54:00.074 |
| SR3M0 | 99.9112 | 99.9112 | MID | 0 | 99.91 | 99.9125 | 11:54:00.074 |
| SR3U0 | 99.93 | 99.93 | VWAP | 23 | 99.93 | 99.935 | 11:54:00.074 |
| SR3Z0 | 99.9475 | 99.9475 | MID | 0 | 99.945 | 99.95 | 11:54:00.074 |
| SR3H1 | 99.9775 | 99.9775 | MID | 0 | 99.975 | 99.98 | 11:54:00.074 |

Interval 9

| | |
|---|---|
| | Total number of combinations SR1 (78125), Total volume SR1 (91), 5 optimal solutions found (limited to 5): |
| | (99.9137, 99.9250, 99.9350, 99.9375, 99.9325, 99.9375, 99.9525) |
| | (99.9137, 99.9250, 99.9350, 99.9374, 99.9325, 99.9375, 99.9525) |
| | (99.9136, 99.9250, 99.9350, 99.9375, 99.9325, 99.9375, 99.9525) |
| | (99.9137, 99.9250, 99.9350, 99.9375, 99.9325, 99.9375, 99.9524) |
| | (99.9137, 99.9250, 99.9350, 99.9375, 99.9325, 99.9376, 99.9525), Solution 1's sum of squared difference of absolute value is: 0.0, Solution 2's sum of squared difference of absolute value is: 1.0E-8, Solution 3's sum of squared difference of absolute value is: |
| SR1 Ledger : ( Interva l 9 ) | 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement (99.9137, 99.9250, 99.9350, 99.9375, 99.9325, 99.9375, 99.9525) |
| | Total number of combinations SR3 (625), Total volume SR3 (4), 5 optimal solutions found (limited to 5): |
| | (99.9112, 99.9300, 99.9475, 99.9775) |
| | (99.9111, 99.9300, 99.9475, 99.9775) |
| | (99.9112, 99.9300, 99.9475, 99.9774) |
| | (99.9112, 99.9301, 99.9475, 99.9775) |
| | (99.9113, 99.9300, 99.9475, 99.9775), Solution 1's sum of squared difference of absolute value is: 0.0, Solution 2's sum of squared difference of absolute value is: 1.0E-8, |
| SR3 Ledger : ( Interva l 9 ) | Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement (99.9112, 99.9300, 99.9475, 99.9775) |

Interval 9 [ 11:00:00 - 11:29:59 ]

| Contract | Selected Price | Seed Price | Model | Volume | Bid | Ask | Snapshot Time |
|---|---|---|---|---|---|---|---|
| SR1Q0 | 99.9137 | 99.9137 | MID | 0 | 99.9125 | 99.915 | 11:22:49.275 |
| SR1U0 | 99.925 | 99.925 | VWAP | 80 | 99.92 | 99.925 | 11:22:49.275 |
| SR1V0 | 99.935 | 99.935 | VWAP | 11 | 99.93 | 99.935 | 11:22:49.275 |
| SR1X0 | 99.9375 | 99.9375 | MID | 0 | 99.935 | 99.94 | 11:22:49.275 |
| SR1Z0 | 99.9325 | 99.9325 | MID | 0 | 99.93 | 99.935 | 11:22:49.275 |
| SR1F1 | 99.9375 | 99.9375 | MID | 0 | 99.935 | 99.94 | 11:22:49.275 |
| SR1G1 | 99.9525 | 99.9525 | MID | 0 | 99.95 | 99.955 | 11:22:49.275 |

| | | | | | | | |
|---|---|---|---|---|---|---|---|
| SR3M0 | 99.9112 | 99.9112 | MID | 0 | 99.91 | 99.9125 | 11:22:49.275 |
| SR3U0 | 99.93 | 99.93 | VWAP | 4 | 99.93 | 99.935 | 11:22:49.275 |
| SR3Z0 | 99.9475 | 99.9475 | MID | 0 | 99.945 | 99.95 | 11:22:49.275 |
| SR3H1 | 99.9775 | 99.9775 | MID | 0 | 99.975 | 99.98 | 11:22:49.275 |

Interval 8

| | |
|---|---|
| | Total number of combinations SR1 (78125), Total volume SR1 (3), 5 optimal solutions found (limited to 5): |
| | (99.9137, 99.9225, 99.9325, 99.9350, 99.9325, 99.9375, 99.9525) |
| | (99.9136, 99.9225, 99.9325, 99.9350, 99.9325, 99.9375, 99.9525) |
| | (99.9137, 99.9224, 99.9325, 99.9350, 99.9325, 99.9375, 99.9525) |
| | (99.9137, 99.9225, 99.9325, 99.9350, 99.9324, 99.9375, 99.9525) |
| | (99.9137, 99.9225, 99.9325, 99.9350, 99.9325, 99.9375, 99.9524), Solution 1's sum of squared difference of absolute value is: 0.0, Solution 2's sum of squared difference of |
| SR1 | absolute value is: 1.0E-8, Solution 3's sum of squared difference of absolute value is: |
| Ledger | 1.0E-8, Solution 4's sum of squared difference of absolute value is: 1.0E-8, Solution 5's |
| : ( | sum of squared difference of absolute value is: 1.0E-8, Selecting solution based on lowest |
| Interva | sum of squared difference which is closest to the VWAP and finalizing settlement |
| l 8 ) | (99.9137, 99.9225, 99.9325, 99.9350, 99.9325, 99.9375, 99.9525) |
| | Total number of combinations SR3 (625), Total volume SR3 (0), 5 optimal solutions found (limited to 5): |
| | (99.9112, 99.9325, 99.9475, 99.9775) |
| | (99.9111, 99.9325, 99.9475, 99.9775) |
| | (99.9112, 99.9324, 99.9475, 99.9775) |
| | (99.9112, 99.9325, 99.9475, 99.9774) |
| | (99.9113, 99.9325, 99.9475, 99.9775), Solution 1's sum of squared difference of absolute value is: 0.0, Solution 2's sum of squared difference of absolute value is: 1.0E-8, |
| SR3 | Solution 3's sum of squared difference of absolute value is: 1.0E-8, Solution 4's sum of |
| Ledger | squared difference of absolute value is: 1.0E-8, Solution 5's sum of squared difference of |
| : ( | absolute value is: 1.0E-8, Selecting solution based on lowest sum of squared difference |
| Interva | which is closest to the VWAP and finalizing settlement |
| l 8 ) | (99.9112, 99.9325, 99.9475, 99.9775) |

Interval 8 [ 10:30:00 - 10:59:59 ]

| Contract | Selected Price | Seed Price | Model | Volume | Bid | Ask | Snapshot Time |
|---|---|---|---|---|---|---|---|
| SR1Q0 | 99.9137 | 99.9137 | MID | 0 | 99.9125 | 99.915 | 10:58:30.554 |
| SR1U0 | 99.9225 | 99.9225 | MID | 0 | 99.92 | 99.925 | 10:58:30.554 |
| SR1V0 | 99.9325 | 99.9325 | MID | 0 | 99.93 | 99.935 | 10:58:30.554 |
| SR1X0 | 99.935 | 99.935 | VWAP | 3 | 99.935 | 99.94 | 10:58:30.554 |
| SR1Z0 | 99.9325 | 99.9325 | MID | 0 | 99.93 | 99.935 | 10:58:30.554 |
| SR1F1 | 99.9375 | 99.9375 | MID | 0 | 99.935 | 99.94 | 10:58:30.554 |
| SR1G1 | 99.9525 | 99.9525 | MID | 0 | 99.95 | 99.955 | 10:58:30.554 |
| SR3M0 | 99.9112 | 99.9112 | MID | 0 | 99.91 | 99.9125 | 10:58:30.554 |
| SR3U0 | 99.9325 | 99.9325 | MID | 0 | 99.93 | 99.935 | 10:58:30.554 |
| SR3Z0 | 99.9475 | 99.9475 | MID | 0 | 99.945 | 99.95 | 10:58:30.554 |
| SR3H1 | 99.9775 | 99.9775 | MID | 0 | 99.975 | 99.98 | 10:58:30.554 |

Interval 7

Total number of combinations SR1 (78125), Total volume SR1 (1), 5 optimal solutions found (limited to 5):

SR1 Ledger : ( Interval 7 )

(99.9137, 99.9225, 99.9325, 99.9375, 99.9325, 99.9400, 99.9525)
(99.9137, 99.9225, 99.9325, 99.9374, 99.9325, 99.9400, 99.9525)
(99.9136, 99.9225, 99.9325, 99.9375, 99.9325, 99.9400, 99.9525)
(99.9137, 99.9224, 99.9325, 99.9375, 99.9325, 99.9400, 99.9525)
(99.9137, 99.9225, 99.9325, 99.9375, 99.9325, 99.9400, 99.9524), Solution 1's sum of squared difference of absolute value is: 0.0, Solution 2's sum of squared difference of absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement
(99.9137, 99.9225, 99.9325, 99.9375, 99.9325, 99.9400, 99.9525)

Total number of combinations SR3 (625), Total volume SR3 (16), 5 optimal solutions found (limited to 5):

SR3 Ledger : ( Interval 7 )

(99.9112, 99.9300, 99.9475, 99.9775)
(99.9111, 99.9300, 99.9475, 99.9775)
(99.9112, 99.9300, 99.9475, 99.9774)
(99.9112, 99.9301, 99.9475, 99.9775)
(99.9113, 99.9300, 99.9475, 99.9775), Solution 1's sum of squared difference of absolute value is: 0.0, Solution 2's sum of squared difference of absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement
(99.9112, 99.9300, 99.9475, 99.9775)

Interval 7 [ 10:00:00 - 10:29:59 ]

| Contract | Selected Price | Seed Price | Model | Volume | Bid | Ask | Snapshot Time |
| --- | --- | --- | --- | --- | --- | --- | --- |
| SR1Q0 | 99.9137 | 99.9137 | MID | 0 | 99.9125 | 99.915 | 10:23:05.675 |
| SR1U0 | 99.9225 | 99.9225 | MID | 0 | 99.92 | 99.925 | 10:23:05.675 |
| SR1V0 | 99.9325 | 99.9325 | MID | 0 | 99.93 | 99.935 | 10:23:05.675 |
| SR1X0 | 99.9375 | 99.9375 | MID | 0 | 99.935 | 99.94 | 10:23:05.675 |
| SR1Z0 | 99.9325 | 99.9325 | MID | 0 | 99.93 | 99.935 | 10:23:05.675 |
| SR1F1 | 99.94 | 99.94 | VWAP | 1 | 99.935 | 99.94 | 10:23:05.675 |
| SR1G1 | 99.9525 | 99.9525 | MID | 0 | 99.95 | 99.955 | 10:23:05.675 |
| SR3M0 | 99.9112 | 99.9112 | MID | 0 | 99.91 | 99.9125 | 10:23:05.675 |
| SR3U0 | 99.93 | 99.93 | VWAP | 16 | 99.93 | 99.935 | 10:23:05.675 |
| SR3Z0 | 99.9475 | 99.9475 | MID | 0 | 99.945 | 99.95 | 10:23:05.675 |
| SR3H1 | 99.9775 | 99.9775 | MID | 0 | 99.975 | 99.98 | 10:23:05.675 |

Interval 6

Total number of combinations SR1 (78125), Total volume SR1 (401), 5 optimal solutions found (limited to 5):

SR1 Ledger : ( Interval 6 )

(99.9150, 99.9250, 99.9350, 99.9350, 99.9325, 99.9400, 99.9525)
(99.9150, 99.9250, 99.9350, 99.9350, 99.9324, 99.9400, 99.9525)
(99.9150, 99.9250, 99.9350, 99.9350, 99.9325, 99.9400, 99.9524)
(99.9150, 99.9250, 99.9350, 99.9350, 99.9325, 99.9399, 99.9525)
(99.9150, 99.9250, 99.9350, 99.9350, 99.9325, 99.9401, 99.9525), Solution 1's sum of

squared difference of absolute value is: 0.0, Solution 2's sum of squared difference of absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement (99.9150, 99.9250, 99.9350, 99.9350, 99.9325, 99.9400, 99.9525)
Total number of combinations SR3 (625), Total volume SR3 (73), 5 optimal solutions found (limited to 5):
(99.9112, 99.9300, 99.9500, 99.9775)
(99.9111, 99.9300, 99.9500, 99.9775)
(99.9112, 99.9300, 99.9500, 99.9774)
(99.9112, 99.9300, 99.9500, 99.9776)
(99.9112, 99.9301, 99.9500, 99.9775), Solution 1's sum of squared difference of absolute value is: 0.0, Solution 2's sum of squared difference of absolute value is: 1.0E-8,

SR3 Ledger : ( Interval 6 )

Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement (99.9112, 99.9300, 99.9500, 99.9775)

Interval 6 [ 09:30:00 - 09:59:59 ]

| Contract | Selected Price | Seed Price | Model | Volume | Bid | Ask | Snapshot Time |
|---|---|---|---|---|---|---|---|
| SR1Q0 | 99.915 | 99.915 | VWAP | 15 | 99.9125 | 99.915 | 09:52:44.631 |
| SR1U0 | 99.925 | 99.925 | VWAP | 106 | 99.92 | 99.925 | 09:52:44.631 |
| SR1V0 | 99.935 | 99.935 | VWAP | 100 | 99.93 | 99.935 | 09:52:44.631 |
| SR1X0 | 99.935 | 99.935 | VWAP | 87 | 99.935 | 99.94 | 09:52:44.631 |
| SR1Z0 | 99.9325 | 99.9325 | MID | 0 | 99.93 | 99.935 | 09:52:44.631 |
| SR1F1 | 99.94 | 99.94 | VWAP | 93 | 99.935 | 99.945 | 09:52:44.631 |
| SR1G1 | 99.9525 | 99.9525 | MID | 0 | 99.95 | 99.955 | 09:52:44.631 |
| SR3M0 | 99.9112 | 99.9112 | MID | 0 | 99.91 | 99.9125 | 09:52:44.631 |
| SR3U0 | 99.93 | 99.93 | VWAP | 14 | 99.93 | 99.935 | 09:52:44.631 |
| SR3Z0 | 99.95 | 99.95 | VWAP | 59 | 99.945 | 99.95 | 09:52:44.631 |
| SR3H1 | 99.9775 | 99.9775 | MID | 0 | 99.975 | 99.98 | 09:52:44.631 |

Interval 5

Total number of combinations SR1 (78125), Total volume SR1 (283), 5 optimal solutions found (limited to 5):
(99.9150, 99.9225, 99.9350, 99.9375, 99.9350, 99.9400, 99.9525)
(99.9150, 99.9225, 99.9350, 99.9374, 99.9350, 99.9400, 99.9525)
(99.9150, 99.9224, 99.9350, 99.9375, 99.9350, 99.9400, 99.9525)
(99.9150, 99.9225, 99.9350, 99.9375, 99.9350, 99.9400, 99.9524)
(99.9150, 99.9225, 99.9350, 99.9375, 99.9350, 99.9400, 99.9526), Solution 1's sum of squared difference of absolute value is: 0.0, Solution 2's sum of squared difference of absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement (99.9150, 99.9225, 99.9350, 99.9375, 99.9350, 99.9400, 99.9525)

SR1 Ledger : ( Interval 5 )

| | |
|---|---|
| | Total number of combinations SR3 (625), Total volume SR3 (0), 5 optimal solutions found (limited to 5):<br>(99.9112, 99.9325, 99.9475, 99.9775)<br>(99.9111, 99.9325, 99.9475, 99.9775)<br>(99.9112, 99.9324, 99.9475, 99.9775)<br>(99.9112, 99.9325, 99.9475, 99.9774) |
| SR3<br>Ledger<br>: (<br>Interva<br>l 5 ) | (99.9113, 99.9325, 99.9475, 99.9775), Solution 1's sum of squared difference of absolute value is: 0.0, Solution 2's sum of squared difference of absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement<br>(99.9112, 99.9325, 99.9475, 99.9775) |

Interval 5 [ 09:00:00 - 09:29:59 ]

| Contract | Selected Price | Seed Price | Model | Volume | Bid | Ask | Snapshot Time |
|---|---|---|---|---|---|---|---|
| SR1Q0 | 99.915 | 99.915 | VWAP | 170 | 99.9125 | 99.915 | 09:29:16.628 |
| SR1U0 | 99.9225 | 99.9225 | MID | 0 | 99.92 | 99.925 | 09:29:16.628 |
| SR1V0 | 99.935 | 99.935 | VWAP | 53 | 99.93 | 99.935 | 09:29:16.628 |
| SR1X0 | 99.9375 | 99.9375 | MID | 0 | 99.935 | 99.94 | 09:29:16.628 |
| SR1Z0 | 99.935 | 99.935 | VWAP | 50 | 99.93 | 99.935 | 09:29:16.628 |
| SR1F1 | 99.94 | 99.94 | VWAP | 10 | 99.935 | 99.94 | 09:29:16.628 |
| SR1G1 | 99.9525 | 99.9525 | MID | 0 | 99.95 | 99.955 | 09:29:16.628 |
| SR3M0 | 99.9112 | 99.9112 | MID | 0 | 99.91 | 99.9125 | 09:29:16.628 |
| SR3U0 | 99.9325 | 99.9325 | MID | 0 | 99.93 | 99.935 | 09:29:16.628 |
| SR3Z0 | 99.9475 | 99.9475 | MID | 0 | 99.945 | 99.95 | 09:29:16.628 |
| SR3H1 | 99.9775 | 99.9775 | MID | 0 | 99.975 | 99.98 | 09:29:16.628 |

Interval 4

| | |
|---|---|
| | Total number of combinations SR1 (78125), Total volume SR1 (65), 5 optimal solutions found (limited to 5):<br>(99.9150, 99.9225, 99.9350, 99.9350, 99.9325, 99.9375, 99.9525)<br>(99.9150, 99.9224, 99.9350, 99.9350, 99.9325, 99.9375, 99.9525)<br>(99.9150, 99.9225, 99.9350, 99.9350, 99.9324, 99.9375, 99.9525)<br>(99.9150, 99.9225, 99.9350, 99.9350, 99.9325, 99.9375, 99.9524) |
| SR1<br>Ledger<br>: (<br>Interva<br>l 4 ) | (99.9150, 99.9225, 99.9350, 99.9350, 99.9325, 99.9376, 99.9525), Solution 1's sum of squared difference of absolute value is: 0.0, Solution 2's sum of squared difference of absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement<br>(99.9150, 99.9225, 99.9350, 99.9350, 99.9325, 99.9375, 99.9525) |
| SR3<br>Ledger<br>: (<br>Interva<br>l 4 ) | Total number of combinations SR3 (625), Total volume SR3 (76), 5 optimal solutions found (limited to 5):<br>(99.9112, 99.9325, 99.9500, 99.9800)<br>(99.9111, 99.9325, 99.9500, 99.9800)<br>(99.9112, 99.9324, 99.9500, 99.9800)<br>(99.9112, 99.9325, 99.9500, 99.9799)<br>(99.9112, 99.9326, 99.9500, 99.9800), Solution 1's sum of squared difference of |

absolute value is: 0.0, Solution 2's sum of squared difference of absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement
(99.9112, 99.9325, 99.9500, 99.9800)

Interval 4 [ 08:30:00 - 08:59:59 ]

| Contract | Selected Price | Seed Price | Model | Volume | Bid | Ask | Snapshot Time |
|---|---|---|---|---|---|---|---|
| SR1Q0 | 99.915 | 99.915 | VWAP | 1 | 99.9125 | 99.915 | 08:52:30.274 |
| SR1U0 | 99.9225 | 99.9225 | MID | 0 | 99.92 | 99.925 | 08:52:30.274 |
| SR1V0 | 99.935 | 99.935 | VWAP | 14 | 99.93 | 99.935 | 08:52:30.274 |
| SR1X0 | 99.935 | 99.935 | VWAP | 50 | 99.935 | 99.94 | 08:52:30.274 |
| SR1Z0 | 99.9325 | 99.9325 | MID | 0 | 99.93 | 99.935 | 08:52:30.274 |
| SR1F1 | 99.9375 | 99.9375 | MID | 0 | 99.935 | 99.94 | 08:52:30.274 |
| SR1G1 | 99.9525 | 99.9525 | MID | 0 | 99.95 | 99.955 | 08:52:30.274 |
| SR3M0 | 99.9112 | 99.9112 | MID | 0 | 99.91 | 99.9125 | 08:52:30.274 |
| SR3U0 | 99.9325 | 99.9325 | MID | 0 | 99.93 | 99.935 | 08:52:30.274 |
| SR3Z0 | 99.95 | 99.95 | VWAP | 70 | 99.945 | 99.95 | 08:52:30.274 |
| SR3H1 | 99.98 | 99.98 | VWAP | 6 | 99.975 | 99.98 | 08:52:30.274 |

Interval 3

|  |  |
|---|---|
|  | Total number of combinations SR1 (78125), Total volume SR1 (0), 5 optimal solutions found (limited to 5): |
|  | (99.9137, 99.9225, 99.9325, 99.9375, 99.9325, 99.9375, 99.9525) |
|  | (99.9137, 99.9225, 99.9325, 99.9374, 99.9325, 99.9375, 99.9525) |
|  | (99.9136, 99.9225, 99.9325, 99.9375, 99.9325, 99.9375, 99.9525) |
|  | (99.9137, 99.9224, 99.9325, 99.9375, 99.9325, 99.9375, 99.9525) |
| SR1 Ledger : ( Interval 3 ) | (99.9137, 99.9225, 99.9325, 99.9375, 99.9325, 99.9375, 99.9524), Solution 1's sum of squared difference of absolute value is: 0.0, Solution 2's sum of squared difference of absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement (99.9137, 99.9225, 99.9325, 99.9375, 99.9325, 99.9375, 99.9525) |
|  | Total number of combinations SR3 (625), Total volume SR3 (33), 5 optimal solutions found (limited to 5): |
|  | (99.9112, 99.9325, 99.9500, 99.9800) |
|  | (99.9111, 99.9325, 99.9500, 99.9800) |
|  | (99.9112, 99.9324, 99.9500, 99.9800) |
|  | (99.9112, 99.9325, 99.9500, 99.9799) |
| SR3 Ledger : ( Interval 3 ) | (99.9112, 99.9326, 99.9500, 99.9800), Solution 1's sum of squared difference of absolute value is: 0.0, Solution 2's sum of squared difference of absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement (99.9112, 99.9325, 99.9500, 99.9800) |

Interval 3 [ 08:00:00 - 08:29:59 ]

| Contract | Selected Price | Seed Price | Model | Volume | Bid | Ask | Snapshot Time |
|---|---|---|---|---|---|---|---|
| SR1Q0 | 99.9137 | 99.9137 | MID | 0 | 99.9125 | 99.915 | 08:27:28.858 |
| SR1U0 | 99.9225 | 99.9225 | MID | 0 | 99.92 | 99.925 | 08:27:28.858 |
| SR1V0 | 99.9325 | 99.9325 | MID | 0 | 99.93 | 99.935 | 08:27:28.858 |
| SR1X0 | 99.9375 | 99.9375 | MID | 0 | 99.935 | 99.94 | 08:27:28.858 |
| SR1Z0 | 99.9325 | 99.9325 | MID | 0 | 99.93 | 99.935 | 08:27:28.858 |
| SR1F1 | 99.9375 | 99.9375 | MID | 0 | 99.935 | 99.94 | 08:27:28.858 |
| SR1G1 | 99.9525 | 99.9525 | MID | 0 | 99.95 | 99.955 | 08:27:28.858 |
| SR3M0 | 99.9112 | 99.9112 | MID | 0 | 99.91 | 99.9125 | 08:27:28.858 |
| SR3U0 | 99.9325 | 99.9325 | MID | 0 | 99.93 | 99.935 | 08:27:28.858 |
| SR3Z0 | 99.95 | 99.95 | VWAP | 31 | 99.945 | 99.95 | 08:27:28.858 |
| SR3H1 | 99.98 | 99.98 | VWAP | 2 | 99.975 | 99.98 | 08:27:28.858 |

Interval 2

| | |
|---|---|
| | Total number of combinations SR1 (78125), Total volume SR1 (98), 5 optimal solutions found (limited to 5): |
| | (99.9150, 99.9225, 99.9325, 99.9350, 99.9325, 99.9400, 99.9550) |
| | (99.9150, 99.9224, 99.9325, 99.9350, 99.9325, 99.9400, 99.9550) |
| | (99.9150, 99.9225, 99.9325, 99.9350, 99.9324, 99.9400, 99.9550) |
| | (99.9150, 99.9225, 99.9325, 99.9350, 99.9325, 99.9399, 99.9550) |
| | (99.9150, 99.9225, 99.9325, 99.9350, 99.9325, 99.9400, 99.9549), Solution 1's sum of squared difference of absolute value is: 0.0, Solution 2's sum of squared difference of |
| SR1 Ledger : ( Interval 2 ) | absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement (99.9150, 99.9225, 99.9325, 99.9350, 99.9325, 99.9400, 99.9550) |
| | Total number of combinations SR3 (625), Total volume SR3 (1245), 5 optimal solutions found (limited to 5): |
| | (99.9112, 99.9325, 99.9500, 99.9800) |
| | (99.9111, 99.9325, 99.9500, 99.9800) |
| | (99.9112, 99.9324, 99.9500, 99.9800) |
| | (99.9112, 99.9325, 99.9500, 99.9799) |
| | (99.9112, 99.9326, 99.9500, 99.9800), Solution 1's sum of squared difference of absolute value is: 0.0, Solution 2's sum of squared difference of absolute value is: 1.0E-8, |
| SR3 Ledger : ( Interval 2 ) | Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement (99.9112, 99.9325, 99.9500, 99.9800) |

Interval 2 [ 07:30:00 - 07:59:59 ]

| Contract | Selected Price | Seed Price | Model | Volume | Bid | Ask | Snapshot Time |
|---|---|---|---|---|---|---|---|
| SR1Q0 | 99.915 | 99.915 | VWAP | 2 | 99.9125 | 99.915 | 07:59:34.209 |
| SR1U0 | 99.9225 | 99.9225 | MID | 0 | 99.92 | 99.925 | 07:59:34.209 |
| SR1V0 | 99.9325 | 99.9325 | MID | 0 | 99.93 | 99.935 | 07:59:34.209 |
| SR1X0 | 99.935 | 99.935 | VWAP | 8 | 99.935 | 99.94 | 07:59:34.209 |

| | | | | | | | |
|---|---|---|---|---|---|---|---|
| SR1Z0 | 99.9325 | 99.9325 | MID | 0 | 99.93 | 99.935 | 07:59:34.209 |
| SR1F1 | 99.94 | 99.94 | VWAP | 19 | 99.935 | 99.94 | 07:59:34.209 |
| SR1G1 | 99.955 | 99.955 | VWAP | 69 | 99.95 | 99.955 | 07:59:34.209 |
| SR3M0 | 99.9112 | 99.9112 | MID | 0 | 99.91 | 99.9125 | 07:59:34.209 |
| SR3U0 | 99.9325 | 99.9325 | MID | 0 | 99.93 | 99.935 | 07:59:34.209 |
| SR3Z0 | 99.95 | 99.95 | VWAP | 769 | 99.945 | 99.95 | 07:59:34.209 |
| SR3H1 | 99.98 | 99.98 | VWAP | 476 | 99.975 | 99.98 | 07:59:34.209 |

Interval 1

| | |
|---|---|
| | Total number of combinations SR1 (78125), Total volume SR1 (123), 5 optimal solutions found (limited to 5): |
| | (99.9150, 99.9225, 99.9350, 99.9375, 99.9325, 99.9400, 99.9550) |
| | (99.9150, 99.9225, 99.9350, 99.9374, 99.9325, 99.9400, 99.9550) |
| | (99.9150, 99.9224, 99.9350, 99.9375, 99.9325, 99.9400, 99.9550) |
| | (99.9150, 99.9225, 99.9350, 99.9375, 99.9325, 99.9399, 99.9550) |
| SR1 Ledger : ( Interval 1 ) | (99.9150, 99.9225, 99.9350, 99.9375, 99.9325, 99.9400, 99.9551), Solution 1's sum of squared difference of absolute value is: 0.0, Solution 2's sum of squared difference of absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement (99.9150, 99.9225, 99.9350, 99.9375, 99.9325, 99.9400, 99.9550) |
| | Total number of combinations SR3 (625), Total volume SR3 (87), 5 optimal solutions found (limited to 5): |
| | (99.9112, 99.9300, 99.9500, 99.9800) |
| | (99.9111, 99.9300, 99.9500, 99.9800) |
| | (99.9112, 99.9301, 99.9500, 99.9800) |
| | (99.9113, 99.9300, 99.9500, 99.9800) |
| SR3 Ledger : ( Interval 1 ) | (99.9111, 99.9301, 99.9500, 99.9800), Solution 1's sum of squared difference of absolute value is: 0.0, Solution 2's sum of squared difference of absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 2.0E-8, Selecting solution based on lowest sum of squared difference which is closest to the VWAP and finalizing settlement (99.9112, 99.9300, 99.9500, 99.9800) |

Interval 1 [ 07:00:00 - 07:29:59 ]

| Contract | Selected Price | Seed Price | Model | Volume | Bid | Ask | Snapshot Time |
|---|---|---|---|---|---|---|---|
| SR1Q0 | 99.915 | 99.915 | VWAP | 46 | 99.9125 | 99.915 | 07:20:18.249 |
| SR1U0 | 99.9225 | 99.9225 | MID | 0 | 99.92 | 99.925 | 07:20:18.249 |
| SR1V0 | 99.935 | 99.935 | VWAP | 50 | 99.935 | 99.94 | 07:20:18.249 |
| SR1X0 | 99.9375 | 99.9375 | MID | 0 | 99.935 | 99.94 | 07:20:18.249 |
| SR2Z0 | 99.9325 | 99.9325 | MID | 0 | 99.93 | 99.935 | 07:20:18.249 |
| SR1F1 | 99.94 | 99.94 | VWAP | 5 | 99.935 | 99.94 | 07:20:18.249 |
| SR1G1 | 99.955 | 99.955 | VWAP | 22 | 99.955 | 99.96 | 07:20:18.249 |
| SR3M0 | 99.9112 | 99.9112 | MID | 0 | 99.91 | 99.9125 | 07:20:18.249 |
| SR3U0 | 99.93 | 99.93 | VWAP | 3 | 99.93 | 99.935 | 07:20:18.249 |
| SR3Z0 | 99.95 | 99.95 | VWAP | 79 | 99.95 | 99.955 | 07:20:18.249 |

| SR3H1 | 99.98 | | 99.98 | | VWAP | 5 | | 99.98 | 99.985 | 07:20:18.249 |

# Example 2 – Alternate Scenarios

Base Data for Aug. 5, 2020

| Tenor | Term Rates SOFR Strip Rate (%) | Last Published | Ledger |
|---|---|---|---|
| 1 Month | 0.0922 | | Tolerance Check: Max, Calculating the absolute value of the Rate Net Change for tenor, 1 Month (0.0014600 rate net change), Calculating the absolute value of the Maximum Final Calculation Rate Change * 150%: 0.00900, Checking Tenor's Net Change vs. the Maximum Final Calculation Net Change, 1 Month 0.0014600 <= 1.5 * Max Final Calculation Rate Change |
| 3 Month | 0.0837 | | Tolerance Check: Max, Calculating the absolute value of the Rate Net Change for tenor, 3 Month (0.0020100 rate net change), Calculating the absolute value of the Maximum Final Calculation Rate Change * 150%: 0.00900, Checking Tenor's Net Change vs. the Maximum Final Calculation Net Change, 3 Month 0.0020100 <= 1.5 * Max Final Calculation Rate Change |
| 6 Month | 0.0779 | | Tolerance Check: Max, Calculating the absolute value of the Rate Net Change for tenor, 6 Month (0.0026400 rate net change), Calculating the absolute value of the Maximum Final Calculation Rate Change * 150%: 0.00900, Checking Tenor's Net Change vs. the Maximum Final Calculation Net Change, 6 Month 0.0026400 <= 1.5 * Max Final Calculation Rate Change |

| Contract | Prior | Final VWAP Final VWAP | Manual Price | Last Updated | Ledger |
|---|---|---|---|---|---|
| SR1Q0 | 99.9071 | 99.9048 | | 14:01:01.013 By ERE | Total Volume from each hour 8228, Finalizing price from outright VWAP 99.9148 |
| SR1U0 | 99.9139 | 99.9133 | | 14:01:01.013 By ERE | Total Volume from each hour 8228, Finalizing price from outright VWAP 99.9233 |
| SR1V0 | 99.9275 | 99.9235 | | 14:01:01.013 By ERE | Total Volume from each hour 8228, Finalizing price from outright VWAP 99.9335 |
| SR1X0 | 99.9291 | 99.9252 | | 14:01:01.013 By ERE | Total Volume from each hour 8228, Finalizing price from outright VWAP 99.9352 |
| SR1Z0 | 99.9262 | 99.9228 | | 14:01:01.013 By ERE | Total Volume from each hour 8228, Finalizing price from outright VWAP 99.9328 |
| SR1F1 | 99.9344 | 99.9297 | | 14:01:01.013 By ERE | Total Volume from each hour 8228, Finalizing price from outright VWAP 99.9397 |

|  | 99.949 | 99.943 | 14:01:01.0 | Total Volume from each hour 8228, Finalizing |
| SR1G1 | 6 | 6 | 13 By ERE | price from outright VWAP 99.9536 |
|  | 99.902 | 99.901 | 14:01:01.0 | Total Volume from each hour 8228, Finalizing |
| SR3M0 | 3 | 2 | 13 By ERE | price from outright VWAP 99.9112 |
|  | 99.923 | 99.920 | 14:01:01.0 | Total Volume from each hour 8228, Finalizing |
| SR3U0 | 1 | 5 | 13 By ERE | price from outright VWAP 99.9305 |
|  | 99.941 | 99.938 | 14:01:01.0 | Total Volume from each hour 8228, Finalizing |
| SR3Z0 | 9 | 2 | 13 By ERE | price from outright VWAP 99.9482 |
|  |  |  | 14:01:01.0 | Total Volume from each hour 8228, Finalizing |
| SR3H1 | 99.97 | 99.968 | 13 By ERE | price from outright VWAP 99.9780 |

|  |  |
| --- | --- |
|  | Total number of combinations SR1 (78125), Total volume SR1 (1435), 5 optimal solutions found (limited to 5): |
|  | (99.9150, 99.9250, 99.9350, 99.9350, 99.9325, 99.9400, 99.9550) |
|  | (99.9150, 99.9250, 99.9350, 99.9350, 99.9324, 99.9400, 99.9550) |
|  | (99.9150, 99.9250, 99.9350, 99.9350, 99.9325, 99.9400, 99.9549) |
|  | (99.9150, 99.9250, 99.9350, 99.9350, 99.9325, 99.9399, 99.9550) |
|  | (99.9150, 99.9250, 99.9350, 99.9350, 99.9325, 99.9400, 99.9551), Solution 1's sum of squared difference of absolute value is: 0.0, Solution 2's sum of squared difference of |
| SR1 Ledger : ( Interva l 14 ) | absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement (99.9150, 99.9250, 99.9350, 99.9350, 99.9325, 99.9400, 99.9550) |
|  | Total number of combinations SR3 (625), Total volume SR3 (18), 5 optimal solutions found (limited to 5): |
|  | (99.9112, 99.9300, 99.9475, 99.9775) |
|  | (99.9112, 99.9300, 99.9474, 99.9775) |
|  | (99.9111, 99.9300, 99.9475, 99.9775) |
|  | (99.9112, 99.9300, 99.9475, 99.9774) |
|  | (99.9112, 99.9300, 99.9475, 99.9776), Solution 1's sum of squared difference of absolute value is: 0.0, Solution 2's sum of squared difference of absolute value is: 1.0E-8, |
| SR3 Ledger : ( Interva l 14 ) | Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement (99.9112, 99.9300, 99.9475, 99.9775) |

Interval 14 [ 13:30:00 - 13:59:59 ]

| Contract | Selected Price | Seed Price | Model | Volume | Bid | Ask | Snapshot Time |
| --- | --- | --- | --- | --- | --- | --- | --- |
| SR1Q0 | 99.905 | 99.905 | VWAP | 24 | 99.905 | 99.9075 | 13:55:48.974 |
| SR1U0 | 99.915 | 99.915 | VWAP | 1013 | 99.91 | 99.915 | 13:55:48.974 |
| SR1V0 | 99.925 | 99.925 | VWAP | 45 | 99.92 | 99.925 | 13:55:48.974 |
| SR1X0 | 99.925 | 99.925 | VWAP | 329 | 99.92 | 99.925 | 13:55:48.974 |
| SR1Z0 | 99.9225 | 99.9225 | MID | 0 | 99.92 | 99.925 | 13:55:48.974 |
| SR1F1 | 99.93 | 99.93 | VWAP | 3 | 99.925 | 99.93 | 13:55:48.974 |
| SR1G1 | 99.945 | 99.945 | VWAP | 21 | 99.94 | 99.95 | 13:55:48.974 |
| SR3M0 | 99.9012 | 99.9012 | MID | 0 | 99.9 | 99.9025 | 13:55:48.974 |

| | | | | | | | |
|---|---|---|---|---|---|---|---|
| SR3U0 | 99.92 | 99.92 | VWAP | 18 | 99.915 | 99.92 | 13:55:48.974 |
| SR3Z0 | 99.9375 | 99.9375 | MID | 0 | 99.935 | 99.94 | 13:55:48.974 |
| SR3H1 | 99.9675 | 99.9675 | MID | 0 | 99.965 | 99.97 | 13:55:48.974 |

**SR1 Ledger : ( Interval 13 )**

Total number of combinations SR1 (78125), Total volume SR1 (253), 5 optimal solutions found (limited to 5):
(99.9150, 99.9250, 99.9350, 99.9350, 99.9350, 99.9400, 99.9550)
(99.9150, 99.9250, 99.9350, 99.9350, 99.9350, 99.9400, 99.9551)
(99.9150, 99.9250, 99.9350, 99.9350, 99.9349, 99.9400, 99.9550)
(99.9150, 99.9249, 99.9350, 99.9350, 99.9350, 99.9400, 99.9550)
(99.9149, 99.9250, 99.9350, 99.9350, 99.9350, 99.9400, 99.9550), Solution 1's sum of squared difference of absolute value is: 0.0, Solution 2's sum of squared difference of absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement
(99.9150, 99.9250, 99.9350, 99.9350, 99.9350, 99.9400, 99.9550)

**SR3 Ledger : ( Interval 13 )**

Total number of combinations SR3 (625), Total volume SR3 (373), 5 optimal solutions found (limited to 5):
(99.9112, 99.9300, 99.9475, 99.9775)
(99.9111, 99.9300, 99.9475, 99.9775)
(99.9112, 99.9300, 99.9475, 99.9774)
(99.9112, 99.9299, 99.9475, 99.9775)
(99.9113, 99.9300, 99.9475, 99.9775), Solution 1's sum of squared difference of absolute value is: 0.0, Solution 2's sum of squared difference of absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement
(99.9112, 99.9300, 99.9475, 99.9775)

Interval 13 [ 13:00:00 - 13:29:59 ]

| Contract | Selected Price | Seed Price | Model | Volume | Bid | Ask | Snapshot Time |
|---|---|---|---|---|---|---|---|
| SR1Q0 | 99.905 | 99.905 | VWAP | 11 | 99.9025 | 99.905 | 13:23:28.686 |
| SR1U0 | 99.915 | 99.915 | VWAP | 52 | 99.91 | 99.915 | 13:23:28.686 |
| SR1V0 | 99.925 | 99.925 | VWAP | 56 | 99.92 | 99.925 | 13:23:28.686 |
| SR1X0 | 99.925 | 99.925 | VWAP | 29 | 99.92 | 99.925 | 13:23:28.686 |
| SR1Z0 | 99.925 | 99.925 | VWAP | 51 | 99.92 | 99.925 | 13:23:28.686 |
| SR1F1 | 99.93 | 99.93 | VWAP | 4 | 99.925 | 99.93 | 13:23:28.686 |
| SR1G1 | 99.945 | 99.945 | VWAP | 50 | 99.945 | 99.95 | 13:23:28.686 |
| SR3M0 | 99.9012 | 99.9012 | MID | 0 | 99.9 | 99.9025 | 13:23:28.686 |
| SR3U0 | 99.92 | 99.92 | VWAP | 373 | 99.915 | 99.92 | 13:23:28.686 |
| SR3Z0 | 99.9375 | 99.9375 | MID | 0 | 99.935 | 99.94 | 13:23:28.686 |
| SR3H1 | 99.9675 | 99.9675 | MID | 0 | 99.965 | 99.97 | 13:23:28.686 |

Total number of combinations SR1 (78125), Total volume SR1 (2103), 5 optimal solutions found (limited to 5):
(99.9150, 99.9225, 99.9325, 99.9350, 99.9325, 99.9400, 99.9525)
(99.9150, 99.9224, 99.9325, 99.9350, 99.9325, 99.9400, 99.9525)
(99.9150, 99.9225, 99.9325, 99.9350, 99.9324, 99.9400, 99.9525)
(99.9150, 99.9225, 99.9325, 99.9350, 99.9325, 99.9400, 99.9524)
(99.9150, 99.9225, 99.9325, 99.9350, 99.9325, 99.9399, 99.9525), Solution 1's sum of squared difference of absolute value is: 0.0, Solution 2's sum of squared difference of

**SR1 Ledger : ( Interval 12 )**

absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement
(99.9150, 99.9225, 99.9325, 99.9350, 99.9325, 99.9400, 99.9525)

Total number of combinations SR3 (625), Total volume SR3 (582), 5 optimal solutions found (limited to 5):
(99.9112, 99.9300, 99.9475, 99.9775)
(99.9111, 99.9300, 99.9475, 99.9775)
(99.9112, 99.9300, 99.9475, 99.9774)
(99.9112, 99.9299, 99.9475, 99.9775)
(99.9113, 99.9300, 99.9475, 99.9775), Solution 1's sum of squared difference of absolute value is: 0.0, Solution 2's sum of squared difference of absolute value is: 1.0E-8,

**SR3 Ledger : ( Interval 12 )**

Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement
(99.9112, 99.9300, 99.9475, 99.9775)

Interval 12 [ 12:30:00 - 12:59:59 ]

| Contract | Selected Price | Seed Price | Model | Volume | Bid | Ask | Snapshot Time |
|---|---|---|---|---|---|---|---|
| SR1Q0 | 99.905 | 99.905 | VWAP | 1695 | 99.902 5 | 99.905 | 12:51:35.778 |
| SR1U0 | 99.9125 | 99.9125 | MID | 0 | 99.91 | 99.915 | 12:51:35.778 |
| SR1V0 | 99.9225 | 99.9225 | MID | 0 | 99.92 | 99.925 | 12:51:35.778 |
| SR1X0 | 99.925 | 99.925 | VWAP | 358 | 99.92 | 99.925 | 12:51:35.778 |
| SR1Z0 | 99.9225 | 99.9225 | MID | 0 | 99.92 | 99.925 | 12:51:35.778 |
| SR1F1 | 99.93 | 99.93 | VWAP | 50 | 99.925 | 99.93 | 12:51:35.778 |
| SR1G1 | 99.9425 | 99.9425 | MID | 0 | 99.94 | 99.945 | 12:51:35.778 |
| SR3M0 | 99.9012 | 99.9012 | MID | 0 | 99.9 | 99.902 5 | 12:51:35.778 |
| SR3U0 | 99.92 | 99.92 | VWAP | 582 | 99.915 | 99.92 | 12:51:35.778 |
| SR3Z0 | 99.9375 | 99.9375 | MID | 0 | 99.935 | 99.94 | 12:51:35.778 |
| SR3H1 | 99.9675 | 99.9675 | MID | 0 | 99.965 | 99.97 | 12:51:35.778 |

| | |
|---|---|
| SR1 Ledger : ( Interval 11 ) | Total number of combinations SR1 (78125), Total volume SR1 (54), 5 optimal solutions found (limited to 5):<br>(99.9137, 99.9225, 99.9325, 99.9350, 99.9325, 99.9375, 99.9525)<br>(99.9136, 99.9225, 99.9325, 99.9350, 99.9325, 99.9375, 99.9525)<br>(99.9137, 99.9224, 99.9325, 99.9350, 99.9325, 99.9375, 99.9525)<br>(99.9137, 99.9225, 99.9325, 99.9350, 99.9324, 99.9375, 99.9525)<br>(99.9137, 99.9225, 99.9325, 99.9350, 99.9325, 99.9375, 99.9524), Solution 1's sum of squared difference of absolute value is: 0.0, Solution 2's sum of squared difference of absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement (99.9137, 99.9225, 99.9325, 99.9350, 99.9325, 99.9375, 99.9525) |
| SR3 Ledger : ( Interval 11 ) | Total number of combinations SR3 (625), Total volume SR3 (788), 5 optimal solutions found (limited to 5):<br>(99.9112, 99.9300, 99.9475, 99.9775)<br>(99.9111, 99.9300, 99.9475, 99.9775)<br>(99.9112, 99.9300, 99.9475, 99.9774)<br>(99.9112, 99.9301, 99.9475, 99.9775)<br>(99.9113, 99.9300, 99.9475, 99.9775), Solution 1's sum of squared difference of absolute value is: 0.0, Solution 2's sum of squared difference of absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement (99.9112, 99.9300, 99.9475, 99.9775) |

Interval 11 [ 12:00:00 - 12:29:59 ]

| Contract | Selected Price | Seed Price | Model | Volume | Bid | Ask | Snapshot Time |
|---|---|---|---|---|---|---|---|
| SR1Q0 | 99.9037 | 99.9037 | MID | 0 | 99.902 5 | 99.905 | 12:21:34.221 |
| SR1U0 | 99.9125 | 99.9125 | MID | 0 | 99.91 | 99.915 | 12:21:34.221 |
| SR1V0 | 99.9225 | 99.9225 | MID | 0 | 99.92 | 99.925 | 12:21:34.221 |
| SR1X0 | 99.925 | 99.925 | VWAP | 54 | 99.925 | 99.93 | 12:21:34.221 |
| SR1Z0 | 99.9225 | 99.9225 | MID | 0 | 99.92 | 99.925 | 12:21:34.221 |
| SR1F1 | 99.9275 | 99.9275 | MID | 0 | 99.925 | 99.93 | 12:21:34.221 |
| SR1G1 | 99.9425 | 99.9425 | MID | 0 | 99.94 | 99.945 | 12:21:34.221 |
| SR3M0 | 99.9012 | 99.9012 | MID | 0 | 99.9 | 99.902 5 | 12:21:34.221 |
| SR3U0 | 99.92 | 99.92 | VWAP | 788 | 99.92 | 99.925 | 12:21:34.221 |
| SR3Z0 | 99.9375 | 99.9375 | MID | 0 | 99.935 | 99.94 | 12:21:34.221 |
| SR3H1 | 99.9675 | 99.9675 | MID | 0 | 99.965 | 99.97 | 12:21:34.221 |

| | |
|---|---|
| SR1 Ledger | Total number of combinations SR1 (78125), Total volume SR1 (0), 5 optimal solutions found (limited to 5): |

: (
Interva
l 10 )

(99.9137, 99.9225, 99.9325, 99.9375, 99.9325, 99.9375, 99.9525)
(99.9137, 99.9225, 99.9325, 99.9374, 99.9325, 99.9375, 99.9525)
(99.9136, 99.9225, 99.9325, 99.9375, 99.9325, 99.9375, 99.9525)
(99.9137, 99.9224, 99.9325, 99.9375, 99.9325, 99.9375, 99.9525)
(99.9137, 99.9225, 99.9325, 99.9375, 99.9325, 99.9375, 99.9524), Solution 1's sum of squared difference of absolute value is: 0.0, Solution 2's sum of squared difference of absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement
(99.9137, 99.9225, 99.9325, 99.9375, 99.9325, 99.9375, 99.9525)
Total number of combinations SR3 (625), Total volume SR3 (23), 5 optimal solutions found (limited to 5):
(99.9112, 99.9300, 99.9475, 99.9775)
(99.9111, 99.9300, 99.9475, 99.9775)
(99.9112, 99.9300, 99.9475, 99.9774)
(99.9112, 99.9301, 99.9475, 99.9775)
(99.9113, 99.9300, 99.9475, 99.9775), Solution 1's sum of squared difference of absolute value is: 0.0, Solution 2's sum of squared difference of absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement

SR3
Ledger
: (
Interva
l 10 )

(99.9112, 99.9300, 99.9475, 99.9775)

Interval 10 [ 11:30:00 - 11:59:59 ]

| Contract | Selected Price | Seed Price | Model | Volume | Bid | Ask | Snapshot Time |
|---|---|---|---|---|---|---|---|
| SR1Q0 | 99.9037 | 99.9037 | MID | 0 | 99.902 5 | 99.905 | 11:54:00.074 |
| SR1U0 | 99.9125 | 99.9125 | MID | 0 | 99.91 | 99.915 | 11:54:00.074 |
| SR1V0 | 99.9225 | 99.9225 | MID | 0 | 99.92 | 99.925 | 11:54:00.074 |
| SR1X0 | 99.9275 | 99.9275 | MID | 0 | 99.925 | 99.93 | 11:54:00.074 |
| SR1Z0 | 99.9225 | 99.9225 | MID | 0 | 99.92 | 99.925 | 11:54:00.074 |
| SR1F1 | 99.9275 | 99.9275 | MID | 0 | 99.925 | 99.93 | 11:54:00.074 |
| SR1G1 | 99.9425 | 99.9425 | MID | 0 | 99.94 | 99.945 | 11:54:00.074 |
| SR3M0 | 99.9012 | 99.9012 | MID | 0 | 99.9 | 99.902 5 | 11:54:00.074 |
| SR3U0 | 99.92 | 99.92 | VWAP | 23 | 99.92 | 99.925 | 11:54:00.074 |
| SR3Z0 | 99.9375 | 99.9375 | MID | 0 | 99.935 | 99.94 | 11:54:00.074 |
| SR3H1 | 99.9675 | 99.9675 | MID | 0 | 99.965 | 99.97 | 11:54:00.074 |

SR1
Ledger
: (

Total number of combinations SR1 (78125), Total volume SR1 (91), 5 optimal solutions found (limited to 5):
(99.9137, 99.9250, 99.9350, 99.9375, 99.9325, 99.9375, 99.9525)
(99.9137, 99.9250, 99.9350, 99.9374, 99.9325, 99.9375, 99.9525)

Interval 9 )
(99.9136, 99.9250, 99.9350, 99.9375, 99.9325, 99.9375, 99.9525)
(99.9137, 99.9250, 99.9350, 99.9375, 99.9325, 99.9375, 99.9524)
(99.9137, 99.9250, 99.9350, 99.9375, 99.9325, 99.9376, 99.9525), Solution 1's sum of squared difference of absolute value is: 0.0, Solution 2's sum of squared difference of absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement
(99.9137, 99.9250, 99.9350, 99.9375, 99.9325, 99.9375, 99.9525)
Total number of combinations SR3 (625), Total volume SR3 (4), 5 optimal solutions found (limited to 5):
(99.9112, 99.9300, 99.9475, 99.9775)
(99.9111, 99.9300, 99.9475, 99.9775)
(99.9112, 99.9300, 99.9475, 99.9774)
(99.9112, 99.9301, 99.9475, 99.9775)
(99.9113, 99.9300, 99.9475, 99.9775), Solution 1's sum of squared difference of absolute value is: 0.0, Solution 2's sum of squared difference of absolute value is: 1.0E-8,

SR3 Ledger : ( Interval 9 )
Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement
(99.9112, 99.9300, 99.9475, 99.9775)

### Interval 9 [ 11:00:00 - 11:29:59 ]

| Contract | Selected Price | Seed Price | Model | Volume | Bid | Ask | Snapshot Time |
|---|---|---|---|---|---|---|---|
| SR1Q0 | 99.9037 | 99.9037 | MID | 0 | 99.9025 | 99.905 | 11:22:49.275 |
| SR1U0 | 99.915 | 99.915 | VWAP | 80 | 99.91 | 99.915 | 11:22:49.275 |
| SR1V0 | 99.925 | 99.925 | VWAP | 11 | 99.92 | 99.925 | 11:22:49.275 |
| SR1X0 | 99.9275 | 99.9275 | MID | 0 | 99.925 | 99.93 | 11:22:49.275 |
| SR1Z0 | 99.9225 | 99.9225 | MID | 0 | 99.92 | 99.925 | 11:22:49.275 |
| SR1F1 | 99.9275 | 99.9275 | MID | 0 | 99.925 | 99.93 | 11:22:49.275 |
| SR1G1 | 99.9425 | 99.9425 | MID | 0 | 99.94 | 99.945 | 11:22:49.275 |
| SR3M0 | 99.9012 | 99.9012 | MID | 0 | 99.9 | 99.9025 | 11:22:49.275 |
| SR3U0 | 99.92 | 99.92 | VWAP | 4 | 99.92 | 99.925 | 11:22:49.275 |
| SR3Z0 | 99.9375 | 99.9375 | MID | 0 | 99.935 | 99.94 | 11:22:49.275 |
| SR3H1 | 99.9675 | 99.9675 | MID | 0 | 99.965 | 99.97 | 11:22:49.275 |

Total number of combinations SR1 (78125), Total volume SR1 (3), 5 optimal solutions found (limited to 5):
(99.9137, 99.9225, 99.9325, 99.9350, 99.9325, 99.9375, 99.9525)
(99.9136, 99.9225, 99.9325, 99.9350, 99.9325, 99.9375, 99.9525)

SR1 Ledger : ( Interval 8 )
(99.9137, 99.9224, 99.9325, 99.9350, 99.9325, 99.9375, 99.9525)
(99.9137, 99.9225, 99.9325, 99.9350, 99.9324, 99.9375, 99.9525)
(99.9137, 99.9225, 99.9325, 99.9350, 99.9325, 99.9375, 99.9524), Solution 1's sum of squared difference of absolute value is: 0.0, Solution 2's sum of squared difference of absolute value is: 1.0E-8, Solution 3's sum of squared difference of absolute value is:

1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement (99.9137, 99.9225, 99.9325, 99.9350, 99.9325, 99.9375, 99.9525)
Total number of combinations SR3 (625), Total volume SR3 (0), 5 optimal solutions found (limited to 5):
(99.9112, 99.9325, 99.9475, 99.9775)
(99.9111, 99.9325, 99.9475, 99.9775)
(99.9112, 99.9324, 99.9475, 99.9775)
(99.9112, 99.9325, 99.9475, 99.9774)

|  |  |
|---|---|
| SR3 Ledger : ( Interval 8 ) | (99.9113, 99.9325, 99.9475, 99.9775), Solution 1's sum of squared difference of absolute value is: 0.0, Solution 2's sum of squared difference of absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement (99.9112, 99.9325, 99.9475, 99.9775) |

Interval 8 [ 10:30:00 - 10:59:59 ]

| Contract | Selected Price | Seed Price | Model | Volume | Bid | Ask | Snapshot Time |
|---|---|---|---|---|---|---|---|
| SR1Q0 | 99.9037 | 99.9037 | MID | 0 | 99.9025 | 99.905 | 10:58:30.554 |
| SR1U0 | 99.9125 | 99.9125 | MID | 0 | 99.91 | 99.915 | 10:58:30.554 |
| SR1V0 | 99.9225 | 99.9225 | MID | 0 | 99.92 | 99.925 | 10:58:30.554 |
| SR1X0 | 99.925 | 99.925 | VWAP | 3 | 99.925 | 99.93 | 10:58:30.554 |
| SR1Z0 | 99.9225 | 99.9225 | MID | 0 | 99.92 | 99.925 | 10:58:30.554 |
| SR1F1 | 99.9275 | 99.9275 | MID | 0 | 99.925 | 99.93 | 10:58:30.554 |
| SR1G1 | 99.9425 | 99.9425 | MID | 0 | 99.94 | 99.945 | 10:58:30.554 |
| SR3M0 | 99.9012 | 99.9012 | MID | 0 | 99.9 | 99.9025 | 10:58:30.554 |
| SR3U0 | 99.9225 | 99.9225 | MID | 0 | 99.92 | 99.925 | 10:58:30.554 |
| SR3Z0 | 99.9375 | 99.9375 | MID | 0 | 99.935 | 99.94 | 10:58:30.554 |
| SR3H1 | 99.9675 | 99.9675 | MID | 0 | 99.965 | 99.97 | 10:58:30.554 |

Total number of combinations SR1 (78125), Total volume SR1 (1), 5 optimal solutions found (limited to 5):
(99.9137, 99.9225, 99.9325, 99.9375, 99.9325, 99.9400, 99.9525)
(99.9137, 99.9225, 99.9325, 99.9374, 99.9325, 99.9400, 99.9525)
(99.9136, 99.9225, 99.9325, 99.9375, 99.9325, 99.9400, 99.9525)
(99.9137, 99.9224, 99.9325, 99.9375, 99.9325, 99.9400, 99.9525)

|  |  |
|---|---|
| SR1 Ledger : ( Interval 7 ) | (99.9137, 99.9225, 99.9325, 99.9375, 99.9325, 99.9400, 99.9524), Solution 1's sum of squared difference of absolute value is: 0.0, Solution 2's sum of squared difference of absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement (99.9137, 99.9225, 99.9325, 99.9375, 99.9325, 99.9400, 99.9525) |

Total number of combinations SR3 (625), Total volume SR3 (16), 5 optimal solutions found (limited to 5):
(99.9112, 99.9300, 99.9475, 99.9775)
(99.9111, 99.9300, 99.9475, 99.9775)
(99.9112, 99.9300, 99.9475, 99.9774)
(99.9112, 99.9301, 99.9475, 99.9775)
(99.9113, 99.9300, 99.9475, 99.9775), Solution 1's sum of squared difference of absolute value is: 0.0, Solution 2's sum of squared difference of absolute value is: 1.0E-8,

SR3 Ledger : ( Interval 7 ) — Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement
(99.9112, 99.9300, 99.9475, 99.9775)

Interval 7 [ 10:00:00 - 10:29:59 ]

| Contract | Selected Price | Seed Price | Model | Volume | Bid | Ask | Snapshot Time |
|---|---|---|---|---|---|---|---|
| SR1Q0 | 99.9037 | 99.9037 | MID | 0 | 99.9025 | 99.905 | 10:23:05.675 |
| SR1U0 | 99.9125 | 99.9125 | MID | 0 | 99.91 | 99.915 | 10:23:05.675 |
| SR1V0 | 99.9225 | 99.9225 | MID | 0 | 99.92 | 99.925 | 10:23:05.675 |
| SR1X0 | 99.9275 | 99.9275 | MID | 0 | 99.925 | 99.93 | 10:23:05.675 |
| SR1Z0 | 99.9225 | 99.9225 | MID | 0 | 99.92 | 99.925 | 10:23:05.675 |
| SR1F1 | 99.93 | 99.93 | VWAP | 1 | 99.925 | 99.93 | 10:23:05.675 |
| SR1G1 | 99.9425 | 99.9425 | MID | 0 | 99.94 | 99.945 | 10:23:05.675 |
| SR3M0 | 99.9012 | 99.9012 | MID | 0 | 99.9 | 99.9025 | 10:23:05.675 |
| SR3U0 | 99.92 | 99.92 | VWAP | 16 | 99.92 | 99.925 | 10:23:05.675 |
| SR3Z0 | 99.9375 | 99.9375 | MID | 0 | 99.935 | 99.94 | 10:23:05.675 |
| SR3H1 | 99.9675 | 99.9675 | MID | 0 | 99.965 | 99.97 | 10:23:05.675 |

Total number of combinations SR1 (78125), Total volume SR1 (401), 5 optimal solutions found (limited to 5):
(99.9150, 99.9250, 99.9350, 99.9350, 99.9325, 99.9400, 99.9525)
(99.9150, 99.9250, 99.9350, 99.9350, 99.9324, 99.9400, 99.9525)
(99.9150, 99.9250, 99.9350, 99.9350, 99.9325, 99.9400, 99.9524)
(99.9150, 99.9250, 99.9350, 99.9350, 99.9325, 99.9399, 99.9525)
(99.9150, 99.9250, 99.9350, 99.9350, 99.9325, 99.9401, 99.9525), Solution 1's sum of squared difference of absolute value is: 0.0, Solution 2's sum of squared difference of

SR1 Ledger : ( Interval 6 ) — absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement
(99.9150, 99.9250, 99.9350, 99.9350, 99.9325, 99.9400, 99.9525)

Total number of combinations SR3 (625), Total volume SR3 (73), 5 optimal solutions found (limited to 5):

SR3 Ledger : ( Interval 6 ) —
(99.9112, 99.9300, 99.9500, 99.9775)
(99.9111, 99.9300, 99.9500, 99.9775)
(99.9112, 99.9300, 99.9500, 99.9774)
(99.9112, 99.9300, 99.9500, 99.9776)
(99.9112, 99.9301, 99.9500, 99.9775), Solution 1's sum of squared difference of

absolute value is: 0.0, Solution 2's sum of squared difference of absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement (99.9112, 99.9300, 99.9500, 99.9775)

Interval 6 [ 09:30:00 - 09:59:59 ]

| Contract | Selected Price | Seed Price | Model | Volume | Bid | Ask | Snapshot Time |
|----------|---------------|-----------|-------|--------|-----|-----|---------------|
| SR1Q0 | 99.905 | 99.905 | VWAP | 15 | 99.9025 | 99.905 | 09:52:44.631 |
| SR1U0 | 99.915 | 99.915 | VWAP | 106 | 99.91 | 99.915 | 09:52:44.631 |
| SR1V0 | 99.925 | 99.925 | VWAP | 100 | 99.92 | 99.925 | 09:52:44.631 |
| SR1X0 | 99.925 | 99.925 | VWAP | 87 | 99.925 | 99.93 | 09:52:44.631 |
| SR1Z0 | 99.9225 | 99.9225 | MID | 0 | 99.92 | 99.925 | 09:52:44.631 |
| SR1F1 | 99.93 | 99.93 | VWAP | 93 | 99.925 | 99.935 | 09:52:44.631 |
| SR1G1 | 99.9425 | 99.9425 | MID | 0 | 99.94 | 99.945 | 09:52:44.631 |
| SR3M0 | 99.9012 | 99.9012 | MID | 0 | 99.9 | 99.9025 | 09:52:44.631 |
| SR3U0 | 99.92 | 99.92 | VWAP | 14 | 99.92 | 99.925 | 09:52:44.631 |
| SR3Z0 | 99.94 | 99.94 | VWAP | 59 | 99.935 | 99.94 | 09:52:44.631 |
| SR3H1 | 99.9675 | 99.9675 | MID | 0 | 99.965 | 99.97 | 09:52:44.631 |

| | |
|---|---|
| | Total number of combinations SR1 (78125), Total volume SR1 (283), 5 optimal solutions found (limited to 5): |
| | (99.9150, 99.9225, 99.9350, 99.9375, 99.9350, 99.9400, 99.9525) |
| | (99.9150, 99.9225, 99.9350, 99.9374, 99.9350, 99.9400, 99.9525) |
| | (99.9150, 99.9224, 99.9350, 99.9375, 99.9350, 99.9400, 99.9525) |
| | (99.9150, 99.9225, 99.9350, 99.9375, 99.9350, 99.9400, 99.9524) |
| | (99.9150, 99.9225, 99.9350, 99.9375, 99.9350, 99.9400, 99.9526), Solution 1's sum of squared difference of absolute value is: 0.0, Solution 2's sum of squared difference of |
| SR1 Ledger : ( Interval 5 ) | absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement (99.9150, 99.9225, 99.9350, 99.9375, 99.9350, 99.9400, 99.9525) |
| | Total number of combinations SR3 (625), Total volume SR3 (0), 5 optimal solutions found (limited to 5): |
| | (99.9112, 99.9325, 99.9475, 99.9775) |
| | (99.9111, 99.9325, 99.9475, 99.9775) |
| | (99.9112, 99.9324, 99.9475, 99.9775) |
| | (99.9112, 99.9325, 99.9475, 99.9774) |
| SR3 Ledger : ( Interval 5 ) | (99.9113, 99.9325, 99.9475, 99.9775), Solution 1's sum of squared difference of absolute value is: 0.0, Solution 2's sum of squared difference of absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference |

which is closest to the VWAP and finalizing settlement
(99.9112, 99.9325, 99.9475, 99.9775)

### Interval 5 [ 09:00:00 - 09:29:59 ]

| Contract | Selected Price | Seed Price | Model | Volume | Bid | Ask | Snapshot Time |
|---|---|---|---|---|---|---|---|
| SR1Q0 | 99.905 | 99.905 | VWAP | 170 | 99.9025 | 99.905 | 09:29:16.628 |
| SR1U0 | 99.9125 | 99.9125 | MID | 0 | 99.91 | 99.915 | 09:29:16.628 |
| SR1V0 | 99.925 | 99.925 | VWAP | 53 | 99.92 | 99.925 | 09:29:16.628 |
| SR1X0 | 99.9275 | 99.9275 | MID | 0 | 99.925 | 99.93 | 09:29:16.628 |
| SR1Z0 | 99.925 | 99.925 | VWAP | 50 | 99.92 | 99.925 | 09:29:16.628 |
| SR1F1 | 99.93 | 99.93 | VWAP | 10 | 99.925 | 99.93 | 09:29:16.628 |
| SR1G1 | 99.9425 | 99.9425 | MID | 0 | 99.94 | 99.945 | 09:29:16.628 |
| SR3M0 | 99.9012 | 99.9012 | MID | 0 | 99.9 | 99.9025 | 09:29:16.628 |
| SR3U0 | 99.9225 | 99.9225 | MID | 0 | 99.92 | 99.925 | 09:29:16.628 |
| SR3Z0 | 99.9375 | 99.9375 | MID | 0 | 99.935 | 99.94 | 09:29:16.628 |
| SR3H1 | 99.9675 | 99.9675 | MID | 0 | 99.965 | 99.97 | 09:29:16.628 |

| | |
|---|---|
| | Total number of combinations SR1 (78125), Total volume SR1 (65), 5 optimal solutions found (limited to 5): <br> (99.9150, 99.9225, 99.9350, 99.9350, 99.9325, 99.9375, 99.9525) <br> (99.9150, 99.9224, 99.9350, 99.9350, 99.9325, 99.9375, 99.9525) <br> (99.9150, 99.9225, 99.9350, 99.9350, 99.9324, 99.9375, 99.9525) <br> (99.9150, 99.9225, 99.9350, 99.9350, 99.9325, 99.9375, 99.9524) <br> (99.9150, 99.9225, 99.9350, 99.9350, 99.9325, 99.9376, 99.9525), Solution 1's sum of squared difference of absolute value is: 0.0, Solution 2's sum of squared difference of |
| SR1 Ledger : ( Interval 4 ) | absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement <br> (99.9150, 99.9225, 99.9350, 99.9350, 99.9325, 99.9375, 99.9525) |
| | Total number of combinations SR3 (625), Total volume SR3 (76), 5 optimal solutions found (limited to 5): <br> (99.9112, 99.9325, 99.9500, 99.9800) <br> (99.9111, 99.9325, 99.9500, 99.9800) <br> (99.9112, 99.9324, 99.9500, 99.9800) <br> (99.9112, 99.9325, 99.9500, 99.9799) <br> (99.9112, 99.9326, 99.9500, 99.9800), Solution 1's sum of squared difference of absolute value is: 0.0, Solution 2's sum of squared difference of absolute value is: 1.0E-8, |
| SR3 Ledger : ( Interval 4 ) | Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement <br> (99.9112, 99.9325, 99.9500, 99.9800) |

Interval 4 [ 08:30:00 - 08:59:59 ]

| Contract | Selected Price | Seed Price | Model | Volume | Bid | Ask | Snapshot Time |
|---|---|---|---|---|---|---|---|
| SR1Q0 | 99.905 | 99.905 | VWAP | 1 | 99.9025 | 99.905 | 08:52:30.274 |
| SR1U0 | 99.9125 | 99.9125 | MID | 0 | 99.91 | 99.915 | 08:52:30.274 |
| SR1V0 | 99.925 | 99.925 | VWAP | 14 | 99.92 | 99.925 | 08:52:30.274 |
| SR1X0 | 99.925 | 99.925 | VWAP | 50 | 99.925 | 99.93 | 08:52:30.274 |
| SR1Z0 | 99.9225 | 99.9225 | MID | 0 | 99.92 | 99.925 | 08:52:30.274 |
| SR1F1 | 99.9275 | 99.9275 | MID | 0 | 99.925 | 99.93 | 08:52:30.274 |
| SR1G1 | 99.9425 | 99.9425 | MID | 0 | 99.94 | 99.945 | 08:52:30.274 |
| SR3M0 | 99.9012 | 99.9012 | MID | 0 | 99.9 | 99.9025 | 08:52:30.274 |
| SR3U0 | 99.9225 | 99.9225 | MID | 0 | 99.92 | 99.925 | 08:52:30.274 |
| SR3Z0 | 99.94 | 99.94 | VWAP | 70 | 99.935 | 99.94 | 08:52:30.274 |
| SR3H1 | 99.97 | 99.97 | VWAP | 6 | 99.965 | 99.97 | 08:52:30.274 |

| | |
|---|---|
| | Total number of combinations SR1 (78125), Total volume SR1 (0), 5 optimal solutions found (limited to 5): |
| | (99.9137, 99.9225, 99.9325, 99.9375, 99.9325, 99.9375, 99.9525) |
| | (99.9137, 99.9225, 99.9325, 99.9374, 99.9325, 99.9375, 99.9525) |
| | (99.9136, 99.9225, 99.9325, 99.9375, 99.9325, 99.9375, 99.9525) |
| | (99.9137, 99.9224, 99.9325, 99.9375, 99.9325, 99.9375, 99.9525) |
| | (99.9137, 99.9225, 99.9325, 99.9375, 99.9325, 99.9375, 99.9524), Solution 1's sum of squared difference of absolute value is: 0.0, Solution 2's sum of squared difference of |
| SR1 Ledger : ( Interval 3 ) | absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement (99.9137, 99.9225, 99.9325, 99.9375, 99.9325, 99.9375, 99.9525) |
| | Total number of combinations SR3 (625), Total volume SR3 (33), 5 optimal solutions found (limited to 5): |
| | (99.9112, 99.9325, 99.9500, 99.9800) |
| | (99.9111, 99.9325, 99.9500, 99.9800) |
| | (99.9112, 99.9324, 99.9500, 99.9800) |
| | (99.9112, 99.9325, 99.9500, 99.9799) |
| | (99.9112, 99.9326, 99.9500, 99.9800), Solution 1's sum of squared difference of absolute value is: 0.0, Solution 2's sum of squared difference of absolute value is: 1.0E-8, |
| SR3 Ledger : ( Interval 3 ) | Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement (99.9112, 99.9325, 99.9500, 99.9800) |

Interval 3 [ 08:00:00 - 08:29:59 ]

| Contract | Selected Price | Seed Price | Model | Volume | Bid | Ask | Snapshot Time |
|---|---|---|---|---|---|---|---|
| SR1Q0 | 99.9037 | 99.9037 | MID | 0 | 99.9025 | 99.905 | 08:27:28.858 |
| SR1U0 | 99.9125 | 99.9125 | MID | 0 | 99.91 | 99.915 | 08:27:28.858 |

| Contract | Selected Price | Seed Price | Model | Volume | Bid | Ask | Snapshot Time |
|---|---|---|---|---|---|---|---|
| SR1V0 | 99.9225 | 99.9225 | MID | 0 | 99.92 | 99.925 | 08:27:28.858 |
| SR1X0 | 99.9275 | 99.9275 | MID | 0 | 99.925 | 99.93 | 08:27:28.858 |
| SR1Z0 | 99.9225 | 99.9225 | MID | 0 | 99.92 | 99.925 | 08:27:28.858 |
| SR1F1 | 99.9275 | 99.9275 | MID | 0 | 99.925 | 99.93 | 08:27:28.858 |
| SR1G1 | 99.9425 | 99.9425 | MID | 0 | 99.94 | 99.945 | 08:27:28.858 |
| SR3M0 | 99.9012 | 99.9012 | MID | 0 | 99.9 | 99.9025 | 08:27:28.858 |
| SR3U0 | 99.9225 | 99.9225 | MID | 0 | 99.92 | 99.925 | 08:27:28.858 |
| SR3Z0 | 99.94 | 99.94 | VWAP | 31 | 99.935 | 99.94 | 08:27:28.858 |
| SR3H1 | 99.97 | 99.97 | VWAP | 2 | 99.965 | 99.97 | 08:27:28.858 |

| | |
|---|---|
| SR1 Ledger : ( Interval 2 ) | Total number of combinations SR1 (78125), Total volume SR1 (98), 5 optimal solutions found (limited to 5):<br>(99.9150, 99.9225, 99.9325, 99.9350, 99.9325, 99.9400, 99.9550)<br>(99.9150, 99.9224, 99.9325, 99.9350, 99.9325, 99.9400, 99.9550)<br>(99.9150, 99.9225, 99.9325, 99.9350, 99.9324, 99.9400, 99.9550)<br>(99.9150, 99.9225, 99.9325, 99.9350, 99.9325, 99.9399, 99.9550)<br>(99.9150, 99.9225, 99.9325, 99.9350, 99.9325, 99.9400, 99.9549), Solution 1's sum of squared difference of absolute value is: 0.0, Solution 2's sum of squared difference of absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement<br>(99.9150, 99.9225, 99.9325, 99.9350, 99.9325, 99.9400, 99.9550) |
| SR3 Ledger : ( Interval 2 ) | Total number of combinations SR3 (625), Total volume SR3 (1245), 5 optimal solutions found (limited to 5):<br>(99.9112, 99.9325, 99.9500, 99.9800)<br>(99.9111, 99.9325, 99.9500, 99.9800)<br>(99.9112, 99.9324, 99.9500, 99.9800)<br>(99.9112, 99.9325, 99.9500, 99.9799)<br>(99.9112, 99.9326, 99.9500, 99.9800), Solution 1's sum of squared difference of absolute value is: 0.0, Solution 2's sum of squared difference of absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement<br>(99.9112, 99.9325, 99.9500, 99.9800) |

Interval 2 [ 07:30:00 - 07:59:59 ]

| Contract | Selected Price | Seed Price | Model | Volume | Bid | Ask | Snapshot Time |
|---|---|---|---|---|---|---|---|
| SR1Q0 | 99.905 | 99.905 | VWAP | 2 | 99.9025 | 99.905 | 07:59:34.209 |
| SR1U0 | 99.9125 | 99.9125 | MID | 0 | 99.91 | 99.915 | 07:59:34.209 |
| SR1V0 | 99.9225 | 99.9225 | MID | 0 | 99.92 | 99.925 | 07:59:34.209 |
| SR1X0 | 99.925 | 99.925 | VWAP | 8 | 99.925 | 99.93 | 07:59:34.209 |
| SR1Z0 | 99.9225 | 99.9225 | MID | 0 | 99.92 | 99.925 | 07:59:34.209 |
| SR1F1 | 99.93 | 99.93 | VWAP | 19 | 99.925 | 99.93 | 07:59:34.209 |

| SR1G1 | 99.945 | 99.945 | VWAP | 69 | 99.94 | 99.945 | 07:59:34.209 |
| SR3M0 | 99.9012 | 99.9012 | MID | 0 | 99.9 | 99.9025 | 07:59:34.209 |
| SR3U0 | 99.9225 | 99.9225 | MID | 0 | 99.92 | 99.925 | 07:59:34.209 |
| SR3Z0 | 99.94 | 99.94 | VWAP | 769 | 99.935 | 99.94 | 07:59:34.209 |
| SR3H1 | 99.97 | 99.97 | VWAP | 476 | 99.965 | 99.97 | 07:59:34.209 |

|  |  |
| --- | --- |
|  | Total number of combinations SR1 (78125), Total volume SR1 (123), 5 optimal solutions found (limited to 5): |
|  | (99.9150, 99.9225, 99.9350, 99.9375, 99.9325, 99.9400, 99.9550) |
|  | (99.9150, 99.9225, 99.9350, 99.9374, 99.9325, 99.9400, 99.9550) |
|  | (99.9150, 99.9224, 99.9350, 99.9375, 99.9325, 99.9400, 99.9550) |
|  | (99.9150, 99.9225, 99.9350, 99.9375, 99.9325, 99.9399, 99.9550) |
| SR1 Ledger : ( Interval 1 ) | (99.9150, 99.9225, 99.9350, 99.9375, 99.9325, 99.9400, 99.9551), Solution 1's sum of squared difference of absolute value is: 0.0, Solution 2's sum of squared difference of absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement (99.9150, 99.9225, 99.9350, 99.9375, 99.9325, 99.9400, 99.9550) |
|  | Total number of combinations SR3 (625), Total volume SR3 (87), 5 optimal solutions found (limited to 5): |
|  | (99.9112, 99.9300, 99.9500, 99.9800) |
|  | (99.9111, 99.9300, 99.9500, 99.9800) |
|  | (99.9112, 99.9301, 99.9500, 99.9800) |
|  | (99.9113, 99.9300, 99.9500, 99.9800) |
| SR3 Ledger : ( Interval 1 ) | (99.9111, 99.9301, 99.9500, 99.9800), Solution 1's sum of squared difference of absolute value is: 0.0, Solution 2's sum of squared difference of absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 2.0E-8, Selecting solution based on lowest sum of squared difference which is closest to the VWAP and finalizing settlement (99.9112, 99.9300, 99.9500, 99.9800) |

Interval 1 [ 07:00:00 - 07:29:59 ]

| Contract | Selected Price | Seed Price | Model | Volume | Bid | Ask | Snapshot Time |
| --- | --- | --- | --- | --- | --- | --- | --- |
| SR1Q0 | 99.905 | 99.905 | VWAP | 46 | 99.9025 | 99.905 | 07:20:18.249 |
| SR1U0 | 99.9125 | 99.9125 | MID | 0 | 99.91 | 99.915 | 07:20:18.249 |
| SR1V0 | 99.925 | 99.925 | VWAP | 50 | 99.925 | 99.93 | 07:20:18.249 |
| SR1X0 | 99.9275 | 99.9275 | MID | 0 | 99.925 | 99.93 | 07:20:18.249 |
| SR1Z0 | 99.9225 | 99.9225 | MID | 0 | 99.92 | 99.925 | 07:20:18.249 |
| SR1F1 | 99.93 | 99.93 | VWAP | 5 | 99.925 | 99.93 | 07:20:18.249 |
| SR1G1 | 99.945 | 99.945 | VWAP | 22 | 99.945 | 99.95 | 07:20:18.249 |
| SR3M0 | 99.9012 | 99.9012 | MID | 0 | 99.9 | 99.9025 | 07:20:18.249 |
| SR3U0 | 99.92 | 99.92 | VWAP | 3 | 99.92 | 99.925 | 07:20:18.249 |
| SR3Z0 | 99.94 | 99.94 | VWAP | 79 | 99.94 | 99.945 | 07:20:18.249 |

| | | | | | | | |
|---|---|---|---|---|---|---|---|
| SR3H1 | 99.97 | 99.97 | VWAP | 5 | 99.97 | 99.975 | 07:20:18.249 |

Base Data for Aug. 6, 2020

| Tenor | Term Rates Last Published | SOFR Strip Rate (%) | Ledger |
|---|---|---|---|
| 1 Month | 0.0922 | 0.0822 | Tolerance Check: Max, Calculating the absolute value of the Rate Net Change for tenor, 1 Month (0.0014600 rate net change), Calculating the absolute value of the Maximum Final Calculation Rate Change * 150%: 0.00900, Checking Tenor's Net Change vs. the Maximum Final Calculation Net Change, 1 Month 0.0014600 <= 1.5 * Max Final Calculation Rate Change |
| 3 Month | 0.0837 | 0.0737 | Tolerance Check: Max, Calculating the absolute value of the Rate Net Change for tenor, 3 Month (0.0020100 rate net change), Calculating the absolute value of the Maximum Final Calculation Rate Change * 150%: 0.00900, Checking Tenor's Net Change vs. the Maximum Final Calculation Net Change, 3 Month 0.0020100 <= 1.5 * Max Final Calculation Rate Change |
| 6 Month | 0.0779 | 0.0679 | Tolerance Check: Max, Calculating the absolute value of the Rate Net Change for tenor, 6 Month (0.0026400 rate net change), Calculating the absolute value of the Maximum Final Calculation Rate Change * 150%: 0.00900, Checking Tenor's Net Change vs. the Maximum Final Calculation Net Change, 6 Month 0.0026400 <= 1.5 * Max Final Calculation Rate Change |

| Contract | Prior | Final VWAP Final VWAP | Final VWAP Manual Price | Last Updated | Ledger |
|---|---|---|---|---|---|
| SR1Q0 | 99.9048 | 99.9148 | | 14:01:01.013 By ERE | Total Volume from each hour 8228, Finalizing price from outright VWAP 99.9148 |
| SR1U0 | 99.9133 | 99.9233 | | 14:01:01.013 By ERE | Total Volume from each hour 8228, Finalizing price from outright VWAP 99.9233 |
| SR1V0 | 99.9235 | 99.9335 | | 14:01:01.013 By ERE | Total Volume from each hour 8228, Finalizing price from outright VWAP 99.9335 |
| SR1X0 | 99.9252 | 99.9352 | | 14:01:01.013 By ERE | Total Volume from each hour 8228, Finalizing price from outright VWAP 99.9352 |
| SR1Z0 | 99.9228 | 99.9328 | | 14:01:01.013 By ERE | Total Volume from each hour 8228, Finalizing price from outright VWAP 99.9328 |
| SR1F1 | 99.9297 | 99.9397 | | 14:01:01.013 By ERE | Total Volume from each hour 8228, Finalizing price from outright VWAP 99.9397 |
| SR1G1 | 99.9436 | 99.9536 | | 14:01:01.013 By ERE | Total Volume from each hour 8228, Finalizing price from outright VWAP 99.9536 |

|        | Bid      | Ask      | Time                 | Notes                                                                        |
|--------|----------|----------|----------------------|------------------------------------------------------------------------------|
| SR3M0  | 99.901 2 | 99.911 2 | 14:01:01.0 13 By ERE | Total Volume from each hour 8228, Finalizing price from outright VWAP 99.9112 |
| SR3U0  | 99.920 5 | 99.930 5 | 14:01:01.0 13 By ERE | Total Volume from each hour 8228, Finalizing price from outright VWAP 99.9305 |
| SR3Z0  | 99.938 2 | 99.948 2 | 14:01:01.0 13 By ERE | Total Volume from each hour 8228, Finalizing price from outright VWAP 99.9482 |
| SR3H1  | 99.968   | 99.978   | 14:01:01.0 13 By ERE | Total Volume from each hour 8228, Finalizing price from outright VWAP 99.9780 |

| | |
|---|---|
| SR1 Ledger : ( Interva l 14 ) | Total number of combinations SR1 (78125), Total volume SR1 (1435), 5 optimal solutions found (limited to 5): <br>(99.9150, 99.9250, 99.9350, 99.9350, 99.9325, 99.9400, 99.9550) <br>(99.9150, 99.9250, 99.9350, 99.9350, 99.9324, 99.9400, 99.9550) <br>(99.9150, 99.9250, 99.9350, 99.9350, 99.9325, 99.9400, 99.9549) <br>(99.9150, 99.9250, 99.9350, 99.9350, 99.9325, 99.9399, 99.9550) <br>(99.9150, 99.9250, 99.9350, 99.9350, 99.9325, 99.9400, 99.9551), Solution 1's sum of squared difference of absolute value is: 0.0, Solution 2's sum of squared difference of absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement <br>(99.9150, 99.9250, 99.9350, 99.9350, 99.9325, 99.9400, 99.9550) |
| SR3 Ledger : ( Interva l 14 ) | Total number of combinations SR3 (625), Total volume SR3 (18), 5 optimal solutions found (limited to 5): <br>(99.9112, 99.9300, 99.9475, 99.9775) <br>(99.9112, 99.9300, 99.9474, 99.9775) <br>(99.9111, 99.9300, 99.9475, 99.9775) <br>(99.9112, 99.9300, 99.9475, 99.9774) <br>(99.9112, 99.9300, 99.9475, 99.9776), Solution 1's sum of squared difference of absolute value is: 0.0, Solution 2's sum of squared difference of absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement <br>(99.9112, 99.9300, 99.9475, 99.9775) |

Interval 14 [ 13:30:00 - 13:59:59 ]

| Contract | Selected Price | Seed Price | Model | Volume | Bid    | Ask     | Snapshot Time |
|----------|----------------|------------|-------|--------|--------|---------|---------------|
| SR1Q0    | 99.915         | 99.915     | VWAP  | 24     | 99.915 | 99.9175 | 13:55:48.974  |
| SR1U0    | 99.925         | 99.925     | VWAP  | 1013   | 99.92  | 99.925  | 13:55:48.974  |
| SR1V0    | 99.935         | 99.935     | VWAP  | 45     | 99.93  | 99.935  | 13:55:48.974  |
| SR1X0    | 99.935         | 99.935     | VWAP  | 329    | 99.93  | 99.935  | 13:55:48.974  |
| SR1Z0    | 99.9325        | 99.9325    | MID   | 0      | 99.93  | 99.935  | 13:55:48.974  |
| SR1F1    | 99.94          | 99.94      | VWAP  | 3      | 99.935 | 99.94   | 13:55:48.974  |
| SR1G1    | 99.955         | 99.955     | VWAP  | 21     | 99.95  | 99.96   | 13:55:48.974  |
| SR3M0    | 99.9112        | 99.9112    | MID   | 0      | 99.91  | 99.9125 | 13:55:48.974  |
| SR3U0    | 99.93          | 99.93      | VWAP  | 18     | 99.925 | 99.93   | 13:55:48.974  |

| | | | | | | | |
|---|---|---|---|---|---|---|---|
| SR3Z0 | 99.9475 | 99.9475 | MID | 0 | 99.945 | 99.95 | 13:55:48.974 |
| SR3H1 | 99.9775 | 99.9775 | MID | 0 | 99.975 | 99.98 | 13:55:48.974 |

| | |
|---|---|
| SR1 Ledger : ( Interval 13 ) | Total number of combinations SR1 (78125), Total volume SR1 (253), 5 optimal solutions found (limited to 5):<br>(99.9150, 99.9250, 99.9350, 99.9350, 99.9350, 99.9400, 99.9550)<br>(99.9150, 99.9250, 99.9350, 99.9350, 99.9350, 99.9400, 99.9551)<br>(99.9150, 99.9250, 99.9350, 99.9350, 99.9349, 99.9400, 99.9550)<br>(99.9150, 99.9249, 99.9350, 99.9350, 99.9350, 99.9400, 99.9550)<br>(99.9149, 99.9250, 99.9350, 99.9350, 99.9350, 99.9400, 99.9550), Solution 1's sum of squared difference of absolute value is: 0.0, Solution 2's sum of squared difference of absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement (99.9150, 99.9250, 99.9350, 99.9350, 99.9350, 99.9400, 99.9550) |
| SR3 Ledger : ( Interval 13 ) | Total number of combinations SR3 (625), Total volume SR3 (373), 5 optimal solutions found (limited to 5):<br>(99.9112, 99.9300, 99.9475, 99.9775)<br>(99.9111, 99.9300, 99.9475, 99.9775)<br>(99.9112, 99.9300, 99.9475, 99.9774)<br>(99.9112, 99.9299, 99.9475, 99.9775)<br>(99.9113, 99.9300, 99.9475, 99.9775), Solution 1's sum of squared difference of absolute value is: 0.0, Solution 2's sum of squared difference of absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement (99.9112, 99.9300, 99.9475, 99.9775) |

Interval 13 [ 13:00:00 - 13:29:59 ]

| Contract | Selected Price | Seed Price | Model | Volume | Bid | Ask | Snapshot Time |
|---|---|---|---|---|---|---|---|
| SR1Q0 | 99.915 | 99.915 | VWAP | 11 | 99.9125 | 99.915 | 13:23:28.686 |
| SR1U0 | 99.925 | 99.925 | VWAP | 52 | 99.92 | 99.925 | 13:23:28.686 |
| SR1V0 | 99.935 | 99.935 | VWAP | 56 | 99.93 | 99.935 | 13:23:28.686 |
| SR1X0 | 99.935 | 99.935 | VWAP | 29 | 99.93 | 99.935 | 13:23:28.686 |
| SR1Z0 | 99.935 | 99.935 | VWAP | 51 | 99.93 | 99.935 | 13:23:28.686 |
| SR1F1 | 99.94 | 99.94 | VWAP | 4 | 99.935 | 99.94 | 13:23:28.686 |
| SR1G1 | 99.955 | 99.955 | VWAP | 50 | 99.955 | 99.96 | 13:23:28.686 |
| SR3M0 | 99.9112 | 99.9112 | MID | 0 | 99.91 | 99.9125 | 13:23:28.686 |
| SR3U0 | 99.93 | 99.93 | VWAP | 373 | 99.925 | 99.93 | 13:23:28.686 |
| SR3Z0 | 99.9475 | 99.9475 | MID | 0 | 99.945 | 99.95 | 13:23:28.686 |
| SR3H1 | 99.9775 | 99.9775 | MID | 0 | 99.975 | 99.98 | 13:23:28.686 |

Total number of combinations SR1 (78125), Total volume SR1 (2103), 5 optimal solutions found (limited to 5):
(99.9150, 99.9225, 99.9325, 99.9350, 99.9325, 99.9400, 99.9525)
(99.9150, 99.9224, 99.9325, 99.9350, 99.9325, 99.9400, 99.9525)
(99.9150, 99.9225, 99.9325, 99.9350, 99.9324, 99.9400, 99.9525)
(99.9150, 99.9225, 99.9325, 99.9350, 99.9325, 99.9400, 99.9524)
(99.9150, 99.9225, 99.9325, 99.9350, 99.9325, 99.9399, 99.9525), Solution 1's sum of squared difference of absolute value is: 0.0, Solution 2's sum of squared difference of absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement (99.9150, 99.9225, 99.9325, 99.9350, 99.9325, 99.9400, 99.9525)

**SR1 Ledger : ( Interval 12 )**

Total number of combinations SR3 (625), Total volume SR3 (582), 5 optimal solutions found (limited to 5):
(99.9112, 99.9300, 99.9475, 99.9775)
(99.9111, 99.9300, 99.9475, 99.9775)
(99.9112, 99.9300, 99.9475, 99.9774)
(99.9112, 99.9299, 99.9475, 99.9775)
(99.9113, 99.9300, 99.9475, 99.9775), Solution 1's sum of squared difference of absolute value is: 0.0, Solution 2's sum of squared difference of absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement (99.9112, 99.9300, 99.9475, 99.9775)

**SR3 Ledger : ( Interval 12 )**

Interval 12 [ 12:30:00 - 12:59:59 ]

| Contract | Selected Price | Seed Price | Model | Volume | Bid | Ask | Snapshot Time |
|---|---|---|---|---|---|---|---|
| SR1Q0 | 99.915 | 99.915 | VWAP | 1695 | 99.9125 | 99.915 | 12:51:35.778 |
| SR1U0 | 99.9225 | 99.9225 | MID | 0 | 99.92 | 99.925 | 12:51:35.778 |
| SR1V0 | 99.9325 | 99.9325 | MID | 0 | 99.93 | 99.935 | 12:51:35.778 |
| SR1X0 | 99.935 | 99.935 | VWAP | 358 | 99.93 | 99.935 | 12:51:35.778 |
| SR1Z0 | 99.9325 | 99.9325 | MID | 0 | 99.93 | 99.935 | 12:51:35.778 |
| SR1F1 | 99.94 | 99.94 | VWAP | 50 | 99.935 | 99.94 | 12:51:35.778 |
| SR1G1 | 99.9525 | 99.9525 | MID | 0 | 99.95 | 99.955 | 12:51:35.778 |
| SR3M0 | 99.9112 | 99.9112 | MID | 0 | 99.91 | 99.9125 | 12:51:35.778 |
| SR3U0 | 99.93 | 99.93 | VWAP | 582 | 99.925 | 99.93 | 12:51:35.778 |
| SR3Z0 | 99.9475 | 99.9475 | MID | 0 | 99.945 | 99.95 | 12:51:35.778 |
| SR3H1 | 99.9775 | 99.9775 | MID | 0 | 99.975 | 99.98 | 12:51:35.778 |

|  | Total number of combinations SR1 (78125), Total volume SR1 (54), 5 optimal solutions found (limited to 5): |
|---|---|
|  | (99.9137, 99.9225, 99.9325, 99.9350, 99.9325, 99.9375, 99.9525) |
|  | (99.9136, 99.9225, 99.9325, 99.9350, 99.9325, 99.9375, 99.9525) |
|  | (99.9137, 99.9224, 99.9325, 99.9350, 99.9325, 99.9375, 99.9525) |
|  | (99.9137, 99.9225, 99.9325, 99.9350, 99.9324, 99.9375, 99.9525) |
| SR1 Ledger : ( Interval 11 ) | (99.9137, 99.9225, 99.9325, 99.9350, 99.9325, 99.9375, 99.9524), Solution 1's sum of squared difference of absolute value is: 0.0, Solution 2's sum of squared difference of absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement (99.9137, 99.9225, 99.9325, 99.9350, 99.9325, 99.9375, 99.9525) |
|  | Total number of combinations SR3 (625), Total volume SR3 (788), 5 optimal solutions found (limited to 5): |
|  | (99.9112, 99.9300, 99.9475, 99.9775) |
|  | (99.9111, 99.9300, 99.9475, 99.9775) |
|  | (99.9112, 99.9300, 99.9475, 99.9774) |
|  | (99.9112, 99.9301, 99.9475, 99.9775) |
| SR3 Ledger : ( Interval 11 ) | (99.9113, 99.9300, 99.9475, 99.9775), Solution 1's sum of squared difference of absolute value is: 0.0, Solution 2's sum of squared difference of absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement (99.9112, 99.9300, 99.9475, 99.9775) |

Interval 11 [ 12:00:00 - 12:29:59 ]

| Contract | Selected Price | Seed Price | Model | Volume | Bid | Ask | Snapshot Time |
|---|---|---|---|---|---|---|---|
| SR1Q0 | 99.9137 | 99.9137 | MID | 0 | 99.9125 | 99.915 | 12:21:34.221 |
| SR1U0 | 99.9225 | 99.9225 | MID | 0 | 99.92 | 99.925 | 12:21:34.221 |
| SR1V0 | 99.9325 | 99.9325 | MID | 0 | 99.93 | 99.935 | 12:21:34.221 |
| SR1X0 | 99.935 | 99.935 | VWAP | 54 | 99.935 | 99.94 | 12:21:34.221 |
| SR1Z0 | 99.9325 | 99.9325 | MID | 0 | 99.93 | 99.935 | 12:21:34.221 |
| SR1F1 | 99.9375 | 99.9375 | MID | 0 | 99.935 | 99.94 | 12:21:34.221 |
| SR1G1 | 99.9525 | 99.9525 | MID | 0 | 99.95 | 99.955 | 12:21:34.221 |
| SR3M0 | 99.9112 | 99.9112 | MID | 0 | 99.91 | 99.9125 | 12:21:34.221 |
| SR3U0 | 99.93 | 99.93 | VWAP | 788 | 99.93 | 99.935 | 12:21:34.221 |
| SR3Z0 | 99.9475 | 99.9475 | MID | 0 | 99.945 | 99.95 | 12:21:34.221 |
| SR3H1 | 99.9775 | 99.9775 | MID | 0 | 99.975 | 99.98 | 12:21:34.221 |

| SR1 Ledger | Total number of combinations SR1 (78125), Total volume SR1 (0), 5 optimal solutions found (limited to 5): |
|---|---|

: ( Interval 10 )
(99.9137, 99.9225, 99.9325, 99.9375, 99.9325, 99.9375, 99.9525)
(99.9137, 99.9225, 99.9325, 99.9374, 99.9325, 99.9375, 99.9525)
(99.9136, 99.9225, 99.9325, 99.9375, 99.9325, 99.9375, 99.9525)
(99.9137, 99.9224, 99.9325, 99.9375, 99.9325, 99.9375, 99.9525)
(99.9137, 99.9225, 99.9325, 99.9375, 99.9325, 99.9375, 99.9524), Solution 1's sum of squared difference of absolute value is: 0.0, Solution 2's sum of squared difference of absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement
(99.9137, 99.9225, 99.9325, 99.9375, 99.9325, 99.9375, 99.9525)
Total number of combinations SR3 (625), Total volume SR3 (23), 5 optimal solutions found (limited to 5):
(99.9112, 99.9300, 99.9475, 99.9775)
(99.9111, 99.9300, 99.9475, 99.9775)
(99.9112, 99.9300, 99.9475, 99.9774)
(99.9112, 99.9301, 99.9475, 99.9775)
(99.9113, 99.9300, 99.9475, 99.9775), Solution 1's sum of squared difference of absolute value is: 0.0, Solution 2's sum of squared difference of absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement

SR3 Ledger : ( Interval 10 )
(99.9112, 99.9300, 99.9475, 99.9775)

Interval 10 [ 11:30:00 - 11:59:59 ]

| Contract | Selected Price | Seed Price | Model | Volume | Bid | Ask | Snapshot Time |
|---|---|---|---|---|---|---|---|
| SR1Q0 | 99.9137 | 99.9137 | MID | 0 | 99.9125 | 99.915 | 11:54:00.074 |
| SR1U0 | 99.9225 | 99.9225 | MID | 0 | 99.92 | 99.925 | 11:54:00.074 |
| SR1V0 | 99.9325 | 99.9325 | MID | 0 | 99.93 | 99.935 | 11:54:00.074 |
| SR1X0 | 99.9375 | 99.9375 | MID | 0 | 99.935 | 99.94 | 11:54:00.074 |
| SR1Z0 | 99.9325 | 99.9325 | MID | 0 | 99.93 | 99.935 | 11:54:00.074 |
| SR1F1 | 99.9375 | 99.9375 | MID | 0 | 99.935 | 99.94 | 11:54:00.074 |
| SR1G1 | 99.9525 | 99.9525 | MID | 0 | 99.95 | 99.955 | 11:54:00.074 |
| SR3M0 | 99.9112 | 99.9112 | MID | 0 | 99.91 | 99.9125 | 11:54:00.074 |
| SR3U0 | 99.93 | 99.93 | VWAP | 23 | 99.93 | 99.935 | 11:54:00.074 |
| SR3Z0 | 99.9475 | 99.9475 | MID | 0 | 99.945 | 99.95 | 11:54:00.074 |
| SR3H1 | 99.9775 | 99.9775 | MID | 0 | 99.975 | 99.98 | 11:54:00.074 |

SR1 Ledger : (
Total number of combinations SR1 (78125), Total volume SR1 (91), 5 optimal solutions found (limited to 5):
(99.9137, 99.9250, 99.9350, 99.9375, 99.9325, 99.9375, 99.9525)
(99.9137, 99.9250, 99.9350, 99.9374, 99.9325, 99.9375, 99.9525)

Interval 9 )

(99.9136, 99.9250, 99.9350, 99.9375, 99.9325, 99.9375, 99.9525)
(99.9137, 99.9250, 99.9350, 99.9375, 99.9325, 99.9375, 99.9524)
(99.9137, 99.9250, 99.9350, 99.9375, 99.9325, 99.9376, 99.9525), Solution 1's sum of squared difference of absolute value is: 0.0, Solution 2's sum of squared difference of absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement
(99.9137, 99.9250, 99.9350, 99.9375, 99.9325, 99.9375, 99.9525)
Total number of combinations SR3 (625), Total volume SR3 (4), 5 optimal solutions found (limited to 5):
(99.9112, 99.9300, 99.9475, 99.9775)
(99.9111, 99.9300, 99.9475, 99.9775)
(99.9112, 99.9300, 99.9475, 99.9774)
(99.9112, 99.9301, 99.9475, 99.9775)
(99.9113, 99.9300, 99.9475, 99.9775), Solution 1's sum of squared difference of absolute value is: 0.0, Solution 2's sum of squared difference of absolute value is: 1.0E-8,

SR3 Ledger : ( Interval 9 )

Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement
(99.9112, 99.9300, 99.9475, 99.9775)

### Interval 9 [ 11:00:00 - 11:29:59 ]

| Contract | Selected Price | Seed Price | Model | Volume | Bid | Ask | Snapshot Time |
|---|---|---|---|---|---|---|---|
| SR1Q0 | 99.9137 | 99.9137 | MID | 0 | 99.9125 | 99.915 | 11:22:49.275 |
| SR1U0 | 99.925 | 99.925 | VWAP | 80 | 99.92 | 99.925 | 11:22:49.275 |
| SR1V0 | 99.935 | 99.935 | VWAP | 11 | 99.93 | 99.935 | 11:22:49.275 |
| SR1X0 | 99.9375 | 99.9375 | MID | 0 | 99.935 | 99.94 | 11:22:49.275 |
| SR1Z0 | 99.9325 | 99.9325 | MID | 0 | 99.93 | 99.935 | 11:22:49.275 |
| SR1F1 | 99.9375 | 99.9375 | MID | 0 | 99.935 | 99.94 | 11:22:49.275 |
| SR1G1 | 99.9525 | 99.9525 | MID | 0 | 99.95 | 99.955 | 11:22:49.275 |
| SR3M0 | 99.9112 | 99.9112 | MID | 0 | 99.91 | 99.9125 | 11:22:49.275 |
| SR3U0 | 99.93 | 99.93 | VWAP | 4 | 99.93 | 99.935 | 11:22:49.275 |
| SR3Z0 | 99.9475 | 99.9475 | MID | 0 | 99.945 | 99.95 | 11:22:49.275 |
| SR3H1 | 99.9775 | 99.9775 | MID | 0 | 99.975 | 99.98 | 11:22:49.275 |

Total number of combinations SR1 (78125), Total volume SR1 (3), 5 optimal solutions found (limited to 5):
(99.9137, 99.9225, 99.9325, 99.9350, 99.9325, 99.9375, 99.9525)
(99.9136, 99.9225, 99.9325, 99.9350, 99.9325, 99.9375, 99.9525)

SR1 Ledger : ( Interval 8 )

(99.9137, 99.9224, 99.9325, 99.9350, 99.9325, 99.9375, 99.9525)
(99.9137, 99.9225, 99.9325, 99.9350, 99.9324, 99.9375, 99.9525)
(99.9137, 99.9225, 99.9325, 99.9350, 99.9325, 99.9375, 99.9524), Solution 1's sum of squared difference of absolute value is: 0.0, Solution 2's sum of squared difference of absolute value is: 1.0E-8, Solution 3's sum of squared difference of absolute value is:

1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement (99.9137, 99.9225, 99.9325, 99.9350, 99.9325, 99.9375, 99.9525)
Total number of combinations SR3 (625), Total volume SR3 (0), 5 optimal solutions found (limited to 5):

(99.9112, 99.9325, 99.9475, 99.9775)
(99.9111, 99.9325, 99.9475, 99.9775)
(99.9112, 99.9324, 99.9475, 99.9775)
(99.9112, 99.9325, 99.9475, 99.9774)
(99.9113, 99.9325, 99.9475, 99.9775), Solution 1's sum of squared difference of absolute value is: 0.0, Solution 2's sum of squared difference of absolute value is: 1.0E-8,

| SR3 | Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement (99.9112, 99.9325, 99.9475, 99.9775) |
|---|---|
| Ledger : ( Interva l 8 ) | |

### Interval 8 [ 10:30:00 - 10:59:59 ]

| Contract | Selected Price | Seed Price | Model | Volume | Bid | Ask | Snapshot Time |
|---|---|---|---|---|---|---|---|
| SR1Q0 | 99.9137 | 99.9137 | MID | 0 | 99.9125 | 99.915 | 10:58:30.554 |
| SR1U0 | 99.9225 | 99.9225 | MID | 0 | 99.92 | 99.925 | 10:58:30.554 |
| SR1V0 | 99.9325 | 99.9325 | MID | 0 | 99.93 | 99.935 | 10:58:30.554 |
| SR1X0 | 99.935 | 99.935 | VWAP | 3 | 99.935 | 99.94 | 10:58:30.554 |
| SR1Z0 | 99.9325 | 99.9325 | MID | 0 | 99.93 | 99.935 | 10:58:30.554 |
| SR1F1 | 99.9375 | 99.9375 | MID | 0 | 99.935 | 99.94 | 10:58:30.554 |
| SR1G1 | 99.9525 | 99.9525 | MID | 0 | 99.95 | 99.955 | 10:58:30.554 |
| SR3M0 | 99.9112 | 99.9112 | MID | 0 | 99.91 | 99.9125 | 10:58:30.554 |
| SR3U0 | 99.9325 | 99.9325 | MID | 0 | 99.93 | 99.935 | 10:58:30.554 |
| SR3Z0 | 99.9475 | 99.9475 | MID | 0 | 99.945 | 99.95 | 10:58:30.554 |
| SR3H1 | 99.9775 | 99.9775 | MID | 0 | 99.975 | 99.98 | 10:58:30.554 |

Total number of combinations SR1 (78125), Total volume SR1 (1), 5 optimal solutions found (limited to 5):

(99.9137, 99.9225, 99.9325, 99.9375, 99.9325, 99.9400, 99.9525)
(99.9137, 99.9225, 99.9325, 99.9374, 99.9325, 99.9400, 99.9525)
(99.9136, 99.9225, 99.9325, 99.9375, 99.9325, 99.9400, 99.9525)
(99.9137, 99.9224, 99.9325, 99.9375, 99.9325, 99.9400, 99.9525)
(99.9137, 99.9225, 99.9325, 99.9375, 99.9325, 99.9400, 99.9524), Solution 1's sum of squared difference of absolute value is: 0.0, Solution 2's sum of squared difference of

| SR1 | absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement (99.9137, 99.9225, 99.9325, 99.9375, 99.9325, 99.9400, 99.9525) |
|---|---|
| Ledger : ( Interva l 7 ) | |

Total number of combinations SR3 (625), Total volume SR3 (16), 5 optimal solutions found (limited to 5):

(99.9112, 99.9300, 99.9475, 99.9775)
(99.9111, 99.9300, 99.9475, 99.9775)
(99.9112, 99.9300, 99.9475, 99.9774)
(99.9112, 99.9301, 99.9475, 99.9775)

| SR3 Ledger : ( Interval 7 ) | (99.9113, 99.9300, 99.9475, 99.9775), Solution 1's sum of squared difference of absolute value is: 0.0, Solution 2's sum of squared difference of absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement (99.9112, 99.9300, 99.9475, 99.9775) |
|---|---|

Interval 7 [ 10:00:00 - 10:29:59 ]

| Contract | Selected Price | Seed Price | Model | Volume | Bid | Ask | Snapshot Time |
|---|---|---|---|---|---|---|---|
| SR1Q0 | 99.9137 | 99.9137 | MID | 0 | 99.9125 | 99.915 | 10:23:05.675 |
| SR1U0 | 99.9225 | 99.9225 | MID | 0 | 99.92 | 99.925 | 10:23:05.675 |
| SR1V0 | 99.9325 | 99.9325 | MID | 0 | 99.93 | 99.935 | 10:23:05.675 |
| SR1X0 | 99.9375 | 99.9375 | MID | 0 | 99.935 | 99.94 | 10:23:05.675 |
| SR1Z0 | 99.9325 | 99.9325 | MID | 0 | 99.93 | 99.935 | 10:23:05.675 |
| SR1F1 | 99.94 | 99.94 | VWAP | 1 | 99.935 | 99.94 | 10:23:05.675 |
| SR1G1 | 99.9525 | 99.9525 | MID | 0 | 99.95 | 99.955 | 10:23:05.675 |
| SR3M0 | 99.9112 | 99.9112 | MID | 0 | 99.91 | 99.9125 | 10:23:05.675 |
| SR3U0 | 99.93 | 99.93 | VWAP | 16 | 99.93 | 99.935 | 10:23:05.675 |
| SR3Z0 | 99.9475 | 99.9475 | MID | 0 | 99.945 | 99.95 | 10:23:05.675 |
| SR3H1 | 99.9775 | 99.9775 | MID | 0 | 99.975 | 99.98 | 10:23:05.675 |

Total number of combinations SR1 (78125), Total volume SR1 (401), 5 optimal solutions found (limited to 5):

(99.9150, 99.9250, 99.9350, 99.9350, 99.9325, 99.9400, 99.9525)
(99.9150, 99.9250, 99.9350, 99.9350, 99.9324, 99.9400, 99.9525)
(99.9150, 99.9250, 99.9350, 99.9350, 99.9325, 99.9400, 99.9524)
(99.9150, 99.9250, 99.9350, 99.9350, 99.9325, 99.9399, 99.9525)

| SR1 Ledger : ( Interval 6 ) | (99.9150, 99.9250, 99.9350, 99.9350, 99.9325, 99.9401, 99.9525), Solution 1's sum of squared difference of absolute value is: 0.0, Solution 2's sum of squared difference of absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement (99.9150, 99.9250, 99.9350, 99.9350, 99.9325, 99.9400, 99.9525) |
|---|---|
| SR3 Ledger : ( Interval 6 ) | Total number of combinations SR3 (625), Total volume SR3 (73), 5 optimal solutions found (limited to 5): (99.9112, 99.9300, 99.9500, 99.9775) (99.9111, 99.9300, 99.9500, 99.9775) (99.9112, 99.9300, 99.9500, 99.9774) |

(99.9112, 99.9300, 99.9500, 99.9776)

(99.9112, 99.9301, 99.9500, 99.9775), Solution 1's sum of squared difference of absolute value is: 0.0, Solution 2's sum of squared difference of absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement

(99.9112, 99.9300, 99.9500, 99.9775)

### Interval 6 [ 09:30:00 - 09:59:59 ]

| Contract | Selected Price | Seed Price | Model | Volume | Bid | Ask | Snapshot Time |
|---|---|---|---|---|---|---|---|
| SR1Q0 | 99.915 | 99.915 | VWAP | 15 | 99.9125 | 99.915 | 09:52:44.631 |
| SR1U0 | 99.925 | 99.925 | VWAP | 106 | 99.92 | 99.925 | 09:52:44.631 |
| SR1V0 | 99.935 | 99.935 | VWAP | 100 | 99.93 | 99.935 | 09:52:44.631 |
| SR1X0 | 99.935 | 99.935 | VWAP | 87 | 99.935 | 99.94 | 09:52:44.631 |
| SR1Z0 | 99.9325 | 99.9325 | MID | 0 | 99.93 | 99.935 | 09:52:44.631 |
| SR1F1 | 99.94 | 99.94 | VWAP | 93 | 99.935 | 99.945 | 09:52:44.631 |
| SR1G1 | 99.9525 | 99.9525 | MID | 0 | 99.95 | 99.955 | 09:52:44.631 |
| SR3M0 | 99.9112 | 99.9112 | MID | 0 | 99.91 | 99.9125 | 09:52:44.631 |
| SR3U0 | 99.93 | 99.93 | VWAP | 14 | 99.93 | 99.935 | 09:52:44.631 |
| SR3Z0 | 99.95 | 99.95 | VWAP | 59 | 99.945 | 99.95 | 09:52:44.631 |
| SR3H1 | 99.9775 | 99.9775 | MID | 0 | 99.975 | 99.98 | 09:52:44.631 |

| | |
|---|---|
| | Total number of combinations SR1 (78125), Total volume SR1 (283), 5 optimal solutions found (limited to 5): |
| | (99.9150, 99.9225, 99.9350, 99.9375, 99.9350, 99.9400, 99.9525) |
| | (99.9150, 99.9225, 99.9350, 99.9374, 99.9350, 99.9400, 99.9525) |
| | (99.9150, 99.9224, 99.9350, 99.9375, 99.9350, 99.9400, 99.9525) |
| | (99.9150, 99.9225, 99.9350, 99.9375, 99.9350, 99.9400, 99.9524) |
| SR1 | (99.9150, 99.9225, 99.9350, 99.9375, 99.9350, 99.9400, 99.9526), Solution 1's sum of |
| Ledger | squared difference of absolute value is: 0.0, Solution 2's sum of squared difference of |
| : ( | absolute value is: 1.0E-8, Solution 3's sum of squared difference of absolute value is: |
| Interva | 1.0E-8, Solution 4's sum of squared difference of absolute value is: 1.0E-8, Solution 5's |
| l 5 ) | sum of squared difference of absolute value is: 1.0E-8, Selecting solution based on lowest sum of squared difference which is closest to the VWAP and finalizing settlement |
| | (99.9150, 99.9225, 99.9350, 99.9375, 99.9350, 99.9400, 99.9525) |
| | Total number of combinations SR3 (625), Total volume SR3 (0), 5 optimal solutions found (limited to 5): |
| | (99.9112, 99.9325, 99.9475, 99.9775) |
| | (99.9111, 99.9325, 99.9475, 99.9775) |
| | (99.9112, 99.9324, 99.9475, 99.9775) |
| SR3 | (99.9112, 99.9325, 99.9475, 99.9774) |
| Ledger | (99.9113, 99.9325, 99.9475, 99.9775), Solution 1's sum of squared difference of |
| : ( | absolute value is: 0.0, Solution 2's sum of squared difference of absolute value is: 1.0E-8, |
| Interva | Solution 3's sum of squared difference of absolute value is: 1.0E-8, Solution 4's sum of |
| l 5 ) | squared difference of absolute value is: 1.0E-8, Solution 5's sum of squared difference of |

absolute value is: 1.0E-8, Selecting solution based on lowest sum of squared difference which is closest to the VWAP and finalizing settlement
(99.9112, 99.9325, 99.9475, 99.9775)

Interval 5 [ 09:00:00 - 09:29:59 ]

| Contract | Selected Price | Seed Price | Model | Volume | Bid | Ask | Snapshot Time |
|---|---|---|---|---|---|---|---|
| SR1Q0 | 99.915 | 99.915 | VWAP | 170 | 99.9125 | 99.915 | 09:29:16.628 |
| SR1U0 | 99.9225 | 99.9225 | MID | 0 | 99.92 | 99.925 | 09:29:16.628 |
| SR1V0 | 99.935 | 99.935 | VWAP | 53 | 99.93 | 99.935 | 09:29:16.628 |
| SR1X0 | 99.9375 | 99.9375 | MID | 0 | 99.935 | 99.94 | 09:29:16.628 |
| SR1Z0 | 99.935 | 99.935 | VWAP | 50 | 99.93 | 99.935 | 09:29:16.628 |
| SR1F1 | 99.94 | 99.94 | VWAP | 10 | 99.935 | 99.94 | 09:29:16.628 |
| SR1G1 | 99.9525 | 99.9525 | MID | 0 | 99.95 | 99.955 | 09:29:16.628 |
| SR3M0 | 99.9112 | 99.9112 | MID | 0 | 99.91 | 99.9125 | 09:29:16.628 |
| SR3U0 | 99.9325 | 99.9325 | MID | 0 | 99.93 | 99.935 | 09:29:16.628 |
| SR3Z0 | 99.9475 | 99.9475 | MID | 0 | 99.945 | 99.95 | 09:29:16.628 |
| SR3H1 | 99.9775 | 99.9775 | MID | 0 | 99.975 | 99.98 | 09:29:16.628 |

| | |
|---|---|
| | Total number of combinations SR1 (78125), Total volume SR1 (65), 5 optimal solutions found (limited to 5):<br>(99.9150, 99.9225, 99.9350, 99.9350, 99.9325, 99.9375, 99.9525)<br>(99.9150, 99.9224, 99.9350, 99.9350, 99.9325, 99.9375, 99.9525)<br>(99.9150, 99.9225, 99.9350, 99.9350, 99.9324, 99.9375, 99.9525)<br>(99.9150, 99.9225, 99.9350, 99.9350, 99.9325, 99.9375, 99.9524)<br>(99.9150, 99.9225, 99.9350, 99.9350, 99.9325, 99.9376, 99.9525), Solution 1's sum of squared difference of absolute value is: 0.0, Solution 2's sum of squared difference of |
| SR1 Ledger : ( Interval 4 ) | absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement<br>(99.9150, 99.9225, 99.9350, 99.9350, 99.9325, 99.9375, 99.9525) |
| | Total number of combinations SR3 (625), Total volume SR3 (76), 5 optimal solutions found (limited to 5):<br>(99.9112, 99.9325, 99.9500, 99.9800)<br>(99.9111, 99.9325, 99.9500, 99.9800)<br>(99.9112, 99.9324, 99.9500, 99.9800)<br>(99.9112, 99.9325, 99.9500, 99.9799)<br>(99.9112, 99.9326, 99.9500, 99.9800), Solution 1's sum of squared difference of absolute value is: 0.0, Solution 2's sum of squared difference of absolute value is: 1.0E-8, |
| SR3 Ledger : ( Interval 4 ) | Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement<br>(99.9112, 99.9325, 99.9500, 99.9800) |

Interval 4 [ 08:30:00 - 08:59:59 ]

| Contract | Selected Price | Seed Price | Model | Volume | Bid | Ask | Snapshot Time |
|---|---|---|---|---|---|---|---|
| SR1Q0 | 99.915 | 99.915 | VWAP | 1 | 99.9125 | 99.915 | 08:52:30.274 |
| SR1U0 | 99.9225 | 99.9225 | MID | 0 | 99.92 | 99.925 | 08:52:30.274 |
| SR1V0 | 99.935 | 99.935 | VWAP | 14 | 99.93 | 99.935 | 08:52:30.274 |
| SR1X0 | 99.935 | 99.935 | VWAP | 50 | 99.935 | 99.94 | 08:52:30.274 |
| SR1Z0 | 99.9325 | 99.9325 | MID | 0 | 99.93 | 99.935 | 08:52:30.274 |
| SR1F1 | 99.9375 | 99.9375 | MID | 0 | 99.935 | 99.94 | 08:52:30.274 |
| SR1G1 | 99.9525 | 99.9525 | MID | 0 | 99.95 | 99.955 | 08:52:30.274 |
| SR3M0 | 99.9112 | 99.9112 | MID | 0 | 99.91 | 99.9125 | 08:52:30.274 |
| SR3U0 | 99.9325 | 99.9325 | MID | 0 | 99.93 | 99.935 | 08:52:30.274 |
| SR3Z0 | 99.95 | 99.95 | VWAP | 70 | 99.945 | 99.95 | 08:52:30.274 |
| SR3H1 | 99.98 | 99.98 | VWAP | 6 | 99.975 | 99.98 | 08:52:30.274 |

| | |
|---|---|
| SR1 Ledger : ( Interval 3 ) | Total number of combinations SR1 (78125), Total volume SR1 (0), 5 optimal solutions found (limited to 5): (99.9137, 99.9225, 99.9325, 99.9375, 99.9325, 99.9375, 99.9525) (99.9137, 99.9225, 99.9325, 99.9374, 99.9325, 99.9375, 99.9525) (99.9136, 99.9225, 99.9325, 99.9375, 99.9325, 99.9375, 99.9525) (99.9137, 99.9224, 99.9325, 99.9375, 99.9325, 99.9375, 99.9525) (99.9137, 99.9225, 99.9325, 99.9375, 99.9325, 99.9375, 99.9524), Solution 1's sum of squared difference of absolute value is: 0.0, Solution 2's sum of squared difference of absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement (99.9137, 99.9225, 99.9325, 99.9375, 99.9325, 99.9375, 99.9525) |
| SR3 Ledger : ( Interval 3 ) | Total number of combinations SR3 (625), Total volume SR3 (33), 5 optimal solutions found (limited to 5): (99.9112, 99.9325, 99.9500, 99.9800) (99.9111, 99.9325, 99.9500, 99.9800) (99.9112, 99.9324, 99.9500, 99.9800) (99.9112, 99.9325, 99.9500, 99.9799) (99.9112, 99.9326, 99.9500, 99.9800), Solution 1's sum of squared difference of absolute value is: 0.0, Solution 2's sum of squared difference of absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement (99.9112, 99.9325, 99.9500, 99.9800) |

Interval 3 [ 08:00:00 - 08:29:59 ]

| Contract | Selected Price | Seed Price | Model | Volume | Bid | Ask | Snapshot Time |
|---|---|---|---|---|---|---|---|
| SR1Q0 | 99.9137 | 99.9137 | MID | 0 | 99.9125 | 99.915 | 08:27:28.858 |
| SR1U0 | 99.9225 | 99.9225 | MID | 0 | 99.92 | 99.925 | 08:27:28.858 |

| SR1V0 | 99.9325 | 99.9325 | MID | 0 | 99.93 | 99.935 | 08:27:28.858 |
|---|---|---|---|---|---|---|---|
| SR1X0 | 99.9375 | 99.9375 | MID | 0 | 99.935 | 99.94 | 08:27:28.858 |
| SR1Z0 | 99.9325 | 99.9325 | MID | 0 | 99.93 | 99.935 | 08:27:28.858 |
| SR1F1 | 99.9375 | 99.9375 | MID | 0 | 99.935 | 99.94 | 08:27:28.858 |
| SR1G1 | 99.9525 | 99.9525 | MID | 0 | 99.95 | 99.955 | 08:27:28.858 |
| SR3M0 | 99.9112 | 99.9112 | MID | 0 | 99.91 | 99.9125 | 08:27:28.858 |
| SR3U0 | 99.9325 | 99.9325 | MID | 0 | 99.93 | 99.935 | 08:27:28.858 |
| SR3Z0 | 99.95 | 99.95 | VWAP | 31 | 99.945 | 99.95 | 08:27:28.858 |
| SR3H1 | 99.98 | 99.98 | VWAP | 2 | 99.975 | 99.98 | 08:27:28.858 |

| | |
|---|---|
| SR1 Ledger : ( Interval 2 ) | Total number of combinations SR1 (78125), Total volume SR1 (98), 5 optimal solutions found (limited to 5):<br>(99.9150, 99.9225, 99.9325, 99.9350, 99.9325, 99.9400, 99.9550)<br>(99.9150, 99.9224, 99.9325, 99.9350, 99.9325, 99.9400, 99.9550)<br>(99.9150, 99.9225, 99.9325, 99.9350, 99.9324, 99.9400, 99.9550)<br>(99.9150, 99.9225, 99.9325, 99.9350, 99.9325, 99.9399, 99.9550)<br>(99.9150, 99.9225, 99.9325, 99.9350, 99.9325, 99.9400, 99.9549), Solution 1's sum of squared difference of absolute value is: 0.0, Solution 2's sum of squared difference of absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement<br>(99.9150, 99.9225, 99.9325, 99.9350, 99.9325, 99.9400, 99.9550) |
| SR3 Ledger : ( Interval 2 ) | Total number of combinations SR3 (625), Total volume SR3 (1245), 5 optimal solutions found (limited to 5):<br>(99.9112, 99.9325, 99.9500, 99.9800)<br>(99.9111, 99.9325, 99.9500, 99.9800)<br>(99.9112, 99.9324, 99.9500, 99.9800)<br>(99.9112, 99.9325, 99.9500, 99.9799)<br>(99.9112, 99.9326, 99.9500, 99.9800), Solution 1's sum of squared difference of absolute value is: 0.0, Solution 2's sum of squared difference of absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement<br>(99.9112, 99.9325, 99.9500, 99.9800) |

Interval 2 [ 07:30:00 - 07:59:59 ]

| Contract | Selected Price | Seed Price | Model | Volume | Bid | Ask | Snapshot Time |
|---|---|---|---|---|---|---|---|
| SR1Q0 | 99.915 | 99.915 | VWAP | 2 | 99.9125 | 99.915 | 07:59:34.209 |
| SR1U0 | 99.9225 | 99.9225 | MID | 0 | 99.92 | 99.925 | 07:59:34.209 |
| SR1V0 | 99.9325 | 99.9325 | MID | 0 | 99.93 | 99.935 | 07:59:34.209 |
| SR1X0 | 99.935 | 99.935 | VWAP | 8 | 99.935 | 99.94 | 07:59:34.209 |
| SR1Z0 | 99.9325 | 99.9325 | MID | 0 | 99.93 | 99.935 | 07:59:34.209 |
| SR1F1 | 99.94 | 99.94 | VWAP | 19 | 99.935 | 99.94 | 07:59:34.209 |

| | | | | | | | |
|---|---|---|---|---|---|---|---|
| SR1G1 | 99.955 | 99.955 | VWAP | 69 | 99.95 | 99.955 | 07:59:34.209 |
| SR3M0 | 99.9112 | 99.9112 | MID | 0 | 99.91 | 99.9125 | 07:59:34.209 |
| SR3U0 | 99.9325 | 99.9325 | MID | 0 | 99.93 | 99.935 | 07:59:34.209 |
| SR3Z0 | 99.95 | 99.95 | VWAP | 769 | 99.945 | 99.95 | 07:59:34.209 |
| SR3H1 | 99.98 | 99.98 | VWAP | 476 | 99.975 | 99.98 | 07:59:34.209 |

| | |
|---|---|
| | Total number of combinations SR1 (78125), Total volume SR1 (123), 5 optimal solutions found (limited to 5): |
| | (99.9150, 99.9225, 99.9350, 99.9375, 99.9325, 99.9400, 99.9550) |
| | (99.9150, 99.9225, 99.9350, 99.9374, 99.9325, 99.9400, 99.9550) |
| | (99.9150, 99.9224, 99.9350, 99.9375, 99.9325, 99.9400, 99.9550) |
| | (99.9150, 99.9225, 99.9350, 99.9375, 99.9325, 99.9399, 99.9550) |
| SR1 Ledger : ( Interva l 1 ) | (99.9150, 99.9225, 99.9350, 99.9375, 99.9325, 99.9400, 99.9551), Solution 1's sum of squared difference of absolute value is: 0.0, Solution 2's sum of squared difference of absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 1.0E-8, Selecting solution based on lowest sum of squared difference which is closest to the VWAP and finalizing settlement (99.9150, 99.9225, 99.9350, 99.9375, 99.9325, 99.9400, 99.9550) |
| | Total number of combinations SR3 (625), Total volume SR3 (87), 5 optimal solutions found (limited to 5): |
| | (99.9112, 99.9300, 99.9500, 99.9800) |
| | (99.9111, 99.9300, 99.9500, 99.9800) |
| | (99.9112, 99.9301, 99.9500, 99.9800) |
| | (99.9113, 99.9300, 99.9500, 99.9800) |
| SR3 Ledger : ( Interva l 1 ) | (99.9111, 99.9301, 99.9500, 99.9800), Solution 1's sum of squared difference of absolute value is: 0.0, Solution 2's sum of squared difference of absolute value is: 1.0E-8, Solution 3's sum of squared difference of absolute value is: 1.0E-8, Solution 4's sum of squared difference of absolute value is: 1.0E-8, Solution 5's sum of squared difference of absolute value is: 2.0E-8, Selecting solution based on lowest sum of squared difference which is closest to the VWAP and finalizing settlement (99.9112, 99.9300, 99.9500, 99.9800) |

Interval 1 [ 07:00:00 - 07:29:59 ]

| Contract | Selected Price | Seed Price | Model | Volume | Bid | Ask | Snapshot Time |
|---|---|---|---|---|---|---|---|
| SR1Q0 | 99.915 | 99.915 | VWAP | 46 | 99.9125 | 99.915 | 07:20:18.249 |
| SR1U0 | 99.9225 | 99.9225 | MID | 0 | 99.92 | 99.925 | 07:20:18.249 |
| SR1V0 | 99.935 | 99.935 | VWAP | 50 | 99.935 | 99.94 | 07:20:18.249 |
| SR1X0 | 99.9375 | 99.9375 | MID | 0 | 99.935 | 99.94 | 07:20:18.249 |
| SR1Z0 | 99.9325 | 99.9325 | MID | 0 | 99.93 | 99.935 | 07:20:18.249 |
| SR1F1 | 99.94 | 99.94 | VWAP | 5 | 99.935 | 99.94 | 07:20:18.249 |
| SR1G1 | 99.955 | 99.955 | VWAP | 22 | 99.955 | 99.96 | 07:20:18.249 |
| SR3M0 | 99.9112 | 99.9112 | MID | 0 | 99.91 | 99.9125 | 07:20:18.249 |
| SR3U0 | 99.93 | 99.93 | VWAP | 3 | 99.93 | 99.935 | 07:20:18.249 |
| SR3Z0 | 99.95 | 99.95 | VWAP | 79 | 99.95 | 99.955 | 07:20:18.249 |

SR3H1    99.98          99.98          VWAP    5          99.98    99.985    07:20:18.249

# Example scenarios

1. Output rates calculated and pass first test of reliability - straight to publish.

2. Output rates calculated, fail first test of reliability due to extreme move in market rates, pass second 150% test, then publish.

3. Output rates calculated, 6 month rate fails standard deviation test, all rates move to 150% test, 6 month rate also fails 150% test, all rates move to alternative calculation, average of change on day in input rates applied and rates published

4. Output rates do not calculate proper results, alternative calculation employed

5. Output rates do not calculate proper results, alternative calculation employed, average of change on day not available

Standard Deviation tests
Samples for example tests

|      | Mean    | 1 s.d. | 2 s.d. | 3 s.d. |       |
|------|---------|--------|--------|--------|-------|
| 1m   | -0.002  |        | 0.09   | 0.18   | 0.27  |
| 3m   | -0.003  |        | 0.102  | 0.204  | 0.306 |
| 6m   | -0.0035 |        | 0.115  | 0.23   | 0.345 |

**Scenario 1**          Output rates calculated and pass first test of reliability - straight to publish

Output rates

| Tenor   | Last previous | Top day | Change on day | Pass of Standard Deviation test | Publish |
|---------|---------------|---------|---------------|----------------------------------|---------|
| 1 Month | 0.0922        | 0.0822  | -0.01         | YES                              | YES     |
| 3 Month | 0.0837        | 0.0737  | -0.01         | YES                              | YES     |
| 6 Month | 0.0779        | 0.0679  | -0.01         | YES                              | YES     |

**Scena rio 2**          Output rates calculated, fail first test of reliability due to extreme move in market rates, pass second 150% test, then publish

Output rates

| Tenor | Last previous | Top day | Change on day | Pass of Standard Deviation test | Publish | Pass 150% test | Publish |
|---|---|---|---|---|---|---|---|
| 1 Month | 0.5922 | 0.0822 | -0.51 | NO | 0.65 | YES | YES |
| 3 Month | 0.6337 | 0.0737 | -0.56 | NO | 0.65 | YES | YES |
| 6 Month | 0.6779 | 0.0679 | -0.61 | NO | 0.65 | YES | YES |

**Scenario 3** — Output rates calculated, 6 month rate fails standard deviation test, all rates move to 150% test, 6 month rate also fails 150% test, all rates move to alternative calculation, average of change on day in input rates applied and rates published

Note that for the tests all rates must pass or the next test/alternative is invoked.

Output rates

| Tenor | Last previous | Top day | Change on day | Pass of Standard Deviation test | Largest change on day of inputs | Pass 150% test | Publish | Average of change on day of input prices | Rate adjustment | Prior output rates | Adjusted output rates | Publish |
|---|---|---|---|---|---|---|---|---|---|---|---|---|
| 1 Month 3 | 0.0922 | 0.0822 | -0.01 | YES | 0.01 | YES | NO | 0.01 | -0.01 | 0.0922 | 0.0822 | YES |
| 6 Month | 0.0837 | 0.0737 | -0.01 | YES | 0.01 | YES | NO | 0.01 | -0.01 | 0.0837 | 0.0737 | YES |
| Month | 0.6779 | 0.0679 | -0.61 | NO | 0.01 | NO | NO | 0.01 | -0.01 | 0.0779 | 0.0679 | YES |

**Scenario 4** — Output rates do not calculate proper results, alternative calculation employed

Output rates

| Tenor | Last previous | Top day | Change on day | Average of change on day of input prices | Rate adjustment | Prior output rates | Adjusted output rates | Publish |
|---|---|---|---|---|---|---|---|---|
| 1 Month | 0.0922 | #Err | #VALUE! | 0.01 | -0.01 | 0.092 | 0.0822 | YES |
| 3 Month | 0.0837 | #Err | #VALUE! | 0.01 | -0.01 | 0.0837 | 0.0737 | YES |
| 6 Month | 0.6779 | #Err | #VALUE! | 0.01 | -0.01 | 0.0779 | 0.0679 | YES |

**Scenario 5**  Output rates do not calculate proper results, alternative calculation employed, average of change on day not available

Output rates

| Tenor | Last previous | Top day | Change on day | Average of change on day of input prices | Rate adjustment | Prior output rates | Adjusted output rates | Republish yesterday's rates unchanged | Publish |
|---|---|---|---|---|---|---|---|---|---|
| 1 Month | 0.0922 | #Err | #VALUE! | #Err | #Err | 0.0922 | #Err | 0.0922 | YES |

| | | | #V | | #E | | | #E | | YE |
|---|---|---|---|---|---|---|---|---|---|---|
| 3 Mo nth | 0.0 83 7 | #Err | AL UE ! | | rr | #Err | 0. 08 37 | rr | 0.0 837 | S |
| 6 Mo nth | 0.6 77 9 | #Err | #V AL UE ! | | rr | #Err | 0. 07 79 | rr | 0.0 779 | S |

**Claims**

1. A computer implemented method for automatically determining, by a data transaction processing system, an interest rate associated with a future time period, the data transaction processing system being operative to transact one or more data items using a hardware matching processor that matches groups of electronic data transaction request messages to buy or sell the data items, each of the data items specifying term and an expiration time period of a set of future expiration time periods, including an incoming electronic data transaction request message and one or more previously received but unmatched electronic data transaction request messages represented in a data structure stored in a memory coupled with the hardware matching processor, for the same one of the data items based on multiple transaction parameters of the electronic data transaction request message, received from different client computers over a data communications network, the transaction parameters of each of the electronic data transaction request messages specifying the data item, order to buy or sell, and a proposed transaction price indicative of an interest rate value to be determined at the end of the specified expiration time period of the data item based on a set of daily interest rates set prior thereto over the term by a governing authority, each matched group of electronic data transaction request messages being associated with a prevailing transaction price indicative of an expected interest rate value to be determined at the end of the specified expiration time period based on the set of daily interest rates set prior thereto by the governing authority, the method comprising:

   determining, by a processor, a set of data items to be sampled, each data item in the set having a different term and specified expiration time period consecutive with at least one other of the data items in the set;
   generating, by a sampling processor, objective input data for a rate generator, for each of a set of sampling periods, by:

      obtaining, by the sampling processor from the hardware matching processor, the prevailing transaction price of each of the groups of electronic data transaction request messages which are matched by the hardware matching processor during the sampling period for each of the set of data items, and at a random time within the sampling period, further obtaining, by the sampling processor from the hardware matching processor for each data item of the set of data items, a first best proposed transaction price of the one or more previously received but unmatched electronic data transaction request messages represented in the data structure comprising an order to buy and a second best proposed transaction price of the one or more previously received but unmatched electronic data transaction request messages represented in the data structure comprising an order to sell;
      upon conclusion of the sampling period, repeatedly generating, by the sampling processor, one or more sets of values, each comprising a value for each data item of the set of data items, based on the obtained prevailing transaction prices and the first and second best proposed transaction prices, and for each generated set of values and validating the generated set of values to determine whether each value of the set of values is consistent with the other values of the set of values as a function of expected interest rate over the consecutive specified expiration time periods as a function of a yield curve, until a validated set of values is generated; and
      storing, by the sampling processor, the validated set of values for the sampling period is a memory coupled with the sampling processor; and

   upon conclusion of all of the sampling periods, aggregating, by the sampling processor, each of the stored validated sets of values of each sampling period, wherein the aggregate stored validated sets of values comprises objective input data; and
   submitting, by the sampling processor, the objective input data to a rate generator coupled with the sampling processor and operative to generate the forward rate.

**2.** The computer implemented method of claim 1, wherein the data items comprise financial instruments and the transactions transacted by the hardware matching processor comprise orders received from the different client computers, via a network coupled between the client computers and the data transaction processing system, to buy or sell the financial instruments.

**3.** The computer implemented method of claim 2, wherein the financial instruments comprise Secure Overnight Funding Rate futures contracts having a term of 1 month and specified expiration time periods of the next seven months, or a term of 3 months and specified expiration time periods of at least the next three months.

**4.** The computer implemented method of any one of claims 1 to 3, wherein the future time period of the determined interest rate comprises one, two, three, six or twelve months, or combinations thereof.

**5.** The computer implemented method of any one of claims 1 to 4, wherein the sampling processor is operative to compute the aggregate prevailing transaction price using volume weighed average prices, time weighted average prices or a combination thereof.

**6.** The computer implemented method of any one of claims 1 to 5, further comprising repeating, by the sampling processor, the method on each day.

**7.** The computer implemented method of any one of claims 1 to 6, wherein the set of sampling periods comprises 14 sampling periods, each having a duration of 30 minutes.

**8.** The computer implemented method of any one of claims 1 to 7, wherein the generating of the one or more sets of values comprises generating a first set of the one or more sets of values by, for each data item of data items, determining one of the volume weighted average (VWAP) of the prevailing transaction prices for the data item or determining a mid-point value of the first and second best proposed transaction prices for the data item, wherein subsequent sets of values are generated as a function of the first set of values.

**9.** The computer implemented method of any one of claims 1 to 8, wherein the aggregating of each of the stored validated sets of values further comprises generating an average value for each data item of the set of data items based on the values for the data item in each of the stored validated sets of values.

**10.** The computer implemented method of any one of claims 1 to 9, further comprising:

receiving, by the sampling processor, from the rate generator, the generated forward rate; and
validating, by the sampling processor, the generated forward rate by comparing the generated forward rate to one or more previously generated forward rates to determine if the generated forward rate is within a first threshold tolerance of the one or more previously generated forward rates; and
wherein, when the generated forward rate is within the first threshold tolerance of the one or more previously generated forward rates, transmitting the generated forward rate to a rate publishing processor; and
wherein, when the generated forward rate is not within the first threshold tolerance of the one or more previously generated forward rates, generating an alternative forward rate, reusing a prior forward rate or not producing a forward rate.

**11.** A system arranged to perform the method of any one of claims 1 to 10, the system comprising:

an instrument identifier operative to determine a set of data items to be sampled, each data item in the set having a different term and specified expiration time period consecutive with at least one other of the data items in the set;
a sampling processor coupled with the instrument identifier and operative to generate objective input data for a rate generator, for each of a set of sampling periods, the sampling processor being operative to:

obtain, from the hardware matching processor, the prevailing transaction price of each of the groups of electronic data transaction request messages which are matched by the hardware matching processor during the sampling period for each of the set of data items, and at a random time within the sampling period, further obtain, from the hardware matching processor for each data item of the set of data items, a first best proposed transaction price of the one or more previously received but unmatched electronic data transaction request messages represented in the data structure comprising an order to buy and a second best proposed transaction price of the one or more previously received but unmatched electronic data transaction request messages represented in the data structure comprising an order to sell;

upon conclusion of the sampling period, repeatedly generate one or more sets of values, each comprising a value for each data item of the set of data items, based on the obtained prevailing transaction prices and the first and second best proposed transaction prices, and for each generated set of values and validate the generated set of values to determine whether each value of the set of values is consistent with the other values of the set of values as a function of expected interest rate over the consecutive specified expiration time periods as a function of a yield curve, until a validated set of values is generated; and

store the validated set of values for the sampling period is a memory coupled with the sampling processor; and

upon conclusion of all of the sampling periods, aggregate each of the stored validated sets of values of each sampling period, wherein the aggregate stored validated sets of values comprises objective input data; and submit the objective input data to a rate generator operative to generate the forward rate.

12. A system arranged to perform the method of any one of claims 1 to 10, the system comprising:

means for determining a set of data items to be sampled, each data item in the set having a different term and specified expiration time period consecutive with at least one other of the data items in the set;

means for generating objective input data for a rate generator, for each of a set of sampling periods, the means for generating comprising:

means for obtaining, from the hardware matching processor, the prevailing transaction price of each of the groups of electronic data transaction request messages which are matched by the hardware matching processor during the sampling period for each of the set of data items, and at a random time within the sampling period, further obtaining, from the hardware matching processor for each data item of the set of data items, a first best proposed transaction price of the one or more previously received but unmatched electronic data transaction request messages represented in the data structure comprising an order to buy and a second best proposed transaction price of the one or more previously received but unmatched electronic data transaction request messages represented in the data structure comprising an order to sell;

means for, upon conclusion of the sampling period, repeatedly generating one or more sets of values, each comprising a value for each data item of the set of data items, based on the obtained prevailing transaction prices and the first and second best proposed transaction prices, and for each generated set of values and validating the generated set of values to determine whether each value of the set of values is consistent with the other values of the set of values as a function of expected interest rate over the consecutive specified expiration time periods as a function of a yield curve, until a validated set of values is generated; and

means for storing the validated set of values for the sampling period is a memory; and

means for, upon conclusion of all of the sampling periods, aggregating each of the stored validated sets of values of each sampling period, wherein the aggregate stored validated sets of values comprises objective input data; and

means for submitting the objective input data to a rate generator coupled with the sampling processor and operative to generate the forward rate.

EXCHANGE COMPUTER SYSTEM 100

| | | |
|---|---|---|
| USER DATABASE 102 | ACCOUNT DATA MODULE 104 | MATCH ENGINE MODULE 106 |
| TRADE DATABASE 108 | ORDER BOOK MODULE 110 | MARKET DATA MODULE 112 |
| RISK MANAGEMENT MODULE 114 | MESSAGE MANAGEMENT MODULE 116 | ORDER PROCESSING MODULE 118 |
| SETTLEMENT MODULE 120 | FORWARD RATE MODULE 122 | |

OTHER TRADE ENGINE 170

WIRELESS HUB 164

RADIO 168

150

158

152

154

156

LAN 160

WAN 162

MARKET MAKER 166

Fig. 1

200

Bus 208

Processor
202

Instructions
212

Memory
204

Instructions
212

Drive Unit
206

Computer
Readable
Medium
210

Instructions
212

Display
214

User Input Device
216

Communication
Interface
218

Internet and/or other
network(s)
220

Fig. 2

300

Top of book value, or lead value, for this Action →

| Queue |
|---|
| Action |
| Value 1 |
| Value 2 |
| Value 3 |

| Queue | | | |
|---|---|---|---|
| M1 | M2 | M3 | M4 |

| Queue | | | |
|---|---|---|---|
| M5 | M6 | M7 | M8 |

| Queue | | | |
|---|---|---|---|
| M9 | M10 | M11 | M12 |

Fig. 3

Fig. 4A

Fig. 4B

**FIG. 5**

500

UI

506

Processor

502

Rate Publication
(GCC)

520

504

Instrument
Identifier/Identification
Processor/Module
(First Logic)
508

Sampling
Processoe/Module
(Second Logic)
510

Validation
Processor/Module

516

Match Processor
(Match Engine
Module)
514 (106)

Term/Fwd Rate
Generator (Third
Logic)
512

Order Book
Module/Data
base

518 (110)

EP 3 783 560 A1

# FIG. 6

```
Obtaining                        Repeat Daily 636
Identification of Data    ◄────────
Items
602
   │
   ▼
Generating Objective
Input Data
604
   │
   ▼
Obtaining Executed        No
Prices            ◄──────────────┐
606                              │
   │                    Current Sample   Yes
   ▼                    Period Over?  ──────────►   Generate Value
Obtaining (Randomly)     610                        (Candidate Solution)
Executable Prices   ─────►│           No               Sets
608                       │      Valid Set?  ────►       614
                          │        612                    │
                          │         │                     ▼
All Sampling Periods      │         │ Yes          Validate Value
Complete?   ◄─────────────┘         ▼       ◄────── (Solution) Set
620                              Store                   616
   │                                                      
   │  No                          618
   │
   ▼ Yes
Aggregate              Validate Forward Rate      Publish
622                         628                     630
   │                         ▲                       ▲
   ▼                         │                        
Submit to Forward      Obtain Generated         Generate Alternative
Rate Generator    ----► Forward Rate(s) from  ──►    Rate
(Model)                 Rate Generator               632
624                         626
                                              ──►   Suspend
                                                     634
```

Fig. 7

700

**1** Futures prices generated By EPS — 702

Parse input prices through Analytic Library — 704

**2**

716

EPS adjusts output rates by average change on day of input prices (converted to rates)

**7**

706

Retry Loop **4**

NO

Analytic Library produces set of output rates

**3** YES

**5** Test of Standard Deviation of Change on day

708

NO

YES

718

Output rate produced

NO

NO

714

Test change on day in output rate vs 150% of largest change of inputs prices.

**6**

YES

YES

3 days or less? YES

NO

720

722

Republish yesterday's rate unchanged

**8**

710

GCC Interaction

GCC Interaction — 724

726

Temporary suspension of publication

PUBLISH — 712

Dark Grey line denotes the line of best fit for projected SOFR overnight rates. Rates are determined by use of the Industry Standard model developed by FRB economists Heitfield & Young "Inferring Term Rates from SOFR Futures prices. Input prices are derived from CME SOFR futures prices where the rate is 100 − futures price, dark blue represents One-Month SOFR prices (SR1), light blue represents Three-Month SOFR prices (SR3).

Fig. 8

Europäisches
Patentamt

European
Patent Office

Office européen
des brevets

# EUROPEAN SEARCH REPORT

Application Number

EP 20 19 1812

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 2014/006243 A1 (BOUDREAULT JAMES [US] ET AL) 2 January 2014 (2014-01-02) * the whole document * | 1-12 | INV. G06Q40/04 |
| X,D | US 2017/331774 A1 (PECK-WALDEN PEARCE [US] ET AL) 16 November 2017 (2017-11-16) * the whole document * | 1-12 | |
| X,D | US 2017/206600 A1 (BIXBY DAVID [US] ET AL) 20 July 2017 (2017-07-20) * the whole document * | 1-12 | |
| X,D | US 2008/243576 A1 (CZUPEK ANDREW [US] ET AL) 2 October 2008 (2008-10-02) * the whole document * | 1-12 | |

TECHNICAL FIELDS
SEARCHED    (IPC)

G06Q

The present search report has been drawn up for all claims

| Place of search | Date of completion of the search | Examiner |
|---|---|---|
| The Hague | 28 September 2020 | Cîrstet, Andrei |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

                                           

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 20 19 1812

This annex lists the patent family members relating to the patent documents cited in the above-mentioned European search report.
The members are as contained in the European Patent Office EDP file on
The European Patent Office is in no way liable for these particulars which are merely given for the purpose of information.

28-09-2020

| Patent document cited in search report | | Publication date | Patent family member(s) | | Publication date |
|---|---|---|---|---|---|
| US 2014006243 | A1 | 02-01-2014 | AU<br>CA<br>US | 2013206355 A1<br>2818265 A1<br>2014006243 A1 | 16-01-2014<br>27-12-2013<br>02-01-2014 |
| US 2017331774 | A1 | 16-11-2017 | NONE | | |
| US 2017206600 | A1 | 20-07-2017 | US<br>US | 2017206600 A1<br>2019362425 A1 | 20-07-2017<br>28-11-2019 |
| US 2008243576 | A1 | 02-10-2008 | AU<br>CA<br>US<br>US<br>WO | 2008233287 A1<br>2678410 A1<br>2008243576 A1<br>2011047104 A1<br>2008121230 A1 | 09-10-2008<br>09-10-2008<br>02-10-2008<br>24-02-2011<br>09-10-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 62888713
- US 62935914
- US 954175
- US 10430881 B
- US 20170331774 A1
- US 7831491 B
- US 20050096999 A1
- US 7853499 B
- US 53449912
- US 20140006243 A1

### Non-patent literature cited in the description

- **HEITFIELD, ERIK ; YANG-HO PARK.** Inferring Term Rates from SOFR Futures Prices. *Finance and Economics Discussion Series 2019-014, Washington: Board of Governors of the Federal Reserve System,* 2019, https://doi.org/10.17016/FEDS.2019.014
- *CME Group Holiday Calendar,* 20 August 2020, https://www.cmegroup.com/tools-information/holiday-calendar.html
- *One-Month SOFR Futures Contract Specs,* 15 August 2020, https://www.cmegroup.com/trading/interest-rates/stir/one-month-sofr_contract_specifications.html
- *Three-Month SOFR Futures Contract Specs,* 15 August 2020, https://www.cmegroup.com/trading/interest-rates/stir/three-month-sofr_contract_specifications.html